(19) Europäisches Patentamt
European Patent Office
Office européen des brevets

(11) EP 2 412 766 B1

(12) **EUROPEAN PATENT SPECIFICATION**

(45) Date of publication and mention of the grant of the patent:
**25.01.2017 Bulletin 2017/04**

(21) Application number: **11175934.6**

(22) Date of filing: **29.07.2011**

(51) Int Cl.:
***C09D 11/00*** *(2014.01)*
***C09B 67/00*** *(2006.01)*
***C09D 11/322*** *(2014.01)*
***C09D 11/324*** *(2014.01)*
***C09D 11/40*** *(2014.01)*
***C09D 11/54*** *(2014.01)*

# (54) Ink composition, ink set, and image forming method

Tintenzusammensetzung, Tintensatz und Bilderzeugungsverfahren

Composition d'encre, jeu d'encre et procédé de formation d'images

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2010 JP 2010173104**

(43) Date of publication of application:
**01.02.2012 Bulletin 2012/05**

(73) Proprietor: **Fujifilm Corporation**
**Minato-ku**
**Tokyo (JP)**

(72) Inventor: **Saito, Ryo**
**Kanagawa (JP)**

(74) Representative: **Hoffmann Eitle**
**Patent- und Rechtsanwälte PartmbB**
**Arabellastraße 30**
**81925 München (DE)**

(56) References cited:
**US-A- 6 030 440**
**US-A1- 2006 162 614**
**US-A1- 2008 017 066**
**US-A1- 2009 170 986**
**US-A1- 2009 322 842**
**US-A1- 2010 053 288**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

Technical Field

The present invention relates to an ink composition containing carbon black, and an ink set and an image forming method, each of which uses the ink composition.

Description of the Related Art

Inkjet recording methods allow recording of high-quality images on various recording media by ejecting droplets of inks from a number of nozzles provided at an inkjet head. Therefore, inkjet recording methods are widely used.

Pigments are widely used as a coloring agent, which is a component of an ink. In inks, pigments are used in a state of being dispersed in a medium such as water. When pigments are used in the dispersed state, important factors include the diameter of the dispersed particles, stability after dispersing, size uniformity, ejectability from ejection nozzles, and image density. Various studies are carried out on techniques for improving such factors.

Further, in some cases, recording on plain sheet provides only insufficient quality in terms of rubbing resistance of the formed image (fixability), resolution, and the like, as well as image density. There is a tendency for the insufficiency in quality to become more conspicuous when the inkjet recording speed is increased. Specifically, compatibility with high-speed recording in a single-pass manner rather than a shuttle-scan manner is requested in terms of the rubbing resistance and resolution of the formed image. In the single-pass recording, recording can be carried out by a single head operation.

Among pigments used in inks for inkjet recording, carbon black is widely used as a black pigment. A technique in which a pigment other than carbon black, such as a cyan pigment, is used together with carbon black (hereinafter abbreviated to CB) is also known.

Specifically, a pigment dispersion aqueous recording liquid is disclosed in, for example, Japanese Patent Application Laid-Open (JP-A) No. 2004-285344. This pigment dispersion aqueous recording liquid contains carbon black (CB) and a pigment other than CB, such as a cyan pigment, together with a urethane resin. Further, an aqueous ink for inkjet recording that contains polymer particles containing carbon black is disclosed in, for example, JP-A No. 2009-144007.

SUMMARY OF THE INVENTION

Images formed using carbon black tend to have low resistance against rubbing, compared to images formed using other pigments. The rubbing resistance can be improved by lowering the content ratio of carbon black. However, when the content ratio of carbon black is simply lowered, a desired black density cannot be achieved, and the color of the image also changes such that the color that can be obtained would be a yellowish black hue.

Further, an increase in the amount of ink components other than pigments, such as polymer particles, decreases the relative content of carbon black in the resultant image. As a result, the light-shielding ratio is decreased, and a change in the hue of the image, such as yellowing, tends to occur. Therefore, it has not been possible to achieve a less-yellowish black hue, which is desired, while heightening the rubbing resistance.

In the case of high-speed recording in a single-pass manner, sheets of a recording medium after image formation are collected by being stacked in a stack-collection section. However, when the number of stacked sheets is large, image transfer (color transfer) may occur between adjacent sheets of the recording medium due to the weight of the sequentially-stacked sheets of the recording medium and rubbing between the sheets of the recording medium.

The present invention has been made in view of the above circumstances, and an object of the invention is provision of an ink composition with which a less-yellowish black image that has high black density, excellent resistance against rubbing, and suppressed occurrence of image transfer (color transfer) can be obtained, and an ink set in which the ink composition is used. Another object of the invention is provision of an image forming method by which a less-yellowish black image that has high black density, excellent resistance against rubbing, and suppressed occurrence of image transfer (color transfer) can be obtained.

Aspects of the invention include the following.

<1> An ink composition including:

first pigment particles selected from self-dispersing carbon black and a carbon black of which at least a part is covered with a water-insoluble resin, in an amount of from 1% by mass to 5% by mass relative to the entire

mass of the ink composition;
second pigment particles formed by a cyan pigment of which at least a part is covered with a water-insoluble resin, in an amount of from 1% by mass to 50% by mass relative to the first pigment particles;
water-insoluble resin particles A; and
water.

<2> The ink composition according to <1>, further including third pigment particles formed by a magenta pigment of which at least a part is covered with a water-insoluble resin, in an amount of from 1% by mass to 70% by mass relative to the first pigment particles.
<3> The ink composition according to <1> or <2>, further including a wax.
<4> The ink composition according to any one of <1> to <3>, wherein the cyan pigment is a phthalocyanine pigment.
<5> The ink composition according to any one of <1> to <4>, wherein the water-insoluble resin particles A are particles of a resin selected from the group consisting of a styrene-acrylic resin, a urethane resin, and a mixture thereof.
<6> The ink composition according to any one of <1> to <5>, wherein the water-insoluble resin particles A are self-dispersing resin particles.
<7> The ink composition according to any one of <1> to <6>, wherein the water-insoluble resin particles A has been prepared as a dispersion of which the continuous phase is water, by synthesis in an organic solvent and neutralization of some or all of anionic groups.
<8> The ink composition according to any one of <1> to <7>, wherein a content of the water-insoluble resin particles A is from 0.5% by mass to 10% by mass relative to the entire amount of the ink composition.
<9> The ink composition according to any one of <1> to <8>, further including third pigment particles formed by a magenta pigment of which at least a part is covered with a water-insoluble resin, wherein the carbon black, the cyan pigment, and the magenta pigment have been covered with water-insoluble resins by a phase-inversion emulsification method.
<10> The ink composition according to any one of <3> to <9>, wherein the wax is at least one selected from the group consisting of a paraffin wax and derivatives thereof, carnauba wax, and mixtures thereof.
<11> An ink set including the ink composition of any one of <1> to <10> and a treatment liquid that contains an aggregation component capable of causing formation of an aggregate when contacting the ink composition.
<12> The ink set according to <11>, wherein the aggregation component includes an acid.
<13> The ink set according to <11> or <12>, wherein the aggregation component includes orthophosphoric acid.
<14> An image forming method including:

an ink application process of applying the ink composition of any one of <1> to <10> onto a recording medium by an inkjet method; and
a treatment liquid application process of applying, onto the recording medium, a treatment liquid capable of causing formation of an aggregate when contacting the ink composition.

<15> The image forming method according to <14>, wherein, in the ink application process, the ink composition is applied by a piezo inkjet method.
<16> The image forming method according to <14> or <15>, further including a heating and fixing process of fixing, by heating, the image formed through the ink application process and the treatment liquid application process onto the recording medium.
<17> The image forming method according to any one of <14> to <16>, wherein the ink application process is carried out after the treatment liquid application process.

According to the invention, an ink composition with which a less-yellowish black image that has high black density, excellent resistance against rubbing, and suppressed occurrence of image transfer (color transfer) between sheets of the recording medium can be obtained, and an ink set in which the ink composition is used, can be provided.
Further, according to the invention, an image forming method by which a less-yellowish black image that has high black density, excellent resistance against rubbing, and suppressed occurrence of image transfer (color transfer) between sheets of the recording medium can be obtained, can be provided.

DETAILED DESCRIPTION OF THE INVENTION

The ink composition according to the invention, and an ink set and an image forming method, each of which uses the ink composition, are described in detail below.

<*Ink Composition*>

The ink composition according to the invention is an aqueous ink composition including:

first pigment particles selected from self-dispersing carbon black and a carbon black of which at least a part is covered with a water-insoluble resin;
second pigment particles formed by a cyan pigment of which at least a part is covered with a water-insoluble resin;
water-insoluble resin particles A; and
water.

The content ratio of the first pigment particles is from 1% by mass to 5% by mass relative to the entire mass of the ink composition, and the content ratio of the second pigment particles is from 1% by mass to 50% by mass relative to the first pigment particles.

The ink composition according to the invention includes water, and may further include other components such as an organic solvent or a surfactant, as necessary. The water-insoluble resin used for covering at least a part of the surface of the carbon black may be the same resin or as or different resin from the water-insoluble resin used for covering at least a part of the surface of the cyan pigment. The water-insoluble resin particles A are particles of a water-insoluble resin, which may be the same resin as or different resin from the water-insoluble resin used for covering at least a part of the surface of the carbon black, and may be the same resin as or different resin from the water-insoluble resin used for covering at least a part of the surface of the cyan pigment.

In the ink composition according to the invention, the first pigment particles, which are selected from at least one selected from a self-dispersing CB and a CB of which at least a part of the surface thereof is covered with a water-insoluble resin, are contained at a predetermined content ratio, and second pigment particles formed by a cyan pigment of which a part or all of the surface thereof is covered with a water-insoluble resin are contained at a predetermined ratio relative to the first pigment particles, and water-insoluble resin particles are further contained. This configuration is devised in order to obtain an image having high black density by suppressing a change in the hue of a black image, and to suppress a reduction in rubbing resistance of the image caused by CB, in a case in which carbon black (CB) is contained as a black coloring agent for black inks.

A change in black hue to yellowish color (yellowing) caused by a reduction in the CB amount can be suppressed by decreasing the carbon black (CB) content so as to suppress the reduction in rubbing resistance but ensuring that the CB content is within a range in which a sufficient black density can be maintained, and, further, incorporating a cyan pigment within a predetermined content ratio range relative to the CB in the above-described manner. Further, as a result of covering the CB and the cyan pigment with water-insoluble resins and incorporating water-insoluble resin particles in addition to decreasing the CB amount, the rubbing resistance of the image obtained can be dramatically improved. As a result, according to the present invention, a black image having high black density, less yellowishness, and improved resistance against rubbing can be obtained, and occurrence of image transfer (color transfer) is prevented, compared to the case of using a conventional black ink. Therefore, image transfer (color transfer) caused by the weight of the sequentially-stacked sheets of the recording medium or rubbing between sheets of the recording medium can be prevented, and an image having improved image quality and excellent hue can be obtained, even when plural sheets of the recording medium are stacked at a stack-collection section in the case of printing large number of sheets at high speed.

In a preferable embodiment of the invention, the ink composition according to the invention includes:

first pigment particles selected from self-dispersing carbon black and a carbon black of which at least a part is covered with a water-insoluble resin;
second pigment particles formed by a cyan pigment of which at least a part is covered with a water-insoluble resin;
water-insoluble resin particles A;
third pigment particles formed by a magenta pigment of which at least a part is covered with a water-insoluble resin; and
water.

wherein the content ratio of the first pigment particles is from 1% by mass to 5% by mass relative to the entire mass of the ink composition, the content ratio of the second pigment particles is from 1% by mass to 50% by mass relative to the first pigment particles, and the content ratio of the third pigment particles is from 1% by mass to 70% by mass relative to the first pigment particles. In this embodiment, the third pigment particles are formed by a magenta pigment of which at least a part of the surface thereof is covered with a water-insoluble resin (fourth water-insoluble resin). This water-insoluble resin may be the same resin as or different resin from the water-insoluble resin used for covering at least a part of the surface of the carbon black (first water-insoluble resin), may be the same resin as or different resin from the

water-insoluble resin used for covering at least a part of the surface of the cyan pigment (second water-insoluble resin), and may be the same resin or different resin from the water-insoluble resin of the particles A (third water-insoluble resin).

The incorporation of the magenta pigment makes it more difficult to observe the color transfer due to stacking of recorded sheets in the case of high-speed large-volume image recording.

(First Pigment Particles)

The ink composition according to the invention includes at least one type of first pigment particle.

The first pigment particle is a self-dispersing carbon black particle and/or a particle composed of carbon black (CB) particle and a water-insoluble resin that covers a part or all of the surface of the carbon black particle. The first pigment particles are contained, in the dispersed state, in the ink composition.

-Carbon Black-

Examples of carbon blacks include a carbon black produced by a known method such as a contact method, a furnace method, or a thermal method. Specific examples thereof include furnace black, thermal lamp black, acetylene black, and channel black.

Specific examples of carbon blacks include, but are not limited to: RAVEN7000, RAVEN5750, RAVEN5250, RAVEN5000 ULTRAII, RAVEN 3500, RAVEN2000, RAVEN1500, RAVEN1250, RAVEN1200, RAVEN1190, ULTRAII, RAVEN1170, RAVEN1255, RAVEN1080, RAVEN1060, and RAVEN700 (tradenames, manufactured by Columbian Carbon Japan Ltd.); REGAL400R, REGAL330R, REGAL660R, MOGUL L, BLACK PEARLS L, MONARCH 700, MONARCH 800, MONARCH 880, MONARCH 900, MONARCH 1000, MONARCH 1100, MONARCH 1300, and MONARCH 1400 (tradenames, manufactured by Cabot Corporation); COLOR BLACK FW1, COLOR BLACK FW2, COLOR BLACK FW2V, COLOR BLACK 18, COLOR BLACK FW200, COLOR BLACK S150, COLOR BLACK S160, COLOR BLACK S170, PRINTEX35, PRINTEX U, PRINTEX V, PRINTEX140U, PRINTEX140V, SPECIAL BLACK 6, SPECIAL BLACK 5, SPECIAL BLACK 4A, and SPECIAL BLACK4 (tradenames, manufactured by Evonik Degussa Japan Co., Ltd.); and No.25, No.33, No.40, No.45, No.47, No.52, No.900, No.2200B, No.2300, MCF-88, MA600, MA7, MA8, and MA100(tradenames, manufactured by Mitsubishi Chemical Corporation).

-Self-dispersing Carbon Black-

The term "self-dispersing carbon black" refers to a pigment which is obtained by treatment that provides the surface of carbon black (as a pigment) with one type of, or two or more types of, functional group (dispersibility-imparting group) selected from the group consisting of -COOH, -CHO, -OH, -$SO_3$H, and salts thereof, and which can be uniformly dispersed in an aqueous ink composition even in the absence of a separate dispersant. Here, "dispersed" means a state in which a self-dispersing carbon black is stably contained in water in the absence of a dispersant, and the scope thereof includes a state in which the self-dispersing carbon black is dissolved, as well as a state in which the self-dispersing carbon black is dispersed.

The ink composition that contains a self-dispersing carbon black has high dispersion stability and an appropriate viscosity. Therefore, the content of carbon black in the ink composition can be increased, as a result of which an image having excellent color density can be formed on, particularly, plain paper.

The self-dispersing carbon black can be prepared by chemically bonding the functional group or a molecule containing the functional group onto the surface of the pigment, employing physical treatment such as vacuum plasma and/or chemical treatment. The chemical bonding may be, for example, coordination or grafting. The self-dispersing carbon black can be obtained by, for example, the method described in JP-A No. 8-3498.

Commercially available products may be used as the self-dispersing carbon black. Preferable examples of such commercially available products include MICROJET series products (tradename, manufactured by Orient Chemical Industries Co., Ltd.) and CAB-O-JET series products (tradename, manufactured by Cabot Corporation).

The self-dispersing carbon black is preferably a self-dispersing carbon black that has a carboxyl group (-COOH) on the surface thereof, from the viewpoint of improving ink aggregation properties and rubbing resistance by a reaction with an aggregation component in the case of using the treatment liquid described below.

The average particle diameter of the self-dispersing carbon black is preferably from 10 nm to 300 nm, and more preferably from 40 nm to 150 nm, from the viewpoints of improvement in storage stability of the ink and prevention of nozzle clogging.

The content of the self-dispersingself-dispersing carbon black in the ink composition is preferably from 1% by mass to 15% by mass relative to the entire amount of the ink composition, from the viewpoint of obtaining a high OD value and from the viewpoint of liquid stability of the ink composition. The content of the self-dispersing carbon black in the ink composition is more preferably from 2% by mass to 10% by mass relative to the entire amount of the ink

composition, from the viewpoint of enhancing ejection stability.

In the present invention, as the self-dispersingself-dispersing carbon black, a carbon black to which an anionic polymer is covalently bonded is preferably used, and when such a carbon black is used, the continuous ejection property of the ink may further be improved. The carbon black to which an anionic polymer is covalently bonded has at least one anionic polymer and a carbon black, in which the anionic polymer is covalently bonded to the carbon black. The carbon black to which an anionic polymer is covalently bonded (hereinafter also referred to as the "anionic-polymer-attached CB" or "polymer-modified CB") is a pigment that can be dispersed in an aqueous medium included in the ink without using an additional dispersant.

The carbon black may be, for example, a pigment of a carbon product that has been oxidized by using an oxidant in order to allow introduction of an ionic group and/or an ionizable group onto the surface thereof. An oxidized pigment prepared in such a manner has oxygen-containing groups at a higher degree on the surface thereof.

Examples of oxidants include, but are not limited to, an oxygen gas, ozone, peroxides such as hydrogen peroxide, peroxosulfates such as sodium peroxosulfate and potassium peroxosulfate, hypohalogenites such as sodium hypochlorite, oxidizing acids such as nitric acid, sodium perchlorate, nitrogen oxides such as $NO_2$, oxidants containing a transition metal such as permanganate, osmium tetraoxide, or chromium oxide, and eerie ammonium nitrate. Examples of oxidants that can be used further include mixtures of oxidants. In particular, mixtures of gaseous oxidants, such as a mixture of oxygen and ozone, may be used. Examples of oxidants that can be used further include modified pigments, which have been treated using a surface modifying method such as sulfonylation in order to introduce an ionic group or an ionizable group.

The carbon black may be a multi-phase aggregate including a carbon phase and a silicon-containing species phase, or a multi-phase aggregate including a carbon phase and a metal-containing species phase. The multi-phase aggregate including a carbon phase and a silicon-containing species phase can also be considered as a silicon-treated carbon black aggregate. Any way, as long as the silicon-containing species and/or the metal-containing species are regarded as a phase of an aggregate as in the case of the carbon phase, the multi-phase aggregate including the carbon phase and the metal-containing species phase can also be considered to be a metal-treated carbon black aggregate. The multi-phase aggregate does not represent a mixture of a carbon black aggregate and a silica or metal aggregate which are separated from each other. Rather, the multi-phase aggregate that can be used as carbon black include at least one silicon-containing or metal-containing region concentrated on the surface of the aggregate, adjacent to (but placed on) the surface of the aggregate, and/or inside the aggregate. Accordingly, the aggregate includes at least two phases, including a phase that is carbon and another phase that is silicon-containing species, a metal-containing species, or both. The silicon-containing species that can be a part of the aggregate is not bonded to a carbon black aggregate in the same manner as the bonding of a silane coupling agent to a carbon black aggregate, but is actually a part of the same aggregate as the carbon phase.

The metal-treated carbon black is an aggregate including at least a carbon phase and a metal-containing species phase. The metal-containing species include a compound that contains aluminum, zinc, magnesium, calcium, titanium, vanadium, cobalt, nickel, zirconium, tin, antimony, chromium, neodymium, lead, tellurium, barium, cesium, iron or molybdenum. The metal-containing species phase can be dispersed in at least a part of the aggregate, and is a portion intrinsic to the aggregate. The metal-treated carbon black may include more than one different metal-containing species phases, or the metal-treated carbon black may include a silicon-containing species phase and/or a boron-containing species phase.

Details on the production of these multi-phase aggregates are described in U.S. Patent Application Publication Nos. 08/446141, 08/446142, 08/528895, and 08/750017, WO96/37547, WO08/828785, WO08/837493, and WO09/061871.

A silica-coated carbon product can be used as the pigment, which is described in WO96/37547. Any pigment coated with silica may be used. In such a coated pigment, a coupling agent having a functional group capable of reacting with the coated film, silica, or the metal phase may be used in order to impart a necessary or desired functionality to the pigment, similarly to the case in which functionality is imparted for formation of the above metal-treated carbon black or the multi-phase aggregate.

According to the desired characteristics of the pigment, the pigment may have a wide range of BET surface area as measured by nitrogen absorption. For example, the pigment surface area may be from about 10 $m^2/g$ to about 2,000 $m^2/g$, for example from about 10 $m^2/g$ to about 1,000 $m^2/g$, more specifically from about 50 $m^2/g$ to about 500 $m^2/g$. It is known to those skilled in the art that a larger surface area corresponds to a smaller particle size if the particle structure is the same. A larger surface area is preferred. Therefore, in a case in which the pigment cannot be directly used for a desired application, the pigment may be subjected to a conventional size reducing or pulverizing technique such as by using milling medium, jet milling, micro-fluidization, or ultrasonic treatment, as necessary, in order to reduce the particle size of the pigment to a smaller particle size. Furthermore, in a case in which the pigment is a fine particle material including an aggregate of primary particles of carbon black or the like, the pigment may have a structure with a surface area of from about 10 mL/100 g to about 1,000 mL/100 g, more specifically from about 40 mL/100 g to about

200mL/100g.

In the anionic-polymer-attached CB, at least one type of anionic group or anionizable group is bonded to at least one type of polymer that is bonded to the pigment. The term "anionizable group" as used herein means a group capable of being ionized to become anionic. For example, an anionic group or an anionizable group may be an acidic group or a salt of an acidic group.

The acidic group may be a derivative of an organic acid such as a carboxyl group, a hydroxyl group, a sulfonic acid group, a sulfuric acid group, or a phosphonic acid group. The anionic group or the anionizable group serves as a functional group involved in an agglutination reaction between a treatment liquid and an anionic-polymer-attached CB on a surface of a recording medium.

The polymer included in the anionic-polymer-attached CB is not particularly limited, and examples thereof include polystyrene, a styrene/ acrylic copolymer, a styrene/ acrylic ester copolymer, polyacrylic ester, polymethacrylic ester, polyethyl acrylate, a styrene/ butadiene copolymer, a butadiene copolymer, polyurethane, an acrylonitrile/ butadiene copolymer, a chloroprene copolymer, a crosslinking acrylic resin, a crosslinking styrene resin, vinylidene fluoride, a benzoguanamine resin, a polyethylene resin, a polypropylene resin, a styrene/ methacrylic ester copolymer, a styrene/ acrylamide copolymer, n-isobutyl acrylate, vinyl acetate, acrylamide, polyvinyl acetal, a rosin resin, a vinylidene chloride resin, an ethylene/ vinyl acetate copolymer, a vinyl acetate/ acrylic copolymer, and a vinylidene chloride resin. The polymer may be held on the pigment such that the amount of the polymer is from about 20% to about 30% of the mass of the anionic-polymer-attached CB.

The polymer-modified CB may be prepared, from the modified pigment described below, by a process including polymerizing at least one kind of polymerizable monomer. The polymer group may be selected from polymer groups of various different types including, for example, a homopolymer, a random copolymer, a block copolymer, a graft copolymer, a branched copolymer, or an alternating copolymer.

In general, there are three types of methods which can be used for preparing a pigment having at least one kind of polymer group attached thereto. These methods are called "onto grafting", "through grafting", and "from grafting" processes. The "from grafting" process generally includes polymerization of a monomer in the presence of a modified pigment having at least one kind of polymerizable group attached thereto. In the polymer attached, the growing polymer chain sterically prevents access to polymerizable groups on the surface of the pigment, and thus, the presence of the attached polymer can restrict further attachment. The "from grafting" process typically includes generating an initiation point on the pigment surface, and directly polymerizing a monomer from the initiation point.

It is preferable that the polymer-modified CB used in the present invention is prepared by the "from grafting" process. Any of the "from grafting" processes which are known in this technical field may be used. For example, the polymer-modified CB may be prepared by a process of polymerization "from" a pigment which has at least one kind of transferable atom or group and to which at least one kind of polymerizable monomer is bonded. Alternatively, a conventional radical polymerization may be used, in which at least one kind of polymerizable monomer is polymerized "from" a pigment having an initiating group bonded thereto. Preferably, the polymer-modified CB is prepared by using a polymerization process including polymerizing at least one kind of polymerizable monomer from the pigment having at least one kind of transferable atom or group bonded thereto. Examples of such a polymerization process include ionic polymerization such as group transfer polymerization (GTP), as well as atom transfer radical polymerization (ATRP), stable free radical (SFR) polymerization, and reversible addition fragmentation chain transfer polymerization (RAFT). These polymerization processes typically, but not necessarily, include growing chain terminals at a relatively low fixed concentration, relative to chain terminals in the resting state. In a case in which a chain is in the resting state, the chain terminal contains a transferable atom or group. The chain terminal in a state of cessation may be converted to a terminal of a modifying chain by loosing the transferable atom or group.

ATRP, SFR, and RAFT are living radical polymerization methods which are used for preparing a polymer material from a radical-polymerizable monomer using an initiator containing a radical-transferable atom or group. In these polymerization methods, the type of transferring group is different from each other. For example, ATRP polymerization typically involves transfer of a halogen group. Details regarding the ATRP process are described, for example, in ACS Symposium Series 768, and Handbook of Radical Polymerization (K. Matyjaszewski, T. P. Davis (Editors): Wiley-Interscience, Hoboken 2002), as well as Journal of the American Chemical Society 1995, 117, 5614 written by Matyjaszewski. SFR polymerization generally involves transfer of a stable free radical group such as a nitroxyl group. Details regarding nitroxide-mediated polymerization are described, for example, in Chapter 10 of Handbook of Radical Polymerization (K. Matyjaszewski, T. P. Davis (Editors): Wiley-Interscience, Hoboken 2002). For example, although many other groups are shown in Accounts of Chemical Research 2004, 37(5), 312-325 (C. L. McCormick and A. B. Lowe), the group that transfers is, for example, a thiocarbonylthio group, in the RAFT process described in Macromolecules 1998, 31(16), 5559 (Chiefari, et. al.). From this point of view, the RAFT process is different from the nitroxide-mediated polymerization. When compared with these processes, GTP is a polymerization technique of polymerizing anionically or cationically polymerizable monomers from an initiator containing an ionically transferable atom or group such as a silyl group (for example, a trimethylsilyl group). Details regarding the GTP process are described, for example, in Journal

of the American Chemical Society 1983, 105(17), 5706-5708 (Webster, et. al.) and in Encyclopedia of Polymer Science and Engineering 1987, 7, 580-588 (Webster).

- Water-Insoluble Resin -

Examples of the water-insoluble resin that covers the carbon black (CB) may include [1] a polymer including (a) a repeating unit represented by the following Formula (1) and a (b) repeating unit having an ionic group, and [2] a polymer including a structural unit derived from (c) a salt-forming-group-containing monomer and at least one structural unit derived from (d) a styrenic macromonomer and/or a (e) hydrophobic monomer.

Here, the term "water-insoluble" means that, when a polymer is mixed with an aqueous medium at 25°C, the amount of the polymer that dissolves in the aqueous medium is 10% by mass or less, expressed as the mass ratio relative to the entire mass of the mixed polymer.

[1] Polymer Including (a) Repeating Unit Represented by Formula (1) and (b) Repeating Unit Having Ionic Group

This polymer includes at least one type of repeating unit represented by Formula (1) and at least one type of repeating unit having an ionic group, and, as necessary, may further include another structural unit such as a hydrophobic repeating unit other than repeating units represented by Formula (1), or a hydrophilic repeating unit having a nonionic functional group.

<(a) Repeating Unit Represented by Formula (1)>

Formula (1)

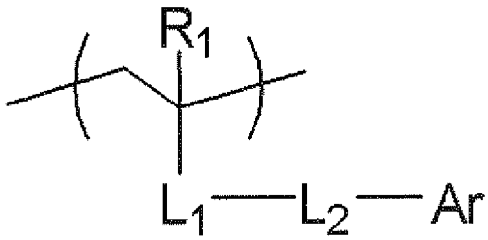

In Formula (1), $R_1$ represents a hydrogen atom, a methyl group, or a halogen atom; $L_1$ represents *-COO-, *-OCO-, *-CONR$^2$-, *-O-, or a substituted or unsubstituted phenylene group, and $R_2$ represents a hydrogen atom or an alkyl group having from 1 to 10 carbon atoms. Here, the * sign in the groups represented by $L_1$ represents a site connected to the main chain. $L_2$ represents a single bond or a divalent linking group. Ar represents a monovalent group derived from an aromatic ring.

In Formula (1), $R_1$ represents a hydrogen atom, a methyl group, or a halogen atom, and preferably represents a methyl group.

$L_1$ represents *-COO-, *-OCO-, *-CONR$^2$-, *-O-, or a substituted or unsubstituted phenylene group. In a case in which $L_1$ represents a phenylene group, the phenylene group is preferably unsubstituted. $R^2$ represents a hydrogen atom or an alkyl group having from 1 to 10 carbon atoms.

$L_2$ represents a single bond or a divalent linking group. The divalent linking group is preferably a linking group having from 1 to 30 carbon atoms, more preferably a linking group having from 1 to 25 carbon atoms, even more preferably a linking group having from 1 to 20 carbon atoms, and particularly preferably a linking group having from 1 to 15 carbon atoms.

In particular, examples of most preferable linking groups include an alkyleneoxy group having from 1 to 25 carbon atoms (more preferably, having from 1 to 10 carbon atoms), an imino group (-NH-), a sulfamoyl group, a divalent linking group containing an alkylene group, such as an alkylene group having from 1 to 20 carbon atoms (more preferably, having from 1 to 15 carbon atoms) or an ethylene oxide group [$-(CH_2CH_2O)_n-$, n = 1 to 6], and a group obtained by combining two or more types of linking group selected from the above.

Ar represents a monovalent group derived from an aromatic ring.

The aromatic ring of the monovalent group represented by Ar is not particularly limited, and examples thereof include a benzene ring, a condensed aromatic ring having 8 or more carbon atoms, and an aromatic ring condensed with a heterocycle.

The term "condensed aromatic ring having 8 or more carbon atoms" described above refers to an aromatic ring which has 8 or more carbon atoms, and of which rings are composed of two or more benzene rings condensed with each other, or of at least one type of aromatic ring and at least one alicyclic hydrocarbon condensed with the at least one type of aromatic ring. Specific examples thereof include naphthalene, anthracene, fluorene, phenathrene, and acenaphthene.

The term "aromatic ring condensed with a heterocycle" described above refers to a compound that includes at least one aromatic compound free of a heteroatom (preferably, a benzene ring) and at least one heteroatom-containing cyclic compound condensed with the at least one aromatic compound. Here, the heteroatom-containing cyclic compound is preferably a 5-membered ring or a 6-membered ring. The heteroatom is preferably a nitrogen atom, an oxygen atom, or a sulfur atom. The heteroatom-containing cyclic compound may have plural heteroatoms. In this case, the heteroatoms may be the same as or different from each other.

Specific examples of the aromatic ring condensed with a heterocycle include phthalimide, acridone, carbazole, benzoxazole, and benzothiazole.

Specific examples of a monomer for forming a repeating unit represented by Formula (1) may include vinyl monomers such as (meth)acrylates, (meth)acrylamides, styrenes, and vinyl esters.

In the present invention, a hydrophobic structural unit having an aromatic ring bonded to an atom in the main chain via a linking group has a structure in which an aromatic ring is bonded to an atom in the main chain of the water-insoluble resin via a linking group, and does not directly binds to an atom in the main chain of the water-insoluble resin. Therefore, a suitable distance is maintained between the hydrophobic aromatic ring and a hydrophilic structural unit, and thus, an interaction between the water-insoluble resin and the pigment is enhanced, resulting in strong adsorption and further improvement of the dispersibility.

Specific examples of a monomer for forming a repeating unit represented by Formula (1) include, but are not limited to, the following monomers.

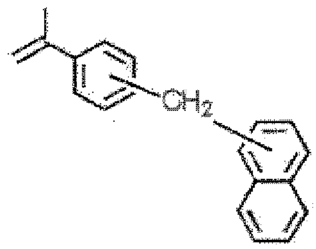

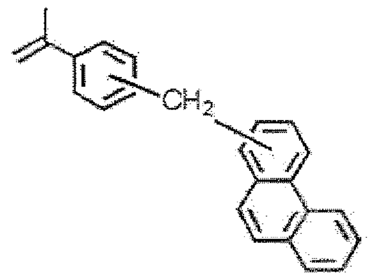

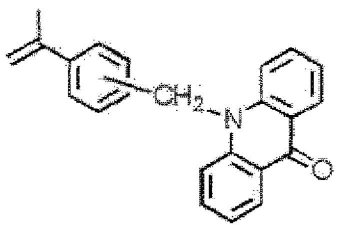

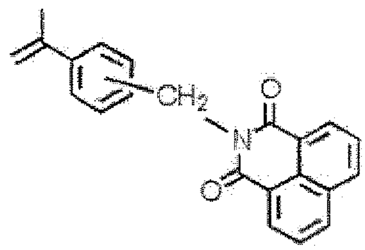

M-25/ M-27 (m, p-position substitution products) M-28/M-29 (m, p-position substitution products)

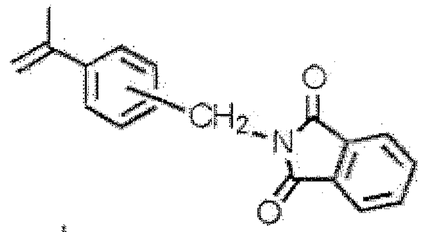

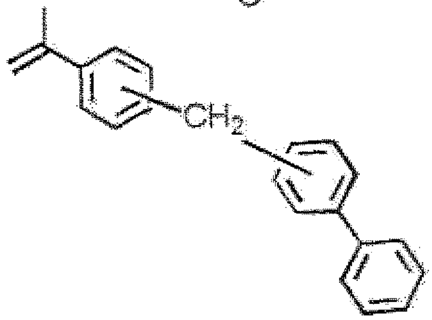

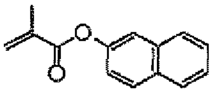 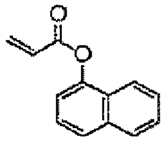 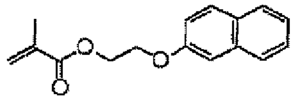 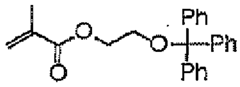

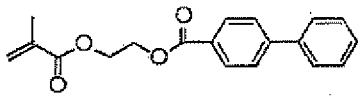 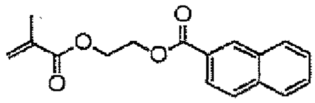 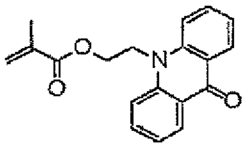

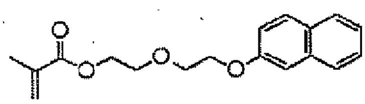 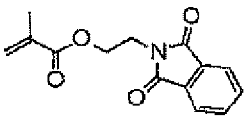 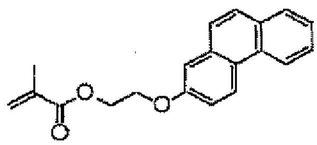

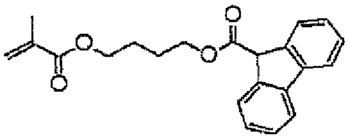 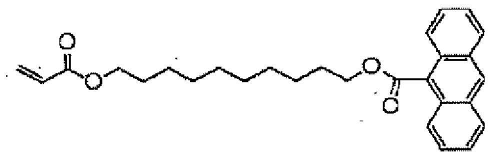

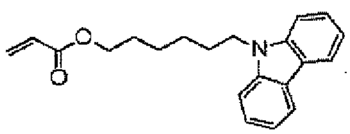 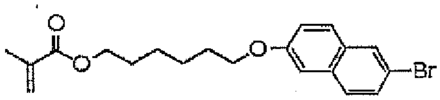 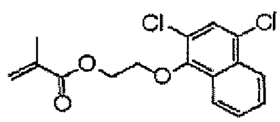

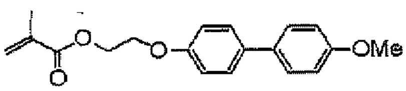 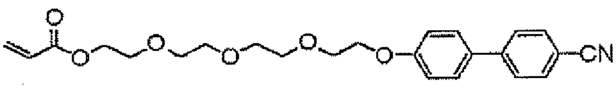

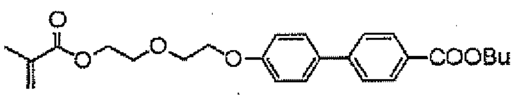 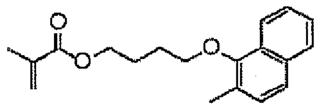

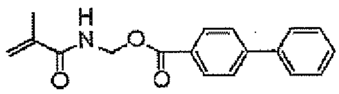

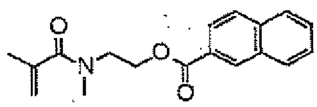

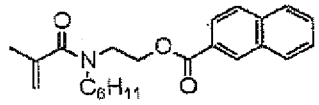

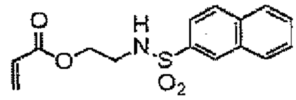

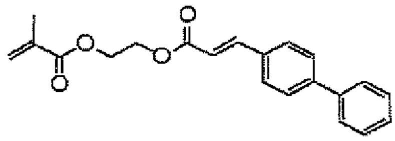

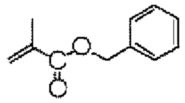

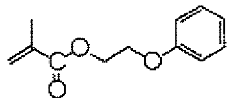

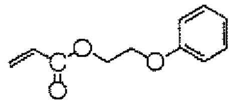

Ar in the (a) repeating unit represented by Formula (1) is preferably a monovalent group derived from benzyl (meth)acrylate, phenoxyethyl acrylate, phenoxyethyl methacrylate, acridone, or phthalimide, from the viewpoint of the dispersion stability of the covered pigment.

The repeating unit described above may be used singly, or in combination of two or more thereof.

The content ratio of repeating unit represented by Formula (1) in the polymer is preferably in a range of from 5% by mass to 25% by mass, and more preferably in a range of from 10% by mass to 18% by mass, relative to the total mass of the polymer. When the content ratio is 5% by mass or more, the occurrence of image defects such as white dot defects or the like tends to be remarkably suppressed. When the content ratio is 25% by mass or less, problems related to production suitability and caused by a decreased solubility of the polymer in the polymerization reaction solution (for example, methyl ethyl ketone) tends to be prevented. Therefore, a content ratio of from 5% by mass to 25% by mass is preferable.

<Other Hydrophobic Repeating Unit>

Polymer [1] may further include a hydrophobic repeating unit other than repeating units represented by the above Formula (1), as a hydrophobic structural unit. Examples of the hydrophobic repeating unit other than repeating units represented by Formula (1) include: a structural unit derived from a vinyl monomer that is not a hydrophilic structural unit (for example, that does not have a hydrophilic functional group), such as a (meth)acrylate-containing compound, a (meth)acrylamide-containing compound, a styrene-containing compound, or a vinyl ester; and a hydrophobic structural unit that has an aromatic ring connected to an atom in the main chain via a linking group. These structural units may be used singly, or in mixture of two or more thereof.

Examples of the (meth)acrylate-containing compound include alkyl ester of (meth) acrylic acid, for example, methyl (meth)acrylate, ethyl (meth)acrylate, butyl (meth)acrylate, isobutyl (meth)acrylate, and hexyl (meth)acrylate. Of these, methyl (meth)acrylate, ethyl (meth)acrylate, or butyl (meth)acrylate is preferable, and methyl (meth)acrylate or ethyl (meth)acrylate is more preferable. Herein, the scope of (meth) acrylic acid includes acrylic acid and methacrylic acid.

Examples of the (meth)acrylamide-containing compound include N-cyclohexyl(meth)acrylamide, N-(2-methoxyethyl)(meth)acrylamide, N,N-diallyl(meth)acrylamide, and N-allyl(meth)acrylamide.

Examples of the styrene-containing compound include styrene, methylstyrene, dimethylstyrene, trimethylstyrene, ethylstyrene, isopropylstyrene, n-butylstyrene, tert-butylstyrene, methoxystyrene, butoxystyrene, acetoxystyrene, chlorostyrene, dichlorostyrene, bromostyrene, chloromethylstyrene, hydroxystyrene protected by a group deprotectable with an acidic substance (such as t-Boc), methyl vinyl benzoate, α-methylstyrene, and vinyl nathnalene. Of these, styrene or α-methylstyrene is preferable.

Examples of the vinyl esters include vinyl acetate, vinyl chloroacetate, vinyl propionate, vinyl butyrate, vinyl methoxyacetate, and vinyl benzoate. Of these, vinyl acetate is preferable.

Among the above, the polymer preferably includes a structural unit derived from a C1-C4 alkyl ester of (meth)acrylic acid as a hydrophobic repeating unit other than repeating units represented by the above Formula (1), from the viewpoint of the dispersion stability. The number of carbon atoms of the alkyl portion of the alkyl ester is

preferably from 1 to 4, and more preferably from 1 to 2.

<(b) Repeating Unit Having Ionic Group>

Examples of repeating units having an ionic group include a repeating unit derived from a monomer having an ionic group such as a carboxyl group, a sulfo group, or a phsphonate group. More specifically, the monomer having an ionic group may be a vinyl monomer having an ionic functional group, such as (meth)acrylic acid, a (meth)acrylate-containing compound, a (meth)acrylamide-containing compound, or a vinyl ester. The repeating unit having an ionic group can be introduced into the polymer by, for example, polymerization of a corresponding monomer or introduction of an ionic group into the polymer chain after polymerization.

From among the above repeating units having an ionic group, a repeating unit derived from acrylic acid or a repeating unit derived from methacrylic acid is preferable. Polymer [1] preferably includes a structural unit derived from acrylic acid or a structural unit derived from methacrylic acid or both.

It is preferable that the content of (b) repeating units having an ionic group in polymer [1] is 15% by mass or lower relative to the entire mass of the polymer, and that the repeating units having an ionic group in polymer [1] include a structural unit (repeating unit) derived from (meth)acrylic acid.

When the content of (b) repeating units having an ionic group is 15% by mass or lower relative to the entire mass of the polymer, excellent dispersion stability can be realized. In particular, the ratio of (b) repeating units having an ionic group is more preferably from 5% by mass to 15% by mass, and still more preferably from 7% by mass to 13% by mass, relative to the entire mass of the polymer, from the viewpoint of dispersion stability.

Polymer [1] can be stably contained in an aqueous ink composition, suppresses adhesion and accumulation of aggregates at an inkjet head or the like, and has excellent removability even when adhered aggregates are formed therefrom. Polymer [1] may further include a hydrophobic structural unit other than the (a) repeating unit represented by Formula (1), and/or a hydrophilic structural unit other than the (b) repeating unit having an ionic group, so as to enhance the above effects

<Hydrophilic Structural Unit>

The hydrophilic structural unit other than the (b) repeating unit having an ionic group may be, for example, a repeating unit derived from a monomer having a nonionic hydrophilic group, examples of which include a vinyl monomer having a nonionic hydrophilic group such as a (meth)acrylate-containing compound having a nonionic hydrophilic functional group, a (meth)acrylamide-containing compound having a nonionic hydrophilic functional group, or a vinyl ester having a nonionic hydrophilic functional group.

Examples of the nonionic hydrophilic functional group include a hydroxyl group, an amino group, an amido group of which the nitrogen atom is unsubstituted, and an alkylene oxide such as polyethylene oxide or polypropylene oxide, which are described below.

The monomer for forming a hydrophilic repeating unit having a nonionic hydrophilic group is not particularly limited, as long as the monomer has a functional group capable of forming a polymer, such as an ethylenic unsaturated double bond, and a nonionic hydrophilic functional group. The monomer for forming a hydrophilic repeating unit having a nonionic hydrophilic group may be selected from known monomers. Preferable examples thereof include hydroxyethyl (meth)acrylate, hydroxybutyl (meth)acrylate, (meth)acrylamide, aminoethyl acrylate, aminopropyl acrylate, and a (meth)acrylate that contains an alkylene oxide polymer.

The hydrophilic repeating unit having a nonionic hydrophilic group can be formed by, for example, polymerization of a corresponding monomer or introduction of a nonionic hydrophilic functional group into the polymer chain after polymerization.

The hydrophilic repeating unit having a nonionic hydrophilic group is more preferably a hydrophilic structural unit having an alkylene oxide structure. The alkylene portion of the alkylene oxide structure is preferably an alkylene having from 1 to 6 carbon atoms, more preferably an alkylene having from 2 to 6 carbon atoms, and particularly preferably an alkylene having from 2 to 4 carbon atoms, from the viewpoint of hydrophilicity. The polymerization degree of the alkylene oxide structure is preferably from 1 to 120. more preferably from 1 to 60, and particularly preferably from 1 to 30.

It is also preferable that the hydrophilic repeating unit having a nonionic hydrophilic group is a hydrophilic repeating unit containing a hydroxyl group. The number of hydroxyl groups in the repeating unit is not particularly limited, and is preferably from 1 to 4, more preferably from 1 to 3, and particularly preferably from 1 to 2, from the viewpoints of the hydrophilicity of the water-insoluble resin and the compatibility with solvent or other monomers at the time of polymerization.

A suitable ratio between hydrophilic repeating units and hydrophobic repeating units (including a repeated structure represented by the above Formula (1)) in polymer [1] depends on the strength of the hydrophilicity/hydrophobicity of the individual repeating units. In polymer [1], the ratio of hydrophilic repeating units is preferably 15% by mass or

lower relative to the entire mass of the water-insoluble resin (polymer [1]). Here, the ratio of hydrophobic repeating units is preferably higher than 80% by mass relative to the entire mass of the water-insoluble resin, and more preferably 85% by mass or higher relative to the entire mass of the water-insoluble resin.

When the content of hydrophilic repeating units is 15% by mass or lower, the amount of components that dissolve in an aqueous medium without an assistance by another substance is small, as a result of which properties including pigment dispersibility are improved, and excellent ink ejection properties are realized at the time of inkjet recording.

The content ratio of hydrophilic repeating units is preferably from more than 0% by mass to 15% by mass, more preferably from 2 to 15% by mass, still more preferably from 5 to 15% by mass, and particularly preferably from 8 to 12% by mass, relative to the entire mass of the water-insoluble resin.

The content of aromatic rings in the water-insoluble resin is preferably 27% by mass or lower, more preferably 25% by mass or lower, and still more preferably 20% by mass or lower, relative to the entire mass of the water-insoluble resin. In particular, the content of aromatic rings in the water-insoluble resin is further preferably from 15 to 20% by mass, and still further preferably from 17 to 20% by mass, relative to the entire mass of the water-insoluble resin. A content ratio of aromatic rings within the above range provides improved resistance against rubbing.

Specific examples of polymer [1] are shown below, together with molar ratio (% by mass), weight average molecular weight MW, and acid value. However, polymer [1] in the invention is not limited to thereto.

- phenoxyethyl acrylate/methyl methacrylate/acrylic acid copolymer (50/45/5)
- phenoxyethyl acrylate/benzyl methacrylate/isobutyl methacrylate/methacrylic acid copolymer (30/35/29/6)
- phenoxyethyl methacrylate/isobutyl methacrylate/methacrylic acid copolymer (50/44/6)
- phenoxyethyl acrylate/methyl methacrylate/ethyl acrylate/acrylic acid copolymer (30/55/10/5)
- benzyl methacrylate/methyl methacrylate/methacrylic acid copolymer (60/30/10)
- (M-25/M-27) mixture/ethyl methacrylate/methacrylic acid copolymer (molar ratio: 15/75/10, MW: 49400, acid value: 65.2mgKOH/g)
- (M-25/ethyl methacrylate/methacrylic acid copolymer (molar ratio: 18/69/13, MW: 41600, acid value: 84.7mgKOH/g)
- (M-28/M-29) mixture/ethyl methacrylate/methacrylic acid copolymer (molar ratio: 15/85/10, MW: 38600, acid value: 65.2mgKOH/g)
- (M-28)/ethyl methacrylate/methacrylic acid copolymer (molar ratio: 20/73/7, MW: 45300, acid value: 45.6mgKOH/g)

[2] Polymer Containing Structural Unit Derived From (c) Salt-forming-group -containing Monomer and At Least One Structural Unit Derived From (d) Styrenic Macromer and/or (e) Hydrophobic Monomer

Polymer [2] is a water-insoluble polymer that is preferable from the viewpoint of imparting ejection stability and cleanability. Polymer [2] is more preferably a water-insoluble graft polymer containing a structural unit derived from the (d) styrenic macromer. It is preferable that the water-insoluble graft polymer has, at a main chain thereof, a polymer including a structural unit derived from the (c) salt-forming-group-containing monomer and a structural unit derived from the (e) hydrophobic monomer, and has, at a side chain thereof, a structural unit derived from the (d) styrenic macromer. The water-insoluble polymer is preferably a water-insoluble vinyl polymer obtained by copolymerization of a monomer mixture containing the (c) salt-forming-group-containing monomer (hereinafter sometimes referred to as "(c) component"), the (d) styrenic macromer (hereinafter sometimes referred to as "(d) component"), and/or the (e) hydrophobic monomer (hereinafter sometimes referred to as "(e) component"). This monomer mixture is hereinafter sometimes referred to as "monomer mixture".

((c) Salt-forming-group-containing Monomer)

The (c) salt-forming-group-containing monomer is used with a view to, for example, increasing the dispersion stability of the dispersion obtained. Examples of the salt-forming group include a carboxyl group, a sulfonic acid group, a phosphoric acid group, an amino group, and an ammonium group. Examples of the (c) component include cationic monomers and anionic monomers, specific examples of which include those described in column 7, line 24 to column 8, line 29 on page 5 of JP-A No. 9-286939.

Representative examples of the cationic monomers include unsaturated amino group-containing monomers and unsaturated ammonium salt-containing monomers. From among these monomers, N,'N-dimethylaminoethyl (meth)acrylate or N-(N',N'-dimethylaminopropyl)(meth)acrylamide is preferable.

Representative examples of the anionic monomers include unsaturated carboxylic acid monomers, unsaturated sulfonic acid monomers, and unsaturated phosphoric acid monomers.

Examples of the unsaturated carboxylic acid monomers include acrylic acid, methacrylic acid, crotonic acid, itaconic acid, maleic acid, fumaric acid, citraconic acid, and 2-methacryloyloxymethyl succinate.

Examples of the unsaturated sulfonic acid monomers include styrene sulfonic acid, 2-acrylamide-2-methylpropane sulfonic acid, 3-sulfopropyl (meth)acrylate, and bis-(3-sulfopropyl) itaconate.

Examples of the unsaturated phosphoric acid monomers include vinylphosphonic acid, vinyl phosphate, bis(methacryloyloxyethyl) phosphate, diphenyl-2-acryloyloxyethyl phosphate, diphenyl-2-methacryloyloxyethyl phosphate, and dibutyl-2-acryloyloxyethyl phosphate.

From among the anionic monomers, unsaturated carboxylic acid monomers are preferable, and acrylic acid or methacrylic acid is more preferable, from the viewpoints of dispersion stability and ejection properties.

((d) Styrenic Macromer)

The (d) styrenic macromer (hereinafter sometimes simply referred to as "macromer") is used with a view to increasing the affinity for a colorant (particularly, a pigment), thereby increasing the dispersion stability of water-insoluble polymer particles containing a pigment. The (d) styrenic macromer may be, for example, a macromer that is a monomer having a number average molecular weight of from 500 to 100,000, more preferably from 1,000 to 10,000, and having a polymerizable functional group, such as an unsaturated group, at one terminal thereof. The macromer as the (d) component is preferably capable of forming a hydrophobic graft chain, from the viewpoint of increasing the affinity for a pigment.

The number average molecular weight of the (d) component is measured by gel permeation chromatography using polystyrene as the standard substance and using tetrahydrofuran containing 50 mmol/L acetic acid as the solvent.

The term "styrenic macromer" refers to a macromer including a structural unit derived from a styrene-containing monomer such as styrene, $\alpha$-methylstyrene, or vinyltoluene. From among styrene-containing monomers, styrene is preferable. The styrenic macromer may be, for example, a styrene homopolymer having a polymerizable functional group at one terminal thereof, or a copolymer of styrene and at least one other monomer wherein the copolymer has a polymerizable functional group at one terminal thereof. The polymerizable functional group that is present at one terminal of the macromer is preferably an acryloyloxy group or a methacryloyloxy group. A water-insoluble graft polymer including a structural unit derived from a styrenic macromer can be obtained by copolymerization using the styrenic macromer as a copolymerization component.

From the viewpoint of pigment dispersibility, the content of structural units derived from styrene-containing monomers in the styrenic macromer is preferably 60% by mass or more, more preferably 70% by mass or more, and particularly preferably 90% by mass or more, relative to the entire mass of the styrenic macromer.

Commercially available products may be used as the styrenic macromer, and examples thereof include AS-6, AS-6S, AN-6, AN-6S, HS-6, and HS-6S (tradenames, manufactured by Toagosei Co., Ltd.).

((e) Hydrophobic monomer)

A (e) hydrophobic monomer may be used from the viewpoints of, for example, improving the dispersion stability of the water-resistant colorant and reducing the amount of free polymers. Examples thereof include alkyl (meth)acrylate, alkyl (meth)acrylamide, an aromatic-ring-containing monomer (a monomer that includes an aromatic ring), and a monomer capable of forming a repeating unit represented by the Formula (1)-A or (2) below and compounds thereof.

Examples of alkly (meth)acrylate include (meth)acrylic esters having an alkyl group having from 1 to 22 carbon atoms, such as methyl (meth)acrylate, ethyl (meth)acrylate, (iso)propyl (meth)acrylate, (iso or tertiary-)butyl (meth)acrylate, (iso)amyl (meth)acrylate, cyclohexyl (meth)acrylate, 2-ethylhexyl (meth)acrylate, (iso)octyl (meth)acrylate, (iso)decyl (meth)acrylate, (iso)dodecyl (meth)acrylate, and (iso)stearyl (meth)acrylate.

Examples of alkyl (meth)acrylamide include (meth)acrylamides having an alkyl group having from 1 to 22 carbon atoms, such as methyl (meth)acrylamide, dimethyl (meth)acrylamide, diethyl (meth)acrylamide, dibutyl (meth)acrylamide, t-butyl (meth)acrylamide, octyl (meth)acrylamide, and dodecyl (meth)acrylamide.

Preferable examples of the aromatic-ring-containing monomer include styrenic monomers such as styrene, 2-methylstyrene, and vinyltoluene; aryl esters of (meth)acrylic acid such as benzyl (meth)acrylate and phenoxyethyl (meth)acrylate; and vinyl monomers having an aromatic hydrocarbon group having from 6 to 22 carbon atoms such as ethylvinylbenzene, 4-vinylbiphenyl, 1,1-diphenylethylene, vinylnaphthalene, and chlorostyrene.

The expression "(iso or tertiary-)" as used herein means iso- or tertiary- or normal-. The expression "(iso-)" as used herein means iso- or normal-.Further, the term "(meth)acrylate" refers to acrylate or methacylate.

Formula (1)-A

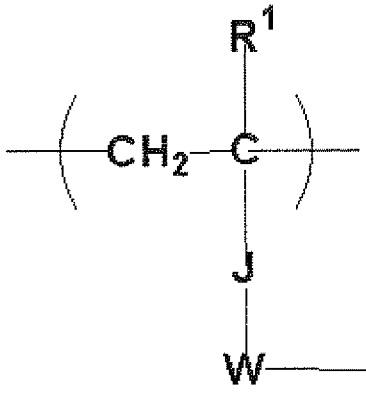

Formula (2)

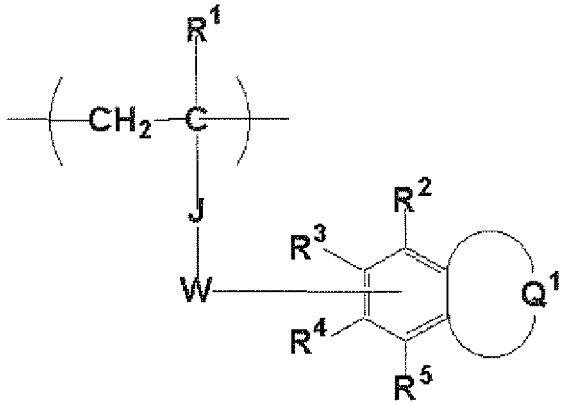

In Formula (1) -A or (2), $R^1$ represents a hydrogen atom or a substituent. One of $R^2$ to $R^5$ represents a single bond connected to W, and the others of $R^2$ to $R^5$ each independently represent a hydrogen atom or a substituent. J represents *-CO-, *-COO-, *-CONR$^{10}$-, *-OCO-, a methylene group, a phenylene group, or *-$C_6H_4$CO-. $R^{10}$ represents a hydrogen atom, an alkyl group, an aryl group, or an aralkyl group. W represents a single bond or a divalent linking group. $A^1$ represents a heterocyclic group. $Q^1$ represents an atomic group necessary for forming a ring together with the carbon atoms. The * sign represents a site connected to the main chain.

Examples of substituents that $R^1$ to $R^5$ may represent include monovalent substituents. Examples of the monovalent substituents (hereinafter, referred to as substituent Z) include an alkyl group, a cycloalkyl group, an alkenyl group, an alkynyl group, an aryl group, an amino group, an alkoxy group, an aryloxy group, a heterocyclyloxy group, an acyl group, an alkoxycarbonyl group, an aryloxycarbonyl group, an acyloxy group, an acylamino group, an alkoxycarbonylamino group, an aryloxycarbonylamino group, a sulfonylamino group, a sulfamoyl group, a carbamoyl group, an alkylthio group, an arylthio group, a heterocyclylthio group, a sulfonyl group, a sulfinyl group, a ureido group, a phosphoric acid amide group, a hydroxyl group, a mercapto group, a halogen atom, a cyano group, a sulfo group, a carboxyl group, an oxo group, a nitro group, a hydroxamic acid group, a sulfino group, a hydrazino group, an imino group, a heterocyclic group, a silyl group, and a silyloxy group. These groups may themselves be substituted by one or more substituents selected from the above substituents Z.

Among the above, $R^1$ preferably represents a hydrogen atom, an alkyl group (an alkyl group having preferably from 1 to 30 carbon atoms, more preferably from 1 to 20 carbon atoms, and particularly preferably from 1 to 10 carbon atoms, such as methyl, ethyl, iso-propyl, tert-butyl, n-octyl, n-decyl, or n-hexadecyl), or an aryl group (an aryl group having preferably from 6 to 30 carbon atoms, more preferably from 6 to 20 carbon atoms, and particularly preferably from 6 to 12 carbon atoms, such as phenyl, p-methylphenyl, naphthyl, or anthranyl). $R^1$ more preferably represents a hydrogen atom or an alkyl group.

One of $R^2$ to $R^5$ represents a single bond connected to W, and the others of $R^2$ to $R^5$ each independently represent preferably a hydrogen atom, an alkyl group (an alkyl group having preferably from 1 to 30 carbon atoms, more preferably from 1 to 20 carbon atoms, and particularly preferably from 1 to 10 carbon atoms, such as methyl, ethyl, iso-propyl, tert-butyl, n-octyl, n-decyl, or n-hexadecyl), an aryl group (an aryl group having preferably from 6 to 30 carbon atoms, more preferably from 6 to 20 carbon atoms, and particularly preferably from 6 to 12 carbon atoms, such as phenyl, p-methylphenyl, naphthyl, or anthranyl), an amino group (an amino group having preferably from 0 to 30 carbon atoms, more preferably from 0 to 20 carbon atoms, and particularly preferably from 0 to 10 carbon atoms, such as amino, methylamino, dimethylamino, diethylamino, dibenzylamino, diphenylamino, or ditolylamino), an alkoxy group (an alkoxy group having preferably from 1 to 30 carbon atoms, more preferably from 1 to 20 carbon atoms, and particularly preferably from 1 to 10 carbon atoms, such as methoxy, ethoxy, butoxy, or 2-ethylhexyloxy), an aryloxy group (an aryloxy group having preferably from 6 to 30 carbon atoms, more preferably from 6 to 20 carbon atoms, and particularly preferably from 6 to 12 carbon atoms, such as phenyloxy, 1-naphthyloxy, or 2-naphthyloxy), an acyl group (an acyl group having preferably from 1 to 30 carbon atoms, more preferably from 1 to 20 carbon atoms, and particularly preferably from 1 to 12 carbon atoms, such as acetyl, benzoyl, formyl, or pivaloyl), an alkoxycarbonyl group (an alkoxycarbonyl group having preferably from 2 to 30 carbon atoms, more preferably from 2 to 20 carbon atoms, and particularly preferably from 2 to 12 carbon atoms, such as methoxycarbonyl or ethoxycarbonyl), an aryloxycarbonyl group (an aryloxycarbonyl group having preferably from 7 to 30 carbon atoms, more preferably from 7 to 20 carbon atoms, and particularly preferably from 7 to 12 carbon atoms, such as phenyloxycarbonyl), an acyloxy group (an acyloxy group having preferably from 1 to 30 carbon atoms, more preferably from 1 to 20 carbon atoms, and particularly preferably from 1 to 10 carbon atoms,

such as acetoxy or benzoyloxy), an acylamino group (an acylamino group having preferably from 1 to 30 carbon atoms, more preferably from 1 to 20 carbon atoms, and particularly preferably from 1 to 10 carbon atoms, such as acetylamino or benzoylamino), an alkoxycarbonylamino group (an alkoxycarbonylamino group having preferably from 2 to 30 carbon atoms, more preferably from 2 to 20 carbon atoms, and particularly preferably from 2 to 12 carbon atoms, such as methoxycarbonylamino), an aryloxycarbonylamino group (an aryloxycarbonylamino group having preferably from 7 to 30 carbon atoms, more preferably from 7 to 20 carbon atoms, and particularly preferably from 7 to 12 carbon atoms, such as phenyloxycarbonylamino), a sulfonylamino group (a sulfonylamino group having preferably from 1 to 30 carbon atoms, more preferably from 1 to 20 carbon atoms, and particularly preferably from 1 to 12 carbon atoms, such as methanesulfonylamino or benzenesulfonylamino), a carbamoyl group (a carbamoyl group having preferably from 1 to 30 carbon atoms, more preferably from 1 to 20 carbon atoms, and particularly preferably from 1 to 12 carbon atoms, such as carbamoyl, methylcarbamoyl, diethylcarbamoyl, or phenylcarbamoyl), a sulfonyl group (a sulfonyl group having preferably from 1 to 30 carbon atoms, more preferably from 1 to 20 carbon atoms, and particularly preferably from 1 to 12 carbon atoms, such as mesyl or tosyl), a hydroxyl group, a halogen atom (for example, a fluorine atom, a chlorine atom, a bromine atom, or an iodine atom; more preferably, a fluorine atom), a cyano group, a carboxyl group, a nitro group, or a heterocyclic group;
more preferably a hydrogen atom, an alkyl group, an aryl group, an amino group, an alkoxy group, an aryloxy group, an acyl group, an acylamino group, a sulfonylamino group, a carbamoyl group, a sulfonyl group, a hydroxyl group, a halogen atom, or a cyano group; and even more preferably a hydrogen atom, an acyl group, a hydroxyl group, a halogen atom, or a cyano group.

In Formulae (1)-A and (2), J preferably represents *-CO-, *-$CONR^{10}$-, a phenylene group, or *-$C_6H_4CO$-, and more preferably *-$C_6H_4CO$-. $R^{10}$ represents a hydrogen atom, an alkyl group, an aryl group, or an aralkyl group, and preferably represents a hydrogen atom, an alkyl group, or an aryl group. Preferable definitions of the alkyl group and the aryl group are the same as the preferable definitions of the alkyl group and the aryl group described in the explanation of the substituents Z, respectively.

In Formulae (1) -A and (2), W represents a single bond or a divalent linking group.

Examples of the divalent linking group include an imino group, a straight chain, branched, or cyclic alkylene group (preferably an alkylene group having from 1 to 30 carbon atoms, more preferably from 1 to 12 carbon atoms, and even more preferably from 1 to 4 carbon atoms, such as methylene, ethylene, propylene, butylene, pentylene, hexylene, octylene, or decylene), an aralkylene group (preferably an aralkylene group having from 7 to 30 carbon atoms, and more preferably from 7 to 13 carbon atoms, such as benzylidene or cinnamylidene), an arylene group (preferably an arylene group having from 6 to 30 carbon atoms, and more preferably from 6 to 15 carbon atoms, such as phenylene, cumenylene, mesitylene, tolylene, or xylylene), *-$(CR^{11}R^{12})_n$NHCONH-, and *-$(CR11R^{12})_n$CONH-. The * sign represents a connection site at the main chain side. Here, $R^{11}$ and $R^{12}$ each independently represent a hydrogen atom or a substituent, preferably a hydrogen atom, an alkyl group, a halogen atom, or a hydroxyl group, more preferably a hydrogen atom or an alkyl group, and even more preferably a hydrogen atom. When plural $R^{11}$s are present, each $R^{11}$ may be the same as or different from each other. When plural $R^{12}$s are present, each $R^{12}$ may be the same as or different from each other. n represents a positive integer, and preferably represents an integer of from 1 to 10, and more preferably an integer of from 2 to 5. Among them, *-$(CR11R^{12})_n$NHCONH-, *-$(CR^{11}R^{12})_n$CONH-, and an imino group are preferable, and an imino group is more preferable.

W preferably represents a single bond, an alkylene group, or an arylene group, and more preferably represents a single bond or an alkylene group. W is even more preferably a single bond.

W may itself has a substituent, and examples of the substituent include the groups described in the explanation of the substituent Z. Further, W may be a linking group composed of two or more linking groups selected from the divalent liking groups described above. W preferably includes an ether bond therein.

In Formula (1)-A, $A^1$ represents a heterocyclic group. The "heterocyclic group" or "heterocyclyl group" refers to a monovalent group obtained by removing one hydrogen atom from a heterocyclic compound.

The heterocyclic group represented by $A^1$ is preferably a heterocyclic group capable of forming a colorant (especially, a pigment). When a heterocyclic group that has high affinity to the pigment due to the van der Waals interaction is present in the (e) hydrophobic monomer, the adsorptivity of the monomer to the pigment is favorable, whereby a stable dispersion can be obtained.

A heterocyclic compound for forming the heterocyclic group preferably has at least one hydrogen bonding group in a molecule thereof. Examples of the heterocyclic compound include thiophene, furan, xanthene, pyrrole, imidazole, isoindoline, isoindolinone, benzimidazolone, indole, quinoline, carbazole, acridine, acridone, quinacridone, anthraquinone, phthalimide, quinaldine, and quinophthalone. Among them, benzimidazolone, indole, quinoline, carbazole, acridine, acridone, anthraquinone, and phthalimide are particularly preferable.

The heterocyclic group is particularly preferably a heterocyclic group analogous to the pigment. Specifically, for a quinacridone pigment, at least one selected from acridone, anthraquinone, or the like is particularly preferably used in the present invention. Use of a heterocyclic group analogous to the pigment strengthen the adsorption of the water-insoluble polymer onto the colorant, and suppresses detachment of the polymer from the colorant, regardless of the kind or amount of the solvent used for the ink solvent.

In Formula (2), $Q^1$ represents an atomic group necessary for forming a ring together with the carbon atoms (specifically, the two carbon atoms of -C=C-). The atomic group consists of carbon, nitrogen, oxygen, silicon, phosphorus, and/or sulfur, preferably carbon, nitrogen, oxygen, and/or sulfur, more preferably carbon, nitrogen, and/or oxygen, and even more preferably carbon and/or nitrogen. $Q^1$ which is formed by the atomic group may be saturated or unsaturated. In a case in which $Q^1$ is capable of being substituted, $Q^1$ may have a substituent. In this case, the definition and specifics of the substituent are the same as the definition and specifics of the substituent Z above.

In Formula (2), examples of the cyclic structure group connected to W (a cyclic structure group constituted by the aryl group having $R^2$ to $R^5$ and $Q^1$) include a cyclic structure group which is represented by any one of the following Formulae (i) to (vi), and which may have a substituent. In Formulae (i) to (vi), the * sign represents a site connected to W. Among them, a cyclic structure group which is represented by the following Formula (i), (ii), or (iii), and which may have a substituent are preferable, and a cyclic structure group represented by the following Formula (i) which may have a substituent is more preferable.

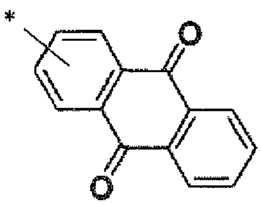

(i)

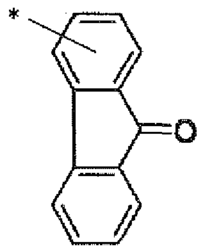

(ii)

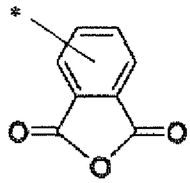

(iii)

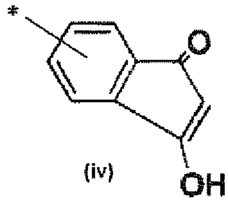

(iv)

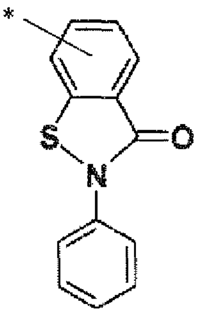

(v)

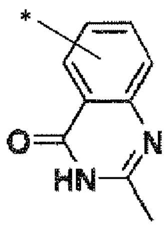

(vi)

The structural unit (repeating unit) represented by Formula (2) is preferably a repeating unit represented by the following Formula (3).

Formula (3)

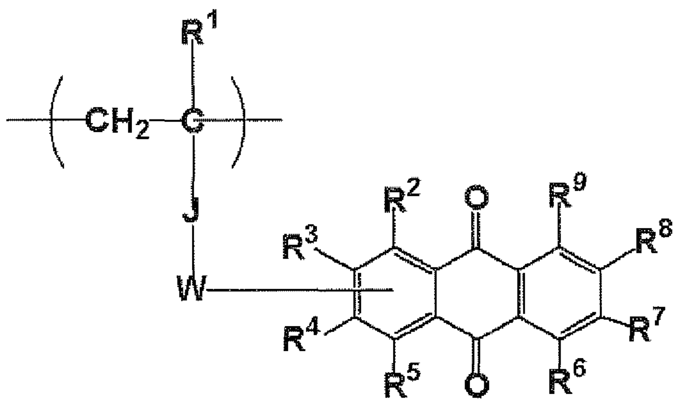

In Formula (3), $R^6$ to $R^9$ each independently represent a hydrogen atom or a substituent. $R^1$ to $R^5$, J, and W have the same definitions and preferable definitions as $R^1$ to $R^5$, J, and W in Formula (2), respectively.

In a case in which any of $R^6$ to $R^9$ represents a substituent, examples of the substituent include the groups described in the explanation of the substituent Z. $R^6$ to $R^9$ each independently represent preferably a hydrogen atom, an alkyl group, an aryl group, an amino group, an alkoxy group, an aryloxy group, an acyl group, an alkoxycarbonyl group, an aryloxycarbonyl group, an acyloxy group, an acylamino group, an alkoxycarbonylamino group, an aryloxycarbonylamino group, a sulfonylamino group, a carbamoyl group, a sulfonyl group, a hydroxy group, a halogen atom, a cyano group, a carboxyl group, a nitro group, or a heterocyclic group, more preferably a hydrogen atom, an alkyl group, an aryl group, an amino group, an alkoxy group, an aryloxy group, an acyl group, an acylamino group, a sulfonylamino group, a carbamoyl group, a sulfonyl group, a hydroxyl group, a halogen atom, or a cyano group, even more preferably a hydrogen atom, an acyl group, a hydroxyl group, a halogen atom, or a cyano group, and particularly preferably a hydrogen atom.

In the repeating unit represented by Formula (3), the combination of substituents is preferably the following combination (a), (b), (c), or (d), more preferably a combination (b), (c), or (d), even more preferably combination (c) or (d), and particularly preferably combination (d).
The * sign described below represents a site connected to the main chain.

Combination (a): J represents *-CO-, *-CONR$^{10}$-, a phenylene group, or a *-$C_6H_4$CO-, and $R^{10}$ represents a hydrogen atom, an alkyl group, or an aryl group. W represents a single bond, an imino group, an alkylene group, or an arylene group. $R^1$ represents a hydrogen atom, an alkyl group, or an aryl group. $R^2$ to $R^5$ each independently represent a single bond, a hydrogen atom, an alkyl group, an aryl group, an amino group, an alkoxy group, an aryloxy group, an acyl group, an alkoxycarbonyl group, an aryloxycarbonyl group, an acyloxy group, an acylamino group, an alkoxycarbonylamino group, an aryloxycarbonylamino group, a sulfonylamino group, a carbamoyl group, a sulfonyl group, a hydroxyl group, a halogen atom, a cyano group, a carboxyl group, a nitro group, or a heterocyclic group, provided that one of $R^2$ to $R^5$ represents a single bond connected to W. $R^6$ to $R^9$ each independently represent a hydrogen atom, an alkyl group, an aryl group, an amino group, an alkoxy group, an aryloxy group, an acyl group, an alkoxycarbonyl group, an aryloxycarbonyl group, an acyloxy group, an acylamino group, an alkoxycarbonylamino group, an aryloxycarbonylamino group, a sulfonylamino group, a carbamoyl group, a sulfonyl group, a hydroxyl group, a halogen atom, a cyano group, a carboxyl group, a nitro group, or a heterocyclic group.

Combination (b): J represents *-$C_6H_4$CO-, *-CONR$^{10}$-, or a phenylene group, and $R^{10}$ represents a hydrogen atom or an alkyl group. W represents an imino group, a single bond, or an arylene group. $R^1$ represents a hydrogen atom or an aryl group. $R^2$ to $R^5$ each independently represent a hydrogen atom, an alkyl group, an aryl group, an amino group, an alkoxy group, an aryloxy group, an acyl group, an acylamino group, a sulfonylamino group, a carbamoyl group, a sulfonyl group, a hydroxyl group, a halogen atom, or a cyano group, provided that one of $R^2$ to $R^5$ represents a single bond connected to W. $R^6$ to $R^9$ each independently represent a hydrogen atom, an alkyl group, an aryl group, an amino group, an alkoxy group, an aryloxy group, an acyl group, an acylamino group, a sulfonylamino group, a carbamoyl group, a sulfonyl group, a hydroxyl group, a halogen atom, or a cyano group.

Combination (c): J represents *-$C_6H_4$CO- or *-CONR$^{10}$-, and $R^{10}$ represents a hydrogen atom. W represents an imino group or a single bond. $R^1$ represents a hydrogen atom or an aryl group. $R^2$ to $R^5$ each independently represent a hydrogen atom, an acyl group, a hydroxyl group, a halogen atom, or a cyano group, provided that one of $R^2$ to $R^5$ represents a single bond connected to W. $R^6$ to $R^9$ each independently represent a hydrogen atom, an acyl group, a hydroxyl group, a halogen atom, or a cyano group.

Combination (d): J represents *-$C_6H_4$CO-. W represents an amino group. $R^1$ represents a hydrogen atom or an aryl group. $R^2$ to $R^5$ each independently represent a hydrogen atom, an acyl group, a hydroxyl group, a halogen atom, or a cyano group, provided that one of $R^2$ to $R^5$ represents a single bond connected to W. $R^6$ to $R^9$ each represent a hydrogen atom.

Hereinafter, specific examples of the repeating unit represented by Formula (1)-A are shown. However, the present invention is not limited to these specific examples.

M-1 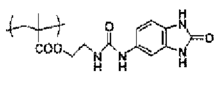 M-2 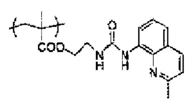 M-11 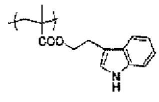 M-12 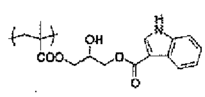

M-3 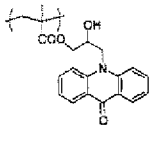 M-4 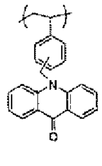 M-13 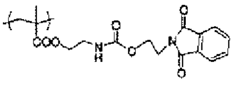 M-14 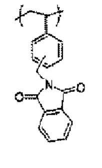

M-5 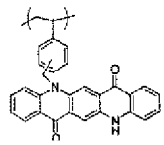

M-6 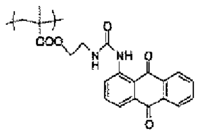

M-15 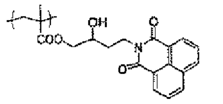

M-16 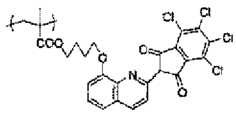

M-17 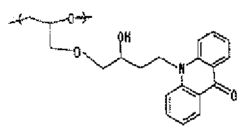

M-7 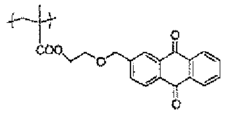

M-8 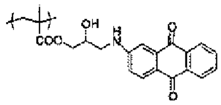

M-9 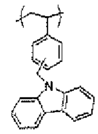

M-10 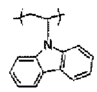

Hereinafter, specific examples of the repeating unit represented by Formula (2) are shown. However, the present invention is not limited to these specific examples.

(1) 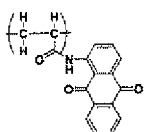

(2) 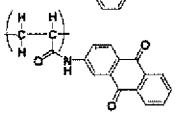

(3) 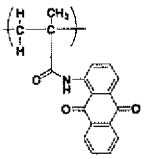

(4) 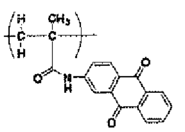

(5) 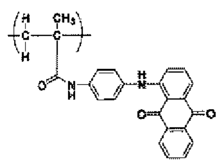

(6) 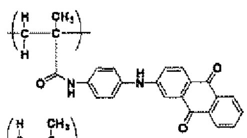

(7) 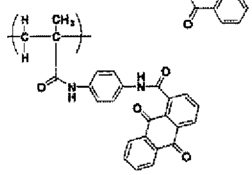

(8) 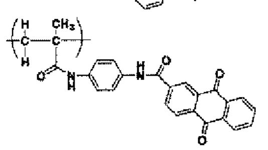

(9) 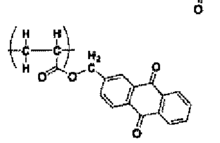

(10) 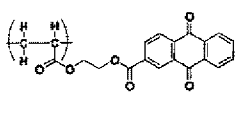

(11) 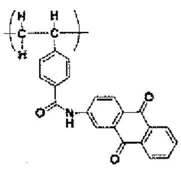

(12) 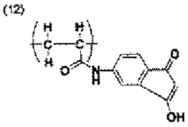

(13) 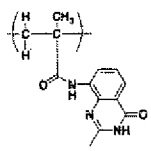

(14) 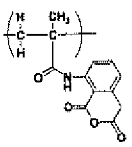

(15) 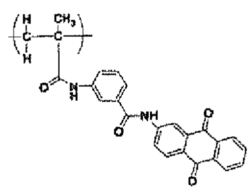

(16) 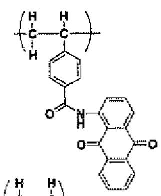

(17) 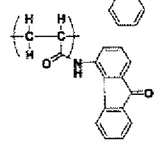

(18) 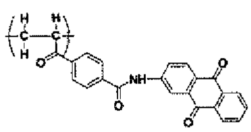

(19) 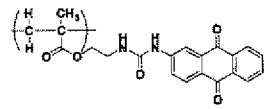

(20) 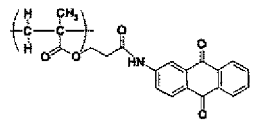

The (e) component is preferably an aromatic-ring-containing monomer, or a monomer capable of forming a heterocycle-containing repeating unit when used for formation of the water-insoluble polymer, from the viewpoints of improving the dispersibility of a colorant (especially, a pigment) and reducing the amount of free polymer. Among them, the (e) component is more preferably a monomer capable of forming a heterocycle-containing repeating unit when used for the formation of the water-insoluble polymer described above (this monomer is hereinafter referred to as "(e-1) component"), from the viewpoints of, for example, improving the dispersibility of a colorant (especially, a pigment) or reducing the amount of free polymer when used in the ink composition of the present invention.

The content of the (e-1) component in the (e) component is preferably from 10% by mass to 100% by mass, and more preferably from 20% by mass to 80% by mass, relative to the total mass of the (e) component, from the

viewpoints of, for example, reducing the amount of free polymer, and improving print density and rubbing resistance.

The aromatic-ring-containing monomer is preferably a styrenic monomer, which is hereinafter referred to as "(e-2) component", and is more preferably styrene or 2-methylstyrene. The content of the (e-2) component in the (e) component is preferably from 10% by mass to 100% by mass, and more preferably from 20% by mass to 80% by mass, relative to the total mass of the (e) component, from the viewpoints of, for example, improvement in the print density and rubbing resistance.

From the viewpoint of, for example, improvement in the colorant dispersibility, the aromatic-ring-containing monomer is preferable as the (e) component. In particular, an aryl ester of (meth)acrylic acid, which is hereinafter referred to as "(e-3) component", is preferable, and a (meth)acrylate having an arylalkyl group having from 7 to 22 carbon atoms, preferably from 7 to 18 carbon atoms, and more preferably from 7 to 12 carbon atoms, or a (meth)acrylate having an aryl group having from 6 to 22 carbon atoms, preferably from 6 to 18 carbon atoms, and more preferably from 6 to 12 carbon atoms, is more preferable. Preferable specific examples of such a monomer include benzyl (meth)acrylate and phenoxyethyl (meth)acrylate. The content of the (e-2) component in the (e) component is preferably from 10% by mass to 100% by mass, and more preferably from 20% by mass to 80% by mass, relative to the total mass of the (e) component, from the viewpoints of improvement in the colorant dispersibility and the like.

The (e) component may be used singly, or in combination of two or more thereof. It is preferable to use the (e-1) component and the (e-2) component, or the (e-2) component and the (e-3) component, or the (e-1) component and the (e-3) component, in combination. From the viewpoint of reducing the amount of free polymer, it is more preferable to use the (e-1) component and the (e-2) component in combination, or to use the (e-2) component and the (e-3) component in combination. It is most preferable to use the (e-1) component and the (e-2) component in combination.

In the present invention, it is preferable that the monomer mixture containing the above-described (c), (d), and (e) components further contains a hydroxyl group-containing monomer (f) (hereinafter also referred to as an "(f) component").

The (f) component enhances dispersion stability. Examples of the (f) component include 2-hydroxyethyl (meth)acrylate, 3-hydroxypropyl (meth)acrylate, polyethylene glycol (n = 2 to 30; n represents an average addition mole number of oxyalkylene groups, and the same applies hereinafter) (meth)acrylate, and polypropylene glycol (n = 2 to 30) (meth)acrylate, poly(ethylene glycol (n = 1 to 15) · propylene glycol (n = 1 to 15)) (meth)acrylate. Among them, 2-hydroxyethyl (meth)acrylate, polyethylene glycol monomethacrylate, and polypropylene glycol methacrylate are preferable.

The monomer mixture may contain a monomer (g) represented by the following Formula (A). The monomer (g) is hereinafter sometimes referred to as "(g) component".

Formula (A) $CH_2{=}C(R^3)COO(R^4O)_pR^5$

In Formula (A), $R^3$ represents a hydrogen atom or an alkyl group having from 1 to 5 carbon atoms; $R^4$ represents a divalent hydrocarbon group having from 1 to 30 carbon atoms and optionally having at least one hetero atom; $R^5$ represents a monovalent hydrocarbon group having from 1 to 30 carbon atoms and optionally having at least one hetero atom; *p* represents an average addition mole number, which is from 1 to 60, and more preferably from 1 to 30.

The (g) component heightens the ejection stability of the ink composition, and exerts excellent effects with respect to, for example, suppression of misdirection of ink droplets even in the case of continuous printing.

In the above Formula (A), the hetero atom that $R^4$ optionally has and the hetero atom that $R^5$ optionally has are each independently, for example, a nitrogen atom, an oxygen atom, a halogen atom, or a sulfur atom.

Representative examples of the group represented by $R^4$ include an aromatic group having from 6 to 30 carbon atoms, a heterocyclyl group having from 3 to 30 carbon atoms, and an alkylene group having from 1 to 30 carbon atoms, each of which may have a substituent. Representative examples of the group represented by $R^5$ include an aromatic group having from 6 to 30 carbon atoms and a heterocyclyl group having from 3 to 30 carbon atoms, each of which may have a substituent. $R^4$ may be a combination of two or more types selected from the above, and $R^5$ may be a combination of two or more types selected from the above. Examples of the substituent include an aromatic group, a heterocyclyl group, an alkyl group, a halogen atom, and an amino group.

Preferable examples of the group represented by $R^4$ include: a phenylene group that may have a substituent having from 1 to 24 carbon atoms; an aliphatic alkylene group having from 1 to 30 carbon atoms, and more preferably having from 1 to 20 carbon atoms; an alkylene group which has at least one aromatic ring bonded thereto and which has from 7 to 30 carbon atoms (including the carbon atoms of the at least one aromatic ring), and an alkylene group which has at least one heterocycle bonded thereto and which has from 4 to 30 carbon atoms (including the carbon atoms of the at least one heterocycle). Particularly preferable specific examples of the $R^4O$ group include an oxyethylene group, an oxy(iso)propylene group, an oxytetramethylene group, an oxyheptamethylene group, an oxyhexamethylene group, an oxyalkylene group which is composed of one or more types of oxyalkylene selected from the above, and which has from 2 to 7 carbon atoms, and an oxyphenylene group.

Preferable examples of the group represented by $R^5$ include: a phenyl group; an aliphatic alkyl group having from 1 to 30 carbon atoms, which is more preferably an aliphatic alkyl group having from 1 to 20 carbon atoms and optionally having a branched chain; an alkyl group having at least one aromatic group bonded thereto and having from 7 to 30 carbon atoms (including the carbon atoms of the at least one aromatic group), an alkyl group having at least one heterocycle bonded thereto and having from 4 to 30 carbon atoms (including the carbon atoms of the at least one heterocycle). More preferable examples of the group represented by $R^5$ include an alkyl group having from 1 to 12 carbon atoms such as a methyl group, an ethyl group, a (iso)propyl group, a (iso)butyl group, a (iso)pentyl group, or a (iso)hexyl group, and a phenyl group.

Specific examples of the (g) component include methoxypolyethyleneglycol(*p* in the above Formula (A) being from 1 to 30) (meth)acrylate, methoxypolytetramethyleneglycol(*p* being from 1 to 30) (meth)acrylate, ethoxypolyethyleneglycol(*p* being from 1 to 30) (meth)acrylate, (iso)propoxypolyethyleneglycol(*p* being from 1 to 30) (meth)acrylate, butoxypolyethyleneglycol(*p* being from 1 to 30) (meth)acrylate, octoxypolyethyleneglycol(*p* being from I to 30) (meth)acrylate, methoxypolypropyleneglycol(*p* being from 1 to 30) (meth)acrylate, and methoxypoly(ethyleneglycol-co-propyleneglycol) (meth)acrylate (wherein *p* is from 1 to 30 and the number of ethyleneglycol units is from 1 to 29). From among the above, methoxypolyethyleneglycol(*p* being from 1 to 30) (meth)acrylate is preferable.

Specific examples of the (f) and (g) components include polyfunctional acrylate monomers (NK-ESTER) M-40G, 90G, and 230G (tradenames, manufactured by Shin-Nakamura Chemical Co., Ltd.), and BLEMMER series products including PE-90, 200, and 350, PME-100, 200, 400, and 1000, PP-1000, PP-500, PP-800, AP-150, AP-400, AP-550, AP-800, 50PEP-300, 50POEP-800B, and 43PAPE-600B (tradenames, manufactured by NOF CORPORATION).

With respect to each of the (a) to (g) components, only one compound may be used, or two or more compounds may be used in combination.

The contents of the (c) to (e) components in the monomer mixture are as described below.

The content of the (c) component is preferably from 1 to 50% by mass, more preferably from 2 to 40% by mass, and still more preferably from 3 to 20% by mass, relative to the total amount of the monomer mixture, from the viewpoint of, for example, the dispersion stability of the water-insoluble polymer particles containing a colorant (particularly, a pigment) obtained.

The content of the (d) component is preferably from 1 to 50% by mass, and more preferably from 5 to 40% by mass, relative to the total amount of the monomer mixture, from the viewpoint of, for example, the dispersion stability of the water-insoluble polymer particles containing a colorant (particularly, a pigment).

The content of the (e) component is preferably from 5 to 98% by mass, and more preferably from 10 to 60% by mass, relative to the total amount of the monomer mixture, from the viewpoint of, for example, the dispersion stability of the water-insoluble polymer particles containing a colorant (particularly, a pigment).

The ratio by mass of the content of the (c) component to the total content of the (d) component and the (e) component ((c)/[(d)+(e)]) is preferably in the range of from 0.01 to 1, more preferably in the range of from 0.02 to 0.67, and still more preferably in the range of from 0.03 to 0.50, from the viewpoint of, for example, the ejection properties of the ink composition obtained.

The content of the (d) component is preferably from 5 to 40% by mass, and more preferably from 7 to 30% by mass, relative to the total amount of the monomer mixture, from the viewpoints of ejection properties and dispersion stability.

The content of the (e) component is preferably from 5 to 50% by mass, and more preferably from 10 to 40% by mass, relative to the total amount of the monomer mixture, from the viewpoints of, for example, ejection properties and dispersion stability

The total content of the (c) component and the (d) component is preferably from 6 to 60% by mass, and more preferably from 10 to 50% by mass, relative to the total amount of the monomer mixture, from the viewpoint of, for example, dispersion stability in water.

The total content of the (c) component and the (e) component is preferably from 6 to 75% by mass, and more preferably from 13 to 50% by mass, relative to the total amount of the monomer mixture, from the viewpoints of, for example, dispersion stability in water and ejection properties.

The total content of the (c) component, the (d) component, and the (e) component is preferably from 6 to 60% by mass, and more preferably from 7 to 50% by mass, relative to the total amount of the monomer mixture, from the viewpoints of dispersion stability in water and ejection properties.

When Polymer [2] has a salt-forming group derived from the (c) salt-forming-group-containing monomer, polymer [2] may be used after neutralization with a neutralizer. The neutralizer for use may be an acid or a base, depending on the type of salt-forming group contained in the water-insoluble polymer. Examples of the neutralizer include: acids such as hydrochloric acid, acetic acid, propionic acid, phosphoric acid, sulfuric acid, lactic acid, succinic acid, glycolic acid, gluconic acid, and glyceric acid; and bases such as lithium hydroxide, sodium hydroxide, potassium hydroxide, ammonia, methylamine, dimethylamine, trimethylamine, ethylamine, diethylamine, triethylamine, triethanolamine, tributylamine, tetramethyl ammonium hydroxide, benzyl trimethyl ammonium hydroxide, choline hydroxide, and tetrabutyl

ammonium hydroxide. The neutralization degree of the water-insoluble polymer is preferably from 10 to 200%, more preferably from 20 to 150%, and particularly preferably from 50 to 150%.

When the salt-forming group is an anionic group, the neutralization degree can be obtained according to the following equation:

$$\text{Neutralization degree (\%)} = \{[\text{the mass (g) of the a neutralizer dded / equivalent weight of the neutralizer}] / [\text{the acid value of the polymer (KOHmg/g)} \times \text{the mass (g) of the polymer} / (56 \times 1000)]\} \times 100$$

When the salt-forming group is a cationic group, the neutralization degree can be obtained according to the following equation:

$$\text{Neutralization degree (\%)} = \{[\text{the mass (g) of the neutralizer added / equivalent weight of the neutralizer}] / [\text{the amine value of the polymer (HCLmg/g)} \times \text{the mass (g) of the polymer} / (36.5 \times 1000)]\} \times 100$$

The acid value or the amine value can be obtained by calculation based on the acid values or amine values of the structural units of the water-insoluble vinyl polymer, or titration of a solution obtained by dissolving the polymer in an appropriate solvent (such as methyl ethyl ketone).

The acid value of the water-insoluble resin in the invention is preferably from 30 mgKOH/g to 100 mgKOH/g, more preferably from 30 mgKOH/g to 85 mgKOH/g, and particularly preferably from 50 mgKOH/g to 85 mgKOH/g, from the viewpoints of pigment dispersibility and storage stability.

The acid value is defined as the weight (mg) of KOH required for completely neutralizing 1 g of the water-insoluble resin, and is measured by the method described in the JIS (Japanese Industrial Standard), specifically in JIS K0070 (1992).

The molecular weight of the water-insoluble resin in the invention, in terms of weight average molecular weight (Mw), is preferably 30,000 or more, more preferably from 30,000 to 150,000, still more preferably from 30,000 to 100,000, and particularly preferably from 30,000 to 80,000. When the molecular weight is 30,000 or more, steric repulsion effects as a dispersant can be improved, and the water-insoluble resin has higher tendency to be adsorbed on a pigment due to steric effects.

The number average molecular weight (Mn) of the water-insoluble resin is preferably from about 1,000 to about 100,000, and particularly preferably from about 3,000 to about 50,000. When the number average molecular weigh is within the above range, the water-insoluble resin satisfactorily performs a function as a coating film of a pigment or a function as a coating film of the ink composition. Polymer [1] is preferably used in the form of a salt with an alkali metal or an organic amine.

The molecular weight distribution (weight average molecular weight / number average molecular weight) of the water-insoluble resin in the invention is preferably in the range of from 1 to 6, and more preferably in the range of from 1 to 4. When the molecular weight distribution is within the above range, the dispersion stability and the ejection stability of the ink can be heightened.

Number average molecular weight and weight average molecular weight are measured with a gel permeation chromatography (GPC). HLC-8020GPC (tradename) manufactured by Tosoh Corporation is used as a GPC instrument. Three columns of TSKGEL SUPER MULTIPORE HZ-H (tradename, 4.6mmID×15cm) manufactured by Tosoh Corporation are used as the columns. THF (tetrahydrofuran) is used as an eluent. Molecular weight can be obtained by conversion using polystyrne as a standard substance.

The water-insoluble resin in the invention can be synthesized by various polymerization methods, such as solution polymerization, precipitation polymerization, suspension polymerization, bulk polymerization, and emulsion polymerization. The polymerization reaction can be performed using a known procedure, such as in a batch manner, semi-continuous manner, or continuous manner. The method of initiating polymerization may be, for example, a method using a radical initiator or a method of irradiating light or a radiation. Polymerization methods and polymerization initiation methods are described in, for example, Teiji Tsuruta, "Kobunshi Gosei-Houhou (Polymer Synthesis Method)", revised edition, (NIKKAN KOGYO SHINBUN LTD., 1971) and Takayuki Otsu and Masayoshi Kinoshita, "Kobunshi-Gosei no Jikkenho (Experimental Technique of Polymer Synthesis)", (Kagaku-dojin Publishing Company Inc., 1972), pp. 124 to 154.

Among the above polymerization methods, a solution polymerization method using a radical initiator is preferable. Examples of the solvent to be used in the solution polymerization include various organic solvents, such as ethyl acetate, butyl acetate, acetone, methyl ethyl ketone, methyl isobutyl ketone, cyclohexanone, tetrahydrofuran, dioxane, N,N-dimethylformamide, N,N-dimethylacetamide, benzene, toluene, acetonitrile, methylene chloride, chloroform, dichloroethane, methoanol, ethanol, 1-propanol, 2-propanol, or 1-butanol. The organic solvent may be used singly, or in combination of two or more thereof. A mixed solvent composed of water and at least one organic solvent may be used. The polymerization temperature should be set in consideration of the molecular weight of the polymer to be produced and the type of the initiator. The polymerization temperature is usually in the range of from about 0 °C to about 100 °C, and preferably in the range of from 50 °C to 100 °C. The reaction pressure may be set appropriately, and is usually from 1 kg/cm$^2$ to 100 kg/cm$^2$, and preferably from about 1 kg/cm$^2$ to about 30 kg/cm$^2$. The reaction time may be from about 5 to 30 hours. The resultant resin may be purified by, for example, reprecipitation.

The mass ratio between carbon black (CB) and water-insoluble resin (r) (CB:r) in the first pigment particles is preferably in the range of from 100:25 to 100:140, and more preferably in the range of from 100:25 to 100:50. With respect to the ratio (CB:r), when the amount of water-insoluble resin is equal to or greater than a ratio of 100:25, dispersion stability and resistance against rubbing tend to improve. When the amount of water-insoluble resin is equal to or smaller than a ratio of 100:140, dispersion stability tends to improve.

The particle diameter (volume average diameter) of the dispersion of the first pigment particles is preferably from 50 to 120 nm, more preferably from 60 to 100 nm, and still more preferably from 70 to 90 nm. When the particle diameter is 50 nm or more, deterioration of stability tends to be suppressed. When the particle diameter is 120 nm or less, ejection properties tend to improve, and occurrence of white dot defects in the recorded image tends to be suppressed. Therefore, the particle diameter range of from 50 nm to 120 nm is preferable.

The particle diameter distribution of the first pigment particles is not particularly limited, and may be a broad particle size distribution or a monodisperse particle size distribution. In an embodiment, two or more types of dispersed pigment particles each having a monodisperse particle diameter distribution are used in mixture.

Here, the particle diameter of the dispersion of the first pigment particles is a value obtained by measurement by a dynamic light scattering method using a Nanotrac particle size distribution measuring instrument UPA-EX150 (tradename, manufactured by NIKKISO CO., LTD.)

The first pigment particles can be produced by a conventional physical or chemical method, using a water-insoluble resin, carbon black, and the like. For example, the first pigment particles can be produced by the method described in JP-A No. 9-151342, JP-A No. 10-140065, JP-A No. 11-209672, JP-A No, 11-172180, JP-A No. 10-25440, or JP-A No. 11-43636. Specific examples of the production method include a phase inversion emulsification method and an acid precipitation method described in JP-A No. 9-151342 and JP-A No. 10-140065.

When the first pigment particles are particles in which carbon black is covered with a water-insoluble resin, it is preferable that the particles are prepared by covering a carbon black with a water-insoluble resin by a phase inversion emulsification method, from the viewpoint of dispersion stability.

The phase inversion emulsification method is basically a self-dispersing (phase inversion emulsification) method of dispersing, in water, a mixed composite of a pigment and a resin having self-dispersibility or dissolvability. The mixed composite may further include the above-described curing agent or the polymer compound. Here, the mixed composite refers to a state in which the components are mixed without dissolution, a state in which the components are mixed by dissolution, or a state that includes both of the above states. More specific examples of the production method employing the phase inversion emulsification method include the method described in JP-ANo. 10-140065.

More specific examples of production methods employing the phase inversion emulsification method or the acid precipitation method include the methods described in JP-A No. 9-151342 and JP-ANo. 10-140065.

Furthermore, when the first pigment particles are particles in which carbon black is covered with a water-insoluble resin, the first pigment particles may be cross-linked polymer encapsulated pigment particles, namely, pigment particles obtained by dispersing a pigment using a water-soluble dispersant or a water-insoluble dispersant, and cross-linking the dispersant with a cross-linker so as to insolubilize the water-soluble dispersant.

The first pigment particles in the ink composition according to the invention can be obtained through a preparation process that includes preparing a dispersion of a resin-coated pigment by a method including the following processes (1) and (2) using a water-insoluble resin. The ink composition according to the invention can be prepared by a method that includes preparing an aqueous ink using the dispersion of the first pigment particles obtained by the preparation process, together with water and an organic solvent.

Process (1): a process of dispersing a mixture containing a water-insoluble resin, an organic solvent, a neutralizer, carbon black, and water by agitationor the like, to obtain a dispersion;
Process (2): a process of removing the organic solvent from the dispersion.

The agitation method is not particularly limited, and a generally-used mixing and agitation apparatus or a

disperser such as an ultrasonic disperser, a high-pressure homogenizer, or a bead mill may be used, as necessary.

Preferable examples of the organic solvent include alcohol solvents, ketone solvents, and ether solvents. The specifics of thereof are described in the item of water-insoluble resin particles A described below. The neutralizer is used in order to neutralize some or all of the dissociative groups of the polymer so as to allow the specific copolymer to get into a stable emulsion or dispersion state in water. The specifics of the neutralizer are described below.

In the process (2), the organic solvent is removed from the dispersion obtained through the process (1), by a common method such as distillation under reduced pressure, whereby phase inversion into an aqueous system occurs, and a dispersion of resin-coated pigment particles, each of which is composed of a pigment particle and the copolymer that covers the surface of the pigment particle, is obtained. The organic solvent has substantially been removed from the obtained aqueous dispersion, and the amount of residual organic solvent is preferably 0.2% by mass or less, and more preferably 0.1% by mass or less.

More specifically, the method includes, for example:

(1) a process of mixing a basic compound (neutralizer) with a copolymer having an anionic group or a solution obtained by dissolving the copolymer in an organic solvent, to neutralize the anionic group;
(2) a process of mixing the resultant mixture liquid with a pigment to form a suspension liquid, and thereafter dispersing the pigment using a disperser or the like to obtain a pigment dispersion liquid; and
(3) a process of removing the organic solvent by, for example, distillation so as to cover the pigment with the specific copolymer having an anionic group and so as to form an aqueous dispersion in which the pigment covered with the specific copolymer is dispersed in an aqueous medium.

More specifically, the descriptions of JP-A No. 11-209672 and JP-A No. 11-172180 can be referenced.

In the invention, the dispersing treatment can be carried out using, for example, a ball mill, a roll mill, a bead mill, a high-pressure homogenizer, a high-speed strring-type disperser, or a ultrasonic homogenizer.

The content ratio of the first pigment particles in the ink composition according to the invention is set to be in the range of from 1 % by mass to 5% by mass relative to the entire mass of the ink composition. When the content ratio of the first pigment particles is lower than 1 % by mass, the content of the first pigment particles is too low to provide a desired black density. When the content ratio of the first pigment particles is higher than 5% by mass, deterioration of the rubbing resistance of the formed image caused by CB cannot be prevented.

In particular, the content ratio of the first pigment particles is more preferably from 1% by mass to 3% by mass relative to the entire mass of the ink composition from the viewpoint of the rubbing resistance of the image obtained, and is particularly from 1% by mass to 2.5% by mass relative to the entire mass of the ink composition from the viewpoint of further suppressing the transfer of the image to the backside of another recording sheet.

(Second Pigment Particle)

The ink composition according to the invention includes at least one type of second pigment particle. The second pigment particle is a particle composed of a cyan pigment and a water-insoluble resin that covers all or part of the surface of the cyan pigment. The second pigment particles are contained, in the dispersed state, in the ink composition.

-Cyan Pigment-

Examples of the cyan pigment include C. I. Pigment Blue 1, 2, 3, 15, 15:1, 15:2, 15:3, 15:34, 16, 17:1, 22, 25, 56, and 60, and C.I. Vat Blue 4, 60, and 63. (Copper) phthalocyanine pigments are preferable, and C.I. Pigment Blue 15:3 is particularly preferable. These pigments may be used singly, or in mixture of two or more thereof at an arbitrary ratio.

-Water-insoluble Resin-

The specifics and examples of the water-insoluble resin for covering the cyan pigment are the same as the specifics and examples of the water-insoluble resin for covering the carbon black described above. Specifically, the water-insoluble resin for covering the cyan pigment may be the polymer [1] described above which includes the (a) repeating unit represented by Formula (1) and the (b) repeating unit having an ionic group, the polymer [2] described above which includes a structural unit derived from the (c) salt-forming-group-containing monomer and a structural unit derived from the (d) styrenic macromer and/or the (e) hydrophobic monomer. Preferable embodiments thereof are also the same as in the case of the water-insoluble resin for covering the carbon black.

Among the above, use of the polymer [1] described above is preferable. In particular, the polymer which includes the (a) repeating unit represented by Formula (1) and the (b) repeating unit having an ionic group, and the polymer which includes the (a) repeating unit represented by Formula (1), the (b) repeating unit having an ionic group, and the structural

unit derived from C1-C4 alkyl ester of (meth)acrylic acid is particularly preferable. The specifics, including examples and preferable embodiments, of each structural unit are as described above.

Here, the term "water-insoluble" means that, when the polymer is added to and mixed with an aqueous medium at 25°C, the amount of the polymer that dissolves in the aqueous medium is 15% by mass or less in terms mass ratio relative to the entire amount of the added polymer. From the viewpoints of further improving the rubbing resistance and suppressing color transfer between sheets of the recording medium, the amount of the polymer that dissolves in the aqueous medium is preferably 10% by mass or less in terms of mass ratio relative to the entire amount of the added polymer. The specifics of polymers [1] and [2] are as described above.

From the viewpoint of dispersion stability, the second pigment particles are preferably prepared by covering a cyan pigment with a water-insoluble resin by a phase inversion emulsification method. The phase inversion emulsification method is as described above.

The content ratio of the second pigment particles in the ink composition according to the invention is from 1% by mass to 50% by mass relative to the first pigment particles. When the content ratio of the second pigment particles is 1% by mass or higher, a desired black density can be maintained since the second pigment particles compensate for the change in hue (yellowing) due to reduction of the carbon black amount. Further, when the content ratio of the second pigment particles is 50% by mass or lower, the amount of the cyan pigment is not excessively large relative to the carbon black, so that a desired black hue can be obtained.

In particular, the content ratio of the second pigment particles is more preferably from 10% by mass to 45% by mass, and still more preferably from 20% by mass to 40% by mass, relative to the first pigment particles, from viewpoints similar to the above.

(Third Pigment Particles)

It is preferable that the ink composition according to the invention includes at least one type of third pigment particle. The third pigment particle is a particle composed of a magenta pigment and a water-insoluble resin that covers all or part of the surface of the magenta pigment. When the third pigment particles are contained in the ink composition, the third pigment particles are contained in the dispersed state.

-Magenta Pigment-

Examples of the magenta pigment include azo pigments, disazo pigments, azo lake pigments, quinacridone pigments, perylene pigments, and anthraquinone pigments.

Preferable specific examples thereof include C.I. Pigment Red 48, 57, 122, 184, and 188, and C.I. Pigment Violet 19. Quinacridone pigments are preferable, and, particularly, C.I. Pigment Red 122 and C.I. Pigment Violet 19 are preferable. The pigments may be used singly, or in mixture of two or more thereof at an arbitrary ratio. It is also possible to use a solid solution of two or more of the above pigments.

-Water-insoluble Resin-

Similarly to the case of the cyan pigment, the specifics and examples of the water-insoluble resin for covering the magenta pigment are the same as the above-described specifics and examples of the water-insoluble resin for covering the carbon black. Specifically, the water-insoluble resin for covering the magenta pigment may be the polymer [1] described above which includes the (a) repeating unit represented by Formula (1) and the (b) repeating unit having an ionic group, the polymer [2] described above which includes a structural unit derived from the (c) salt-forming-group-containing monomer and a structural unit derived from the (d) styrenic macromer and/or the (e) hydrophobic monomer. Preferable embodiments thereof are also the same as in the case of the water-insoluble resin for covering the carbon black.

Among the above, the use of the polymer [1] described above is preferable. In particular, the polymer which includes the (a) repeating unit represented by Formula (1) and the (b) repeating unit having an ionic group, and the polymer which includes the (a) repeating unit represented by Formula (1), the (b) repeating unit having an ionic group, and the structural unit derived from a C1-C4 alkyl ester of (meth)acrylic acid is particularly preferable. The specifics, including examples and preferable embodiments, of each structural unit are as described above.

Here, the term "water-insoluble" means that, when the polymer is added to and mixed with an aqueous medium at 25°C, the amount of the polymer that dissolves in the aqueous medium is 15% by mass or lower in terms mass ratio relative to the entire amount of the added polymer. From the viewpoints of further improving the rubbing resistance and suppressing color transfer between sheets of the recording medium, the amount of the polymer that dissolves in the aqueous medium is preferably 10% by mass or lower in terms of mass ratio relative to the entire amount of the added polymer. The specifics of polymers [1] and [2] are as described above.

The third pigment particles are preferably prepared by covering a magenta pigment with a water-insoluble resin

by a phase inversion emulsification method, from the viewpoint dispersion stability. The phase inversion emulsification method is as described above.

In a preferable embodiment in which the ink composition includes the third pigment particles, the content ratio of the third pigment particles in the ink composition is from 1% by mass to 70% by mass relative to the first pigment particles. When the content ratio of the third pigment particles is 1% by mass or higher, a desired black density can be maintained since the third pigment particles compensate for the change in hue (yellowing) due to reduction of the carbon black amount, and, further, color transfer can be more effectively suppressed due to a decrease in color visibility caused by the use of the magenta pigment, and the rubbing resistance of the image obtained can be improved by a decrease in the amount of carbon black. Further, when the content ratio of the third pigment particles is 70% by mass or lower, the amount of the magenta pigment is not excessively large relative to the carbon black, so that a desired black hue can be obtained.

In particular, based on consideration similar to the above, the content ratio of the third pigment particles is more preferably from 20% by mass to 65% by mass relative to the first pigment particles from the viewpoint suppressing a change in the black hue when representing halftone, and the content ratio of the third pigment particles is still more preferably from 35% by mass to 60% by mass relative to the first pigment particles from viewpoint of suppressing color transfer.

In general, the water-insoluble resin used for the first pigment particles, the water-insoluble resin used for the second pigment particles, and the water-insoluble resin used for the third pigment particles may be respectively different polymers so as to be suitable for the structures of the respective pigments. Alternatively, the water-insoluble resin used for the first pigment particles, the water-insoluble resin used for the second pigment particles, and the water-insoluble resin used for the third pigment particles may be the same polymer.

In the second pigment particles and the third pigment particles, the mass ratio between the cyan pigment (cy) or the magenta pigment (mz) and the water-insoluble resin (r) (i.e., cy:r or mz:r) is preferably from 100:25 to 100:140, and more preferably from 100:25 to 100:50. In regard to the ratio (cy:r or mz:r), when the amount of the water-insoluble resin is equal to or greater than a ratio of 100:25, the black ink containing the mixed colorants has excellent dispersion stability and ejection stability. When the amount of the water-insoluble resin is equal to or smaller than 100:140, ejection stability is maintained for a long time, and the removal and cleaning of ink adhered to nozzle members becomes easier, which means improved maintenance properties. Therefore, the mass ratio of from 100:25 to 100:140 is preferable.

(Particles A of Water-insoluble Resin)

The ink composition according to the invention includes at least one type of particle of a water-insoluble resin (which is herein referred to as particle A). Inclusion of the water-insoluble resin particles, in addition to the inclusion of the above-described resins that cover the pigments, improves the fixability of the ink composition to the recording medium and the rubbing resistance of the image. Further, when the treatment liquid described below is used for image formation, the particles A aggregate when contacting the treatment liquid or when contacting an area on which the treatment liquid has been applied and dried, as a result of which the viscosity of the ink composition increases; thus, the particles A serves to fix the ink composition.

The "water-insoluble resin" refers to a polymer of which the dissolution amount when the polymer is dried at 105°C for 2 hours and then dissolved in 100 g of water at 25°C is 10g or less. The dissolution amount is preferably 5 g or less, and more preferably 1 g or less, from the viewpoint of improving the continuous ejection properties and ejection stability of the ink. The dissolution amount is a dissolution amount when the polymer has been 100% neutralized with either sodium hydroxide or acetic acid depending on the type of salt-forming groups of the water-insoluble polymer.

The water-insoluble resin particles may be particles of a resin of which examples include thermoplastic, thermosetting, or modified, acryl-based, epoxy-based, polyurethane-based, polyether-based, polyamide-based, unsaturated polyester-based, phenol-based, silicone-based, or fluorine-containing resins; polyvinyl-based resins, such as vinyl chloride, vinyl acetate, polyvinyl alcohol, and polyvinyl butyral; polyester-based resins, such as alkyd resins and phthalic acid resins; amino-based materials, such as melamine resins, melamine-formaldehyde resins, aminonalkyd co-condensate resins, and urea resins; and co-polymers or mixtures thereof. Among them, anionic acryl-based resins can be obtained by polymerizing, for example, an acrylic monomer having an anionic group (anionic group-containing acrylic monomer) and, optionally, one or more other monomers that can be copolymerized with the anionic group-containing acrylic monomer in a solvent. Examples of the anionic group-containing acrylic monomer include acrylic monomers having at least one selected from the group consisting of a carboxy group, a sulfonic acid group, and a phosphonic acid group. Among them, preferable examples of the anionic group-containing acrylic monomer include acrylic monomers having a carboxyl group (for example, acrylic acid, methacrylic acid, crotonic acid, ethacrylic acid, propylacrylic acid, isopropylacrylic acid, itaconic acid, and fumaric acid), and more preferable examples of the anionic group-containing acrylic monomers include acrylic acid and methacrylic acid.

The water-insoluble resin particles are preferably self-dispersing resin particles from the viewpoints of ejection

stability and the liquid stability (particularly, dispersion stability) of the system containing the pigment. The self-dispersing resin refers to a water-insoluble polymer that can get into a dispersed state in an aqueous medium due to functional groups (particularly, acidic groups or salts thereof) of the polymer itself, when dispersed by a phase inversion emulsification method in the absence of surfactant.

Here, the scope of the dispersed state encompasses both of an emulsified state (emulsion) in which a water-insoluble polymer in the liquid state is dispersed in an aqueous medium and a dispersed state (suspension) in which a water-insoluble polymer in the solid state is dispersed in an aqueous medium.

The self-dispersing resin is preferably a self-dispersing resin that can get into a dispersed state in which the water-insoluble polymer is dispersed in the solid state, from the viewpoint of ink fixability of an ink composition containing the self-dispersing resin.

The method of preparing an emulsified or dispersed state of the self-dispersing resin, e.g., an aqueous dispersion of the self-dispersing resin, may be a phase inversion emulsification method. The phase inversion emulsification method may be, for example, a method including: dissolving or dispersing a self-dispersing resin in a solvent (such as a water-soluble organic solvent); thereafter pouring the resultant into water without adding a surfactant; agitating and mixing the resultant in a state in which the salt-forming groups (such as acidic groups) that the self-dispersing resin has are neutralized; and removing the solvent, thereby obtaining an aqueous dispersion in the emulsified or dispersed state.

The following procedure can be used to determine whether a water-insoluble polymer is a self-dispersing resin as mentioned herein: 30 g of a water-insoluble polymer is dissolved in 70 g of an organic solvent (such as methyl ethyl ketone) to form a solution, the solution is mixed with 200 g of water and a neutralizer that can neutralize the salt-forming groups of the water-insoluble polymer to a degree of 100% (the neutralizer being sodium hydroxide if the salt-forming groups are anionic, or acetic acid if the salt-forming groups are cationic), the mixture is stirred (apparatus: an stirring apparatus having a stirring blade, rotation rate: 200 rpm, 30 minutes, 25°C), and the organic solvent is removed from the mixture liquid. If a stable emulsification or dispersion state of the water-insoluble polymer in the mixture liquid is maintained for at least one week at 25°C after the removal of the organic solvent from the mixture liquid, and occurrence of precipitation is not confirmed by visual observation for at least one week at 25°C after the removal of the organic solvent, the water-insoluble polymer is considered to be a self-dispersing resin.

The stability of an emulsification or dispersion state of the self-dispersing resin can be confirmed also by an accelerated test of precipitation using centrifugation. In the accelerated test of precipitation using centrifugation, the stability can be evaluated by, for example, adjusting the aqueous dispersion of resin particles obtained by the above method to a solids concentration of 25% by mass, performing centrifugation at 12,000 rpm for 1 hour, and measuring the solids concentration of the supernatant after centrifugation.

If the ratio of the solids concentration after centrifugation to the solids concentration before centrifugation is large (close to 1), it is demonstrated that precipitation of resin particles by centrifugation does not occur; i.e, the aqueous dispersion of the resin particles is more stable. In the invention, the ratio of the solids concentration after centrifugation to the solids concentration before centrifugation is preferably 0.8 or higher, more preferably 0.9 or higher, and particularly preferably 0.95 or higher.

In the self-dispersing resin, the content of water-soluble components that exhibit water-solubility when the self-dispersing resin is in the dispersed state is preferably 10% by mass or lower, more preferably 8% by mass or lower, and still more preferably 6% by mass or lower. A water-soluble component content of 10% by mass or lower effectively suppresses swelling of the resin particles and adhesion between the resin particles, and can maintain a stable dispersion state. Further, an increase in the viscosity of the aqueous ink composition can be suppressed, and ejection stability improves in the case of applying the aqueous ink composition to an inkjet method.

Here, the water-soluble components refer to compounds with which the self-dispersing resin is contaminated and that dissolves in water in a case in which the self-dispersing resin is brought into a dispersed state. The water-soluble components are water-soluble compounds which are generated as by-products or incorporated during the production of the self-dispersing resin.

The main chain of the water-insoluble resin is not particularly limited, and examples thereof include vinyl polymers and condensation polymers (such as epoxy resins, polyester, polyurethane, polyamide, cellulose, polyether, polyurea, polyimide, and polycarbonate). Vinyl polymers are particularly preferable.

Preferable examples of the vinyl polymer and monomers for forming the vinyl polymer include those described in JP-A No. 2001-181549 and JP-A No. 2002-88294. Another example of the vinyl polymer is a vinyl polymer having a dissociative group at a terminal of the polymer chain that has been introduced by radical polymerization of a vinyl monomer using a chain transfer agent, a polymerization initiator, or an iniferter, each of which has a dissociative group (or a substituent that can be derivatized into a dissociative group), or by ion polymerization using a compound having a dissociative group (or a substituent that can be derivatized into a dissociative group) as either an initiator or a terminator.

Preferable examples of the condensation polymer and monomers for forming the condensation polymer include those described in JP-A No. 2001-247787.

The particles of the self-dispersing resin preferably include a water-insoluble polymer that includes a hydrophilic

structural unit and a structural unit derived from an aromatic-group-containing monomer or a cyclic-aliphatic-group-containing monomer, from the viewpoint of self-dispersibility.

The hydrophilic structural unit is not particularly limited as long as the hydrophilic structural unit is derived from a monomer containing a hydrophilic group. The self-dispersing resin may include a structural unit derived from only one type of hydrophilic-group-containing monomer, or may include structural units derived from two or more types of hydrophilic-group-containing monomer. The hydrophilic group is not particularly limited, and may be a dissociative group or a nonionic hydrophilic group.

The hydrophilic group is preferably a dissociative group, and more preferably an anionic dissociative group, from the viewpoints of enhancing self-dispersibility and stabilizing the emulsification or dispersion state formed. The dissociative group may be, for example, a carboxyl group, a phosphoric acid group, or a sulfonic acid group. Among them, a carboxyl group is preferable from the viewpoint of the fixability of the ink composition to be produced.

The hydrophilic-group-containing monomer is preferably a monomer containing a dissociative group, and more preferably a dissociative-group-containing monomer containing a dissociative group and an ethylenic unsaturated bond, from the viewpoints of self-dispersibility and aggregation properties. The dissociative-group-containing monomer may be, for example, an unsaturated carboxylic acid monomer, an unsaturated sulfonic acid monomer, or an unsaturated phosphoric acid monomer.

Examples of the unsaturated carboxylic acid monomer include acrylic acid, methacrylic acid, crotonic acid, itaconic acid, maleic acid, fumaric acid, citraconic acid, and 2-methacryloyloxymethylsuccinic acid.

Examples of the unsaturated sulfonic acid monomer include styrene sulfonic acid, 2-acrylamide-2-methylpropane sulfonic acid, 3-sulfopropyl (meth)acrylate, and bis-(3-sulfopropyl) itaconate.

Examples of the unsaturated phosphoric acid monomer include vinyl phosphonic acid, vinyl phosphate, bis(methacryloyloxyethyl) phosphate, diphenyl-2-acryloyloxyethyl phosphate, diphenyl-2-methacryloyloxyethyl phosphate, and dibutyl-2-acryloyloxyethyl phosphate.

Among the above dissociative-group-containing monomers, unsaturated carboxylic acid monomers are preferable, acrylic monomers are more preferable, and acrylic acid or methacrylic acid is particularly preferable, from the viewpoints of dispersion stability and ejection stability.

The particles of the self-dispersing resin preferably include a polymer having a carboxyl group, and more preferably include a polymer having a carboxyl group and an acid value of from 25 to 100 mgKOH/g, from the viewpoints of self-dispersibility and the aggregation speed when contacting the treatment liquid during image formation using the treatment liquid. The acid value is more preferably from 30 to 90 mgKOH/g, and particularly preferably from 35 to 65 mgKOH/g, from the viewpoints of self-dispersibility and the aggregation speed when contacting the treatment liquid. When the acid value is 25 mgKOH/g or higher, the stability of self-dispersing properties is improved. When the acid value is 100 mgKOH/g or lower, aggregation properties are improved.

The aromatic-group-containing monomer is not particularly limited as long as the monomer is a compound having an aromatic group and a polymerizable group. The aromatic group may be derived from an aromatic hydrocarbon or derived from an aromatic heterocycle. In the invention, the aromatic group is preferably an aromatic group derived from an aromatic hydrocarbon from the viewpoint of particle shape stability in an aqueous medium.

The polymerizable group may be a condensation-polymerizable group or an addition-polymerizable group. In the invention, the polymerizable group is preferably an addition-polymerizable group, and more preferably a group containing an ethylenic unsaturated bond, from the viewpoint of particle shape stability in an aqueous medium.

The aromatic-group-containing monomer in the invention is preferably a monomer having an aromatic group derived from an aromatic hydrocarbon and an ethylenic unsaturated bond. The aromatic-group-containing monomer may be used singly, or in combination of two or more thereof.

Examples of the aromatic-group-containing monomer include phenoxyethyl (meth)acrylate, benzyl (meth)acrylate, phenyl (meth)acrylate, and styrene-containing monomers. Aromatic-group-containing (meth)acrylate monomers are preferable, at least one selected from phenoxyethyl (meth)acrylate, benzyl (meth)acrylate, or phenyl (meth)acrylate is more preferable, and phenoxyethyl (meth)acrylate, or benzyl (meth)acrylate is still more preferable, from the viewpoints of the hydrophilicity/hydrophobicity balance of the polymer chain and ink fixability.

The term "(meth)acrylate" as used herein refers to acrylate or methacrylate.

The cyclic-aliphatic-group-containing monomer is preferably a monomer having a cyclic aliphatic group derived from a cyclic aliphatic hydrocarbon and an ethylenic unsaturated bond, and more preferably a cyclic-aliphatic-group-containing (meth)acrylate monomer (hereinafter sometimes referred to as "alicyclic (meth)acrylate").

The "alicyclic (meth)acrylate" includes a structural moiety derived from (meth)acrylic acid and a structural moiety derived from an alcohol, and has a structure including at least one unsubstituted or substituted alicyclic hydrocarbon group (cyclic aliphatic group) in the alcohol-derived structural moiety. The alicyclic hydrocarbon group may correspond to the entire alcohol-derived structural moiety, or may be connected to a structural moiety derived from the hydroxyl group of the alcohol via a linking group.

The alicyclic hydrocarbon group may be, without particular limitation, any alicyclic hydrocarbon group that

contains a cyclic non-aromatic hydrocarbon group, and examples thereof include a monocyclic hydrocarbon group, a bicyclic hydrocarbon group and a polycyclic hydrocarbon group that is tri- or higher-cyclic. Examples of the alicyclic hydrocarbon group include: a cycloalkyl group such as a cyclopentyl group or a cyclohexyl group; a cycloalkenyl group; a bicyclohexyl group; a norbornyl group; an isobornyl group; a dicyclopentanyl group; a dicyclopentenyl group; an adamantyl group; a decahydronaphthalenyl group; a perhydrofluorenyl group; a tricycle [5.2.1.$0^{2,6}$]decanyl group; and bicycle[4.3.0] nonane.

The alicyclic hydrocarbon group may itself have a substituent. Examples of the substituent include an alkyl group, an alkenyl group, an aryl group, an aralkyl group, an alkoxy group, a hydroxyl group, a primary amino group, a secondary amino group, a tertiary amino group, an alkylcarbonyl group, an arylcarbonyl group, and a cyano group. The alicyclic hydrocarbon group may include a condensed ring. In the alicyclic hydrocarbon group in the invention, the number of carbon atoms in the alicyclic hydrocarbon moiety is preferably from 5 to 20 from the viewpoints of viscosity and solubility.

Specific examples of the alicyclic (meth)acrylate are shown below, but the invention is not limited thereto.

Examples of monocyclic (meth)acrylates include a cycloalkyl (meth)acrylate of which the cycloalkyl group has 3 to 10 carbon atoms, such as cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, cyclononyl (meth)acrylate or cyclodecyl (meth)acrylate.

Examples of bicyclic (meth)acrylates include isobornyl (meth)acrylate and norbornyl (meth)acrylate.

Examples of tricyclic (meth)acrylates include adamantyl (meth)acrylate, dicyclopentanyl (meth)acrylate and dicyclopentenyloxyethyl (meth)acrylate.

The alicyclic (meth)acrylate may be used singly, or in combination of two or more thereof.

From among the above, the alicyclic (meth)acrylate is preferably at least one selected from a bicyclic (meth)acrylate or a polycyclic (meth)acrylate that is tri- or higher-cyclic, and more preferably at least one of isobornyl (meth)acrylate, adamantyl (meth)acrylate, or dicyclopentanyl (meth)acrylate, from the viewpoints of the dispersion stability of the self-dispersing resin particles, fixability, and blocking resistance.

The self-dispersing resin is preferably an acrylic resin including a structural unit derived from a (meth)acrylate monomer, and more preferably an acrylic resin including a structural unit derived from an aromatic-group-containing (meth)acrylate monomer or an alicyclic (meth)acrylate. The self-dispersing resin still more preferably includes at least one structural unit derived from at least one aromatic-group-containing (meth)acrylate monomer or at least one alicyclic (meth)acrylate, at a total content of from 10% by mass to 95% by mass relative to the entire mass of the resin. When the total content of the at least one structural unit derived from at least one aromatic-group-containing (meth)acrylate monomer or at least one alicyclic (meth)acrylate is from 10% by mass to 95% by mass relative to the entire mass of the resin, the stability of the self-emulsification or the dispersed state is improved, and an increase in the ink viscosity can be further suppressed.

The total content of the at least one structural unit derived from at least one aromatic-group-containing (meth)acrylate monomer or at least one alicyclic (meth)acrylate is more preferably from 15% by mass to 90% by mass, still more preferably from 15% by mass to 80% by mass, and particularly preferably from 25% by mass to 70% by mass, relative to the entire mass of the resin, from the viewpoints of the stability of the self-dispersed state, the stabilization of the particle shape in an aqueous medium due to hydrophobic interaction between aromatic rings, and a decrease of the amount of water-soluble components achieved by hydrophobization of the particles to an appropriate degree.

The self-dispersing resin may include a structural unit derived from an aromatic-group-containing monomer or a cyclic-aliphatic-group-containing monomer (preferably, an alicyclic (meth)acrylate), and a structural unit derived from a dissociative-group-containing monomer. The self-dispersing resin may further include at least one other structural unit (additional structural unit), as necessary.

The monomer for forming the additional structural unit is not particularly limited as long as the monomer is copolymerizable with the aromatic-group-containing monomer and the dissociative-group-containing monomer. In particular, the monomer is preferably an alkyl-group-containing monomer from the viewpoints of the flexibility of the polymer skeleton and the ease of the control of the glass transition temperature (Tg) of the polymer.

Examples of the alkyl-group-containing monomer include: alkyl (meth)acrylates such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, and ethylhexyl (meth)acrylate; ethylenic unsaturated monomers having a hydroxyl group, such as hydroxymethyl (meth)acrylate, 2-hydroxyethyl (meth)acrylate, 2-hydroxypropyl (meth)acrylate, 4-hydroxybutyl (meth)acrylate, hydroxypentyl (meth)acrylate, and hydroxyhexyl (meth)acrylate; (meth)acrylic ester monomers such as dialkylaminoalkyl (meth)acrylates such as dimethylaminoethyl (meth)acrylate; and (meth)acrylamide monomers, for example, (meth)acrylamides such as N-hydroxyalkyl (meth)acrylamides (such as N-hydroxymethyl (meth)acrylamide, N-hydroxyethyl (meth)acrylamide, and N-hydroxybutyl (meth)acrylamide) and N-alkoxyalkyl (meth)acrylamides (such as N-methoxymethyl (meth)acrylamide, N-ethoxymethyl (meth)acrylamide, N-(n-/iso)butoxymethyl (meth)acrylamide, N-methoxyethyl (meth)acrylamide, N-ethoxyethyl (meth)acrylamide, and N-(n-/iso)butoxyethyl (meth)acrylamide).

The molecular weight of the water-insoluble polymer that forms the self-dispersing resin particles, in terms of weight average molecular weight, is preferably from 3,000 to 200,000, and more preferably from 5,000 to 150,000, and still more preferably from 10,000 to 100,000. A weight average molecular weight of 3,000 or more effectively reduces the amount of water-soluble components. A weight average molecular weight of 200,000 or less enhances the stability of self-dispersed state.

The weight average molecular weight is measured with a gel permeation chromatograph (GPC). The specifics of the GPC are as described above.

The water-insoluble polymer that forms the self-dispersing resin particles preferably includes at least one structural unit derived from at least one aromatic-group-containing (meth)acrylate monomer (preferably a structural unit derived from phenoxyethyl (meth)acrylate and/or a structural unit derived from benzyl (meth)acrylate) or at least one structural unit derived from at least one cyclic-aliphatic-group-containing monomer (preferably at least one alicyclic (meth)acrylate), at a total copolymerization ratio of from 15 to 80% by mass relative to the entire mass of the water-insoluble polymer, from the viewpoint of hydrophilicity/hydrophobicity control of the polymer.

The water-insoluble polymer preferably includes at least one structural unit derived from at least one aromatic-group-containing (meth)acrylate monomer or at least one alicyclic (meth)acrylate at a total copolymerization ratio of from 15 to 80% by mass, at least one structural unit derived from at least one carboxyl-group-containing monomer, and at least one structural unit derived from at least one alkyl-group-containing monomer (preferably at least one structural unit derived from at least one alkyl ester of (meth)acrylic acid). It is more preferable that the water-insoluble polymer includes, at a total copolymerization ratio of from 15 to 80% by mass, at least one of a structural unit derived from phenoxyethyl (meth)acrylate or a structural unit derived from benzyl (meth)acrylate, or at least one of a structural unit derived from isobornyl (meth)acrylate, a structural unit derived from adamantyl (meth)acrylate, or a structural unit derived from dicyclopentanyl (meth)acrylate, and further includes at least one structural unit derived from at least one carboxyl-group-containing monomer and at least one structural unit derived from at least one alkyl-group-containing monomer (preferably at least one structural unit derived from at least one alkyl (meth)acrylate of which the alkyl group has from 1 to 4 carbon atoms. Further, the water-insoluble polymer preferably has an acid value of from 25 to 100 mgKOH/g and a weight average molecular weight of from 3,000 to 200,000, and more preferably has an acid value of from 30 to 90 mgKOH/g and a weight average molecular weight of from 5,000 to 150,000.

Specific examples of the water-insoluble resin for forming the water-insoluble resin particles A are described below. However, the water-insoluble resin for forming the water-insoluble resin particles A in the invention is not limited thereto. The ratios in the parentheses represent mass ratios between copolymerization components.

B-01: phenoxyethyl acrylate/methyl methacrylate/acrylic acid copolymer(50/45/5)
B-02: phenoxyethyl acrylate/benzyl methacrylate/isobutyl methacrylate/methacrylic acid copolymer(3 0/3 5/29/6)
B-03: phenoxyethyl methacrylate/isobutyl methacrylate/methacrylic acid copolymer(50/44/6)
B-04: phenoxyethyl acrylate/methyl methacrylate/ethyl acrylate/acrylic acid copolymer(30/55/10/5)
B-05: benzyl methacrylate/isobutyl methacrylate/methacrylic acid copolymer(35/59/6)
B-06: styrene/phenoxyethyl acrylate/methyl methacrylate/acrylic acid copolymer(10/50/35/5)
B-07: benzyl acrylate/methyl methacrylate/acrylic acid copolymer(55/40/5)
B-08: phenoxyethyl methacrylate/benzyl acrylate/methacrylic acid copolymer(45/47/8)
B-09: styrene/phenoxyethyl acrylate/butyl methacrylate/acrylic acid copolymer(5/48/40/7)
B-10: benzyl methacrylate/isobutyl methacrylate/cyclohexyl methacrylate/methacrylic acid copolymer(35/30/30/5)
B-11: phenoxyethyl acrylate/methyl methacrylate/butyl acrylate/methacrylic acid copolymer(12/50/30/8)
B-12: benzyl acrylate/isobutyl methacrylate/acrylic acid copolymer(93/2/5)
B-13: styrene/phenoxyethyl methacrylate/butyl acrylate/acrylic acid copolymer(50/5/20/25)
B-14: styrene/butyl acrylate/acrylic acid copolymer(62/35/3)
B-15: methyl methacrylate/phenoxyethyl acrylate/acrylic acid copolymer(45/51/4)
B-16: methyl methacrylate/phenoxyethyl acrylate/acrylic acid copolymer(45/49/6)
B-17: methyl methacrylate/phenoxyethyl acrylate/acrylic acid copolymer(45/48/7)
B-18: methyl methacrylate/phenoxyethyl acrylate/acrylic acid copolymer(45/47/8)
B-19: methyl methacrylate/phenoxyethyl acrylate/acrylic acid copolymer(45/45/10)
B-21: methyl methacrylate/isobornyl methacrylate/methacrylic acid copolymer(20/72/8), glass transition temperature: 180 °C, I/Ovalue: 0.44
B-22: methyl methacrylate/isobornyl methacrylate/methacrylic acid copolymer(40/52/8), glass transition temperature: 160 °C, I/Ovalue: 0.50
B-23: methyl methacrylate/isobornyl methacrylate/dicyclopentanyl methacrylate/methacrylic acid copolymer(20/62/10/8), glass transition temperature: 170 °C, I/Ovalue: 0.44
B-24: methyl methacrylate/dicyclopentanyl methacrylate/methacrylic acid copolymer(20/72/8), glass transition temperature: 160 °C, I/Ovalue: 0.47

The particles of the water-insoluble resin are preferably particles of a styrene-acrylic resin, urethane resin, or a mixture thereof.

Examples of the styrene-acrylic resin include the acrylic resin containing styrene as a copolymerization component, which are described in relation to the particles of the self-dispersing resin described above, and preferable embodiments thereof are also the same as the preferable embodiments of the acrylic resin containing styrene as a copolymerization component described above. Specific examples thereof include, but are not limited to, the water-insoluble resins B-06, B-09, B-13, and B-14 described above.

The particles A of a water-insoluble particles in the invention are preferably the urethane resin particles, from the viewpoint of improving continuous ejection property and ejection stability of the ink composition. Since urethane resins are less vulnerable to deterioration by photolysis than acrylic polymers, an image formed using an ink composition containing a urethane resin has excellent light fastness.

The urethane resin particles are preferably particles including at least one selected from the urethane resins represented by the following UP-1 to UP-4.

$$[(CH_2)_6NHCONH\text{-}R\text{-}NHCONH]_n \qquad \text{UP-1}$$

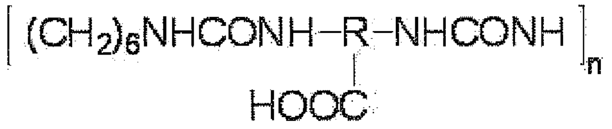

UP-2

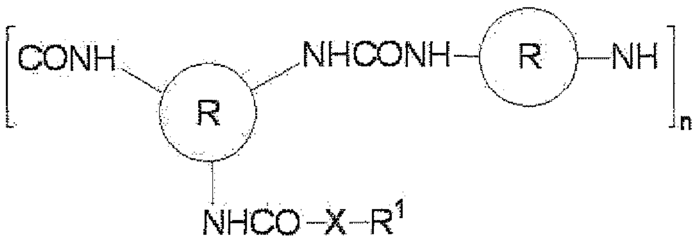

UP-3

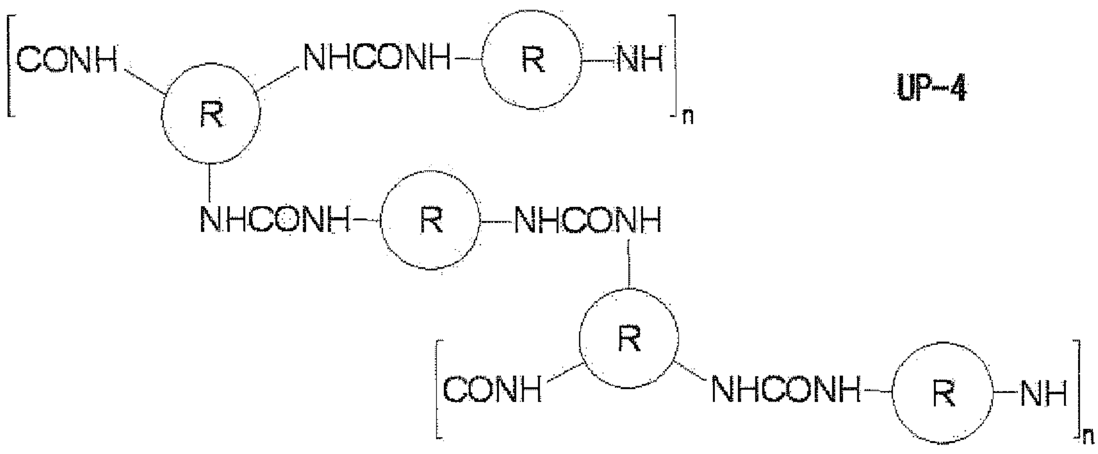

UP-4

In UP-1 to UP-4, R represents an aliphatic group or an aromatic group. $R^1$ represents $-(CH_2)_m-COOH$ or $-(CH_2CH_2O)_p-CH_3$; *m* represents an integer of from 1 to 10, *p* represents an integer of from 1 to 100, X represents NH or O, and *n* represents a positive integer.

Each of the urethane resins represented by UP-1 to UP-4 preferably includes a crosslink bond in the resin. The presence of a crosslink bond improves the stability of the urethane resin particles against shearing. Each of the urethane resins represented by UP-1 to UP-4 preferably includes an acidic group from the viewpoint of improving the stability of the urethane resin particles.

Methods for producing the urethane resins represented by UP-1 to UP-4 and preferable embodiments the

urethane resins are not particularly limited, and a preferable exemplary method is the production method described in JP-A No. 2006-241457. Specifically, the production method described in JP-A No. 2006-141457 includes preparing an emulsion containing an isocyanate compound and an anionic surfactant, adding a bifunctional, trifunctional, or polyfunctional reactive agent to the emulsion, and agitating the emulsion to generate a urethane resin.

From the viewpoint of aggregation speed, it is preferable that the water-insoluble resin includes a polymer that has been synthesized in an organic solvent, that the polymer has a carboxyl group, that some or all of the carboxyl groups of the polymer (which has an acid value of preferably from 25 to 100, more preferably from 30 to 90, and still more preferably from 35 to 65) have been neutralized, and that the polymer is prepared in the form of a polymer dispersion of which the continuous phase is water. In other words, the preparation of the water-insoluble resin particles preferably includes a process of synthesizing a polymer in an organic solvent, and a dispersing process of forming an aqueous dispersion of the polymer of which some or all of the carboxyl groups thereof have been neutralized.

The dispersing process preferably includes the following sub-processes (1) and (2):

Sub-process (1): a process of agitating a mixture containing a polymer (water-insoluble polymer), an organic solvent, a neutralizer, and an aqueous medium;

Sub-process (2): a process of removing the organic solvent from the mixture

The sub-process (1) is preferably treatment in which the polymer (water-insoluble polymer) is dissolved in the organic solvent, and then the neutralizer and the aqueous medium are gradually added thereto, and mixed and agitated to form a dispersion. When a neutralizer and an aqueous medium are added to a water-insoluble polymer solution in which a water-insoluble polymer is dissolved in an organic solvent as in the above sub-process, self-dispersing resin particles of which the diameter is highly stable during storage can be obtained without requiring a strong shearing force. The method of agitating the mixture is not particularly limited, and a generally-used mixing and agitation apparatus, and/or a disperser such as an ultrasonic disperser or a high-pressure homogenizer, may be used, as necessary.

Preferable examples of the organic solvent include alcohol solvents, ketone solvents, and ether solvents. Examples of alcohol solvents include isopropyl alcohol, n-butanol, t-butanol, and ethanol. Examples of ketone solvents include acetone, methyl ethyl ketone, diethyl ketone, and methyl isobutyl ketone. Examples of ether solvents include dibutyl ether and dioxane. Among the above solvents, ketone solvents such as methyl ethyl ketone and alcohol solvents such as isopropyl alcohol are preferable. It is also preferable to use isopropyl alcohol and methyl ethyl ketone in combination, in order to make milder the polarity change from an oil phase to an aqueous phase at the time of phase inversion. Combined use of the solvents makes it possible to obtain self-dispersing resin particles having a very small particle diameter that are free from aggregation precipitation or adhesion between the particles and that have high dispersion stability. This is thought to be caused by milder polarity change at the time of phase inversion from the oil phase to the aqueous phase.

The neutralizer is used to neutralize some or all of the dissociative groups of the polymer so as to allow the polymer to get into a stable emulsion or dispersion state in water. When the water-insoluble resin particles have anionic dissociative groups (such as carboxyl groups) as dissociative groups, the neutralizer to be used may be a basic compound such as an organic amine compound, ammonia, or an alkali metal hydroxide. Examples of the organic amine compound include monomethylamine, dimethylamine, trimethylamine, monoethylamine, diethylamine, triethylamine, monopropylamine, dipropylamine, monoethanolamine, diethanolamine, triethanolamine, N,N-dimethyl-ethanolamine, N,N-diethyl-ethanolamine, 2-dimethylamino-2-methyl-1-propanol, 2-amino-2-methyl-1-propanol, N-methyldiethanolamine, N-ethyldiethanolamine, monoisopropanolamine, diisopropanolamine, and triisopropanolamine. Examples of the alkali metal hydroxide include lithium hydroxide, sodium hydroxide, and potassium hydroxide. Among them, sodium hydroxide, potassium hydroxide, triethylamine, and triethanolamine are preferable from the viewpoint of stabilization of the dispersion of the self-dispersing resin particles according to the invention in water.

The amount of the basic compound to be used is preferably from 5 to 120% by mol relative to 100% by mol of the dissociative group. When the amount of the basic compound is 15% by mol or more, an effect of stabilizing the dispersion of the particles in water can be exerted. When the amount of basic compound is 100% by mol or less, an effect of reducing water-soluble components can be exerted. Further, more preferably from 10 to 110% by mol from the viewpoint of the storage stability for long period, and still more preferably from 15 to 100% by mol from the viewpoint of the efficient stabilization of ejection.

In the sub-process (2), the organic solvent is removed from the dispersion obtained through the sub-process (1), by a common method such as distillation under reduced pressure, whereby phase inversion into an aqueous system occurs and an aqueous dispersion of the self-dispersing resin particles is obtained. The organic solvent has substantially been removed from the obtained aqueous dispersion, and the amount of residual organic solvent is preferably 0.2% by mass or less, and more preferably 0.1% by mass or less.

The average particle diameter of the self-dispersing resin particles in terms of volume average particle diameter is preferably in the range of from 10 to 400 nm, more preferably from 10 to 200 nm, and still more preferably from 10

nm to 100 nm. When the volume average particle diameter is 10 nm or more, suitability for production is improved. When the average particle diameter is 400 nm or less, storage stability is improved.

The particle diameter distribution of the self-dispersing resin particles is not particularly limited, and may be a broad particle diameter distribution or a monodisperse particle diameter distribution. It is possible to use a mixture of two or more types of water-insoluble resin particle.

The average particle diameter and particle diameter distribution of the self-dispersing resin particles can be determined by measuring volume average particle diameter by a dynamic light scattering method using a Nanotrac particle size distribution measuring instrument UPA-EX150 (tradename, manufactured by NIKKISO CO., LTD.).

The glass transition temperature (Tg) of the water-insoluble resin particles A is preferably 30°C or higher, more preferably 40°C or higher, and still more preferably 50°C or higher, from the viewpoint of the storage stability of the ink composition.

The content of the water-insoluble resin particles A in the ink composition is preferably from 0.5% to 10% by mass, more preferably from 1 to 9% by mass, and still more preferably from 3 to 9% by mass, relative to the entire mass of the ink composition. A content of the water-insoluble resin particles of 0.5% by mass or higher improves the rubbing resistance of the image formed, and a content of the water-insoluble resin particles of 10% by mass or lower is preferable from the viewpoint of ejection stability over a long term.

(Wax)

The ink composition according to the invention preferably includes at least one wax. Inclusion of a wax further improves the rubbing resistance.

Examples of the wax include natural waxes and synthetic waxes.

Examples of natural waxes include petroleum waxes, plant waxes, and animal waxes.

Examples of petroleum waxes include paraffin wax, microcrystalline wax, and petrolatum, and examples of plant waxes include Carnauba wax, candelilla wax, rice wax, and Japan wax, and examples of animal waxes include lanolin and beeswax.

Examples of synthetic waxes include synthetic hydrocarbon waxes and modified waxes.

Examples of synthetic hydrocarbon waxes include polyethylene wax and Fischer-Tropsch wax, and examples of modified waxes include paraffin wax derivatives, Montan was derivatives, and microcrystalline wax derivatives.

From among the above waxes, paraffin wax, of which the main component is a hydrocarbon having from 20 to 40 carbon atoms, is preferred in that the paraffin wax provides excellent image gloss and exerts excellent effects in terms of moisture retention and prevention of moisture evaporation from a nozzle tip.

Polyethylene wax is preferred in that the polyethylene wax has excellent compatibility with resins and facilitates formation of a uniform and excellent image. Further, polyethyelene wax can be easily modified. Therefore, glycol-modified polyethylene wax obtained by modification is capable of imparting moistening properties originating from glycol, allows the ink composition to exert moistening effects at a nozzle tip, and realizes more efficient stabilization of ejection.

Wax is preferably used together with an emulsifier/dispersant. The emulsifier/dispersant may be selected from various conventional emulsifiers/dispersants. A particularly preferable emulsifier/dispersant is a dispersant represented by the following Formula (W):

Formula (W) $(R^3)_a\text{-}G\text{-}(D)_d$

In Formula (W), $R^3$ represents a substituted or unsubstituted, linear, branched, or cyclic, alkyl, alkenyl, or aralkyl group having from 10 to 60 carbon atoms, or a substituted or unsubstituted aryl group. G represents a divalent to heptavalent linking group. D represents $(B)_n$-E, and B represents $-CH_2CH_2O-$, $-CH_2CH_2CH_2O-$, $-CH(CH_3)CH_2O-$, or $-CH_2CH(OH)CH_2O-$, and *n* represents an integer of from 1 to 50. Here, E represents a hydrogen atom, a substituted or unsubstituted alkyl group having from 1 to 8 carbon atoms, an aryl group, an alkylcarbonyl group, or an arylcarbonyl group. *a* and *d* each independently represent an integer of from 1 to 6. When *a* is 2 or greater, there are two or more $R^3$'s, which may be the same as each other or different from each other. When d is 2 or greater, there are two or more D's, which may be the same as each other or different from each other, and there are two or more E's, which may be the same as each other or different from each other.

In regard to the specifics of the above Formula (W), preferable embodiments thereof, and specific examples of the compound represented by Formula (W), the description of paragraphs [0022] to [0026] of JP-A No. 2006-91780 can be referenced.

The wax is preferably added in the form of a dispersion, and the solvent for the dispersion is preferably water. However, the solvent is not limited to water. For example, an ordinary organic solvent may be selected, as appropriate, for use in the dispersing. In regard to the organic solvent, the description of paragraph [0027] of JP-A No. 2006-91780 can be referenced.

The content of wax in the ink composition is preferably from 0.1 to 5% by mass, more preferably from 0.5 to 4% by mass, and still more preferably from 0.5 to 3% by mass, relative to the entire amount of the ink composition. A content of wax of 0.1% by mass or higher further improves the resistance of the image against rubbing, and a content of wax of 5% by mass or lower is preferable from the viewpoint of the long-term storage stability of the ink composition. A content of wax of from 0.5 to 3% by mass is preferable from the viewpoint of ejection stability over a long term.

(Water)

The ink composition according to the invention may include water. The content of water is not particularly limited, and is preferably from 10 to 99% by mass, more preferably from 30 to 80% by mass, and still more preferably from 50 to 70% by mass.

(Other Components)

In addition to the above components, the ink composition according to the invention may further include other components, such as additives, as necessary. Examples of other components include known additives such as anti-fading agents, emulsion stabilizers, penetration promoters, ultraviolet absorbers, preservatives, antifungal agents, pH adjusters, surface tension adjusters, defoaming agents, viscosity adjustment agents, dispersants, dispersion stabilizers, antirust agents, and chelating agents. These various additives may be directly added after the preparation of the ink composition, or may be added during the preparation of the ink composition. Specific examples of the additives include the additives described as other additives in paragraphs [0153] to [0162] of JP-A No. 2007-100071.

Examples of surface tension adjusters include nonionic surfactants, cationic surfactants, anionic surfactants, and betaine surfactants. The content of surface tension adjuster is preferably a content that adjusts the surface tension of the ink composition to be from 20 to 60 mN/m, more preferably from 20 to 45 mN/m, and still more preferably from 25 mN/m to 40 mN/m, in order to achieve favorable droplet ejection by an inkjet method.

The surface tension of the ink composition can be measured at 25°C using, for example, a plate method.

In regard to specific examples of surfactants, preferable hydrocarbon surfactants include: anionic surfactants such as fatty acid salts, alkyl sulfate ester salts, alkyl benzenesulfonates, alkyl naphthalenesulfonates, dialkyl sulfosuccinates, alkyl phosphate ester salts, naphthalenesulfonic acid-formalin condensates, and polyoxyethylene alkyl sulfate ester salts; and nonionic surfactants such as polyoxyethylene alkyl ethers, polyoxyethylene alkyl allyl ethers, polyoxyethylene fatty acid esters, sorbitan fatty acid esters, polyoxyethylene sorbitan fatty acid esters, polyoxyethylene alkylamines, glycerin fatty acid esters, and oxyethylene-oxypropylene block copolymers. Further, SURFYNOLS (tradename, manufactured by Air Products and Chemicals, Inc.) and OLFINE E1010 (tradename, manufactured by Nisshin Chemical Industry Co., Ltd.), which are acetylene polyoxyethylene oxide surfactants, are preferably used. Moreover, amine oxide amphoteric surfactants such as N,N-dimethyl-N-alkylamine oxide are also preferable. Further, surfactants described in pages 37 to 38 of JP-A No. 59-157636, and Research Disclosure No. 308119 (1989) are also usable. Use of fluorine (fluorinated alkyl) surfactants or silicone surfactants, such as those described in JP-A Nos. 2003-322926, 2004-325707, and 2004-309806, improves rubbing resistance.

These surface tension adjusters can be used also as defoaming agents, and fluorine-based compounds, silicone-based compounds, and chelating agents such as EDTA are also usable.

When an ink is applied by an inkjet method, from the viewpoint of ink droplet ejection stability and coagulation speed, the viscosity of the ink composition according to the invention is preferably in the range of from 1 to 30 mPa·s, more preferably in the range of from 1 to 20 mPa·s, still more preferably in the range of from 2 to 15 mPa·s, and particularly preferably in the range of from 2 to 10 mPa·s. The viscosity of the ink composition can be measured at 20°C using, for example, a Brookfield viscometer.

The pH of the ink composition according to the invention is preferably from 7.5 to 10 from the viewpoints of ink stability and coagulation speed. The pH is measured at 25°C using a commonly-employed pH measurement instrument.

In the image forming method according to the invention, image formation is preferably carried out using an ink set that includes the ink composition (and, optionally, ink compositions having other colors, as necessary) and a treatment liquid capable of causing formation of an aggregate when contacting the ink composition. The ink set according to the invention can be used in the form of an ink cartridge that integrally accommodates the ink composition(s) and treatment liquid(s) or ink cartridges that independently accommodate the ink composition(s) and treatment liquid(s). The use of the ink cartridge is preferable from the viewpoint of, for example, convenience in handling. Ink cartridges configured to contain an ink set are known in the relevant technical field, and ink cartridge can be prepared by appropriately using known methods.

*<Ink Set>*

An ink set according to the invention includes the ink composition according to the invention described above, and a treatment liquid that contains an aggregation component capable of forming an aggregate when contacting the ink composition. Since the above-described ink composition is used in the ink set according to the invention, a less-yellowish black image having high black density can be obtained using the ink set according to the invention. Further the black image formed has excellent resistance against rubbing, and occurrence of image transfer (color transfer) between sheets of the recording medium is suppressed when two or more recorded sheets are stacked, as a result of which a high-quality image can be obtained.

The specifics of the ink composition are as described above.

The treatment liquid in the invention is an aqueous composition that is capable of forming an aggregate when contacting the ink composition. Specifically, the treatment liquid may be configured to include an aggregation component capable of forming an aggregate upon mixing with the ink composition by aggregating dispersed particles such as a colored particle (e.g., pigment) in the ink composition, and optionally include other components as necessary. Use of the treatment liquid together with the ink composition enables inkjet recording at higher speed, and enables a high-density and high-resolution image to be obtained even when high-speed recording is performed.

The treatment liquid includes at least one aggregation component capable of forming an aggregate when contacting the ink composition. Due to the treatment liquid mixing with the ink composition ejected by an inkjet method, the aggregation of pigment and the like which have been stably dispersed in the ink composition is promoted.

Examples of the treatment liquid include a liquid composition capable of forming an aggregate by changing the pH of the ink composition. Here, the pH (25C°) of the treatment liquid is preferably from 1 to 6, more preferably from 1.2 to 5, and still more preferably from 1.5 to 4, from the viewpoint of the coagulation speed of the ink composition. In this case, the pH (25°C) of the ink composition used in the ink application process is preferably from 7.5 to 9.5 (more preferably from 8.0 to 9.0).

In particular, in the invention, it is preferable that the ink composition has a pH (25C°) of 7.5 or more and that the treatment liquid has a pH (25C°) of from 3 to 5, from the viewpoints of image density, resolution and an increase in inkjet recording speed.

The aggregation component may be used singly, or in mixture of two or more thereof.

The treatment liquid may be configured to include at least one acidic compound as an aggregation component. Examples of the acidic compound include a compound having a phosphoric acid group, a phosphonic acid group, a phosphinic acid group, a sulfuric acid group, a sulfonic acid group, a sulfinic acid group, or a carboxyl group, or a salt thereof (for example, a polyvalent metal salt). Among them, a compound having a phosphoric acid group or a carboxyl group is preferable, and a compound having a carboxyl group is more preferable, from the viewpoint of the coagulation speed of the ink composition.

The compound having a carboxyl group is preferably selected from polyacrylic acid, acetic acid, glycolic acid, malonic acid, malic acid, maleic acid, ascorbic acid, succinic acid, glutaric acid, fumaric acid, citric acid, tartaric acid, lactic acid, pyrrolidone carboxylic acid, pyrone carboxylic acid, pyrrole carboxylic acid, furan carboxylic acid, pyridine carboxylic acid, coumalic acid, thiophene carboxylic acid, nicotinic acid, or a derivative of any of these compounds or a salt (such as a polyvalent metal salt) of any of these compounds. These compounds may be used singly, or in combination of two or more thereof.

In the case of using a recording medium which includes calcium carbonate or the like, an acid contained in the treatment liquid reacts with calcium contained in the recording medium, thereby forming a calcium salt. The water-solubility (solubility in water) of the salt is high depending on the type of acid. In a case in which the water-solubility of the salt is high, the salt may deposit on image portions as water evaporates, and may thus generate unevenness of glossiness.

The treatment liquid preferably includes orthophosphoric acid, phosphorous acid, pyrophosphoric acid, or tartaric acid, from the viewpoint of suppressing the unevenness of glossiness. Orthophosphoric acid, phosphorous acid, and pyrophosphoric acid are preferable since calcium salts of these acids have low water-solubility, and thus occurrence of the unevenness of glossiness of an image can be effectively suppressed. Inclusion of orthophosphoric acid is particularly preferable from the viewpoint of the stability of the treatment liquid.

From the viewpoints of the enhancing the coagulation properties of the ink, an organic acid having a first dissociation constant pKa of 3.3 or less or a salt thereof is preferably contained in the treatment liquid. Specific examples thereof include those described below. Unless stated otherwise, the first dissociation constant pKa is measured at 25 °C.

Specific examples of an organic acid having a first dissociation constant pKa of 3.3 or less or a salt thereof include: malonic acid (pKa=2.60), citric acid (pKa=2.90), isocitric acid (pKa=3.09), oxaloacetic acid (pKa=2.55), glyoxylic acid (pKa=2.98), o-chlorobenzoic acid (pKa=2.95), chloroacetic acid (pKa=2.66), cyanoacetic acid (pKa=2.65), cyclopropane-1,1-dicarboxylic acid (pKa=1.68), dichloroacetic acid (pKa=1.30 at 20 °C), 2,3-difluorobenzoic acid (pKa=3.10), 2,5-difluorobenzoic acid (pKa=3.11), oxalic acid (pKa=1.04), trichloroacetic acid (pKa=0.46), trimethylammonioacetic

acid (pKa=1.87), o-nitrobenzoic acid (pKa=2.87), nitroacetic acid (pKa=1.34 at 18 °C), pyruvic acid (pKa=2.34), phenoxyacetic acid (pKa=2.93), phthalic acid (pKa=2.75), fumaric acid (pKa=3.07), 2-furancarboxylic acid (pKa=2.98), fluoroacetic acid (pKa=2.55 at 20 °C), bromoacetic acid (pKa=2.82 at 20 °C), 2-bromopropionic acid (pKa=2.97 at 20 °C), bromomalonic acid (pKa=2.53 at 30 °C), pentafluorobenzoic acid (pKa=1.48), maleic acid (pKa=1.84), mandelic acid (pKa=3.18), methylmalonic acid (pKa=2.89), iodoacetic acid (pKa=2.90 at 20 °C), o-anilinesulfonic acid (pKa=0.40), p-anilinesulfonic acid (pKa=3.02), o-aminobenzoic acid (pKa=1.97), m-aminobenzoic acid (pKa=3.29), 4-aminosalicylic acid (pKa=2.05), orthophosphoric acid (pKa=2.12), phosphorous acid (pKa=1.5), pyrophosphoric acid (pKa=0.85), and tartaric acid (pKa=2.89), and salt thereof.

Among the above, a compound having two or more carboxyl groups is preferable from the viewpoints of increasing the coagulation speed of the ink composition and improving the graininess of an image. These compounds may be used singly, or in combination of two or more thereof. The treatment liquid in the invention preferably includes at least one selected from orthophosphoric acid, phosphorous acid, pyrophosphoric acid, or tartaric acid, and more preferably includes orthophosphoric acid, from the viewpoints of obtaining an image free of image unevenness and graininess. The treatment liquid in the invention further more preferably includes a polyvalent carboxylic-group-containing compound and at least one selected from orthophosphoric acid, phosphorous acid, pyrophosphoric acid, or tartaric acid, and particularly preferably includes a polyvalent carboxylic-group-containing compound and orthophosphoric acid, from the viewpoints of increasing the coagulation speed of the ink composition and realizing an image free of image unevenness and graininess.

The treatment liquid in the invention may further include an aqueous solvent (such as water) in addition to the acidic compound.

The content of acidic compound in the treatment liquid is preferably from 5 to 95% by mass, and more preferably from 10 to 80% by mass, relative to the total mass of the treatment liquid, from the viewpoint of coagulation effect.

A preferable example of the treatment liquid that improves high-speed coagulation properties may be a treatment liquid that contains a polyvalent metal salt or polyallylamine. Examples of the polyvalent metal salt include salts of alkali earth metals (such as magnesium and calcium) belonging to Group 2 of the Periodic Table, salts of transition metals (such as lanthanum) belonging to Group 3 of the Periodic Table, salts of metals (such as aluminum) of Group 13 of the Periodic Table, and salts of lanthanides (such as neodymium). Further examples of aggregation components include polyallylamine and polyallylamine derivatives. Carboxylic acid salts (such as formic acid salts, acetic acid salts, and benzoic acid salts), nitric acid salts, chloride salts, and thiocyanic acid salts are suitable as metal salts. In particular, a calcium or magnesium salt of a carboxylic acid (such as formic acid, acetic acid, or benzoic acid), a calcium or magnesium salt of nitric acid, calcium chloride, magnesium chloride, and a calcium or magnesium salt of thiocyanic acid, are preferable.

The content of metal salt in the treatment liquid is preferably from 1 to 10% by mass, more preferably from 1.5 to 7% by mass, and still more preferably from 2 to 6 % by mass, relative to the entire mass of the treatment liquid.

The viscosity of the treatment liquid is preferably in the range of from 1 to 30 mPa·s, more preferably in the range of from 1 to 20 mPa·s, still more preferably from 2 to 15 mPa·s, and particularly preferably from 2 to 10 mPa·s, from the viewpoint of the coagulation speed of the ink composition. The viscosity is measured under a condition of 20°C using a VISCOMETER TV-22 (tradename, manufactured by TOKI SANGYO CO., LTD).

The surface tension of the treatment liquid is preferably from 20 to 60 mN/m, more preferably from 20 to 45 mN/m, and still more preferably from 25 to 40 mN/m, from the viewpoint of the coagulation speed of the ink composition. The surface tension is measured under a condition of 25 °C using an Automatic Surface Tensiometer CBVP-Z (tradename, manufactured by Kyowa Interface Science Co., Ltd.).

*Image Forming Method*

The image forming method according to the invention includes: an ink application process of applying the above-described ink composition according to the invention onto a recording medium by an inkjet method; and a treatment liquid application process of applying, onto the recording medium, a treatment liquid containing an aggregation component capable of causing formation of an aggregate when contacting the ink composition. The image fomring method according to the invention may further include other processes, such as a heating fixing process of fixing, by heating, the ink image formed by the application of the ink composition onto the recording medium, as necessary.

According to the image forming method of the invention, since the ink composition described above is used, a less-yellowish black image having high black density, excellent resistance against rubbing, and suppressed occurrence of image transfer (color transfer) between sheets of the recording medium when two or more recorded sheets are stacked, can be obtained.

*-Treatment Liquid Application Process-*

In the treatment liquid application process, a treatment liquid containing an aggregation component capable of causing formation of an aggregate when contacting the ink composition is applied onto a recording medium. The specifics of the treatment liquid used in the present process, such as the components of the treatment liquid and preferable embodiments thereof, are as described above.

The application of the treatment liquid can be performed employing a known method such as a coating method, an inkjet method, or a dipping method. The coating method may be a known coating method using, for example, a bar coater, an extrusion die coater, an air doctor coater, a blade coater, a rod coater, a knife coater, a squeeze coater, or a reverse roll coater. The specifics of the inkjet method are the same as in the ink application process described below.

The treatment liquid application process may be conducted either before or after the ink application process described below. In the invention, an embodiment in which the ink application process is conducted after the treatment liquid application process is preferable. That is, an embodiment in which the treatment liquid for aggregating a colorant (preferably, a pigment) in the ink composition is applied onto a recording medium in advance of the application of the ink composition, and then the ink composition is applied so as to contact the treatment liquid that has been applied onto the recording medium, thereby forming an image, is preferable. This embodiment allows image formation to be carried out at higher speeds, and an image having high density and high resolution can be obtained even when high-speed recording is performed.

The amount of the treatment liquid to be applied is not particularly limited as long as the treatment liquid is capable of coagulating the ink composition. The amount of the treatment liquid to be applied is preferably an amount such that the amount of aggregation components applied is 0.1 g/m$^2$ or larger. In particular, the amount of the treatment liquid to be applied is more preferably an amount such that the amount of aggregation components applied is from 0.1 to 1.0 g/m$^2$, and more preferably from 0.2 to 0.8 g/m$^2$. When the amount of aggregation components applied is 0.1 g/m$^2$ or more, the aggregation reaction proceeds favorably. When the amount of aggregation components applied is 1.0 g/m$^2$ or less, gloss is not excessively high, and thus the amount is preferable.

In the invention, it is preferable that the ink application process is conducted after the treatment liquid application process, and that a heating and drying process of drying the treatment liquid on the recording medium by heating is further conducted during a period from after the application of the treatment liquid onto the recording medium to the application of the ink composition. Drying of the treatment liquid by heating performed in advance of the ink application process realizes favorable ink spotting properties such as bleed prevention, and realizes recording of a visible image having excellent color density and excellent hue.

The drying by heating may be conducted by using a known heating means such as a heater, a blowing means utilizing air blow such as a dryer, or a combination thereof. The heating may be performed according to, for example, a method of applying heat, by using a heater or the like, from a side of the recording medium opposite to the face applied with the treatment liquid, a method of blowing warm or hot air to the face of the recording medium applied with the treatment liquid, or a method of heating by using an infrared heater. Alternatively, two or more of these methods may be combined and used for the heating.

*-Ink Application Process-*

In the ink application process, the above-described ink composition is applied onto a recording medium by an inkjet method, to form a black image. The specifics of the ink composition used in the present process, such as the specifics of the components and preferable embodiments, are as described above.

The inkjet method is not particularly limited, and may be any known method such as a charge-control method in which ink is ejected by electrostatic attraction force, a piezo-inkjet method in which ink is ejected using a piezoelectric device that generates a mechanical deformation when a voltage is applied, an acoustic inkjet method in which ink is ejected using a radiation pressure generated by irradiation of ink with acoustic beams that have been converted from electric signals, and a thermal inkjet method in which ink is ejected using a pressure generated by formation of bubbles caused by heating of ink (BUBBLEJET, registered trademark).

Further, the scope of the inkjet method includes a method in which a large number of small-volume droplets of an ink having a low optical density, which is called a photo ink, are ejected; a method in which plural inks having substantially the same hue but at different densities are used to improve image quality; and a method in which a clear and colorless ink is used.

The inkjet method in the invention is preferably a piezo inkjet method. When the ink composition according to the invention or the ink set including the ink composition is used in combination with a piezo inkjet method, ink continuous ejection properties and ejection stability can be further improved.

In the piezo inkjet method, the deformation mode of the piezoelectric device may be bending mode, vertical mode, or shear mode. With respect to the configuration of the piezoelectric device and the structure of the piezo head,

known techniques can be applied without particular restrictions.

The ink nozzles and other members used for recording by an inkjet method are not particularly limited, and may be selected, as appropriate, in accordance with the purpose.

Regarding the inkjet method, a shuttle system in which recording is performed while a short serial head having a small length is moved in the width direction of a recording medium in a scanning manner, and a line system in which a line head having recording devices that are aligned to correspond to the entire length of one side of a recording medium is used, may be applied. In the line system, image recording can be performed over the whole of one surface of a recording medium by moving the recording medium in a scanning manner in a direction orthogonal to the alignment direction of the recording devices. Since only the recording medium is moved, the recording speed can be increased compared to the shuttle system.

The liquid droplet volume of the ink ejected from the inkjet head is preferably from 0.2 to 10 pl (pico-liter), and more preferably from 0.4 to 5 pl. The maximum total ejection amount of ink during image recording is preferably in the range of from 10 to 36 ml/$m^2$, and more preferably in the range of from 15 to 30 ml/$m^2$.

*Heating and fixing Process*

In the invention, it is preferable that a heating and fixing process of fixing the ink composition on the recording medium by heating is carried out after the ink application process. In the heating and fixing process, the recorded image formed by the application of the treatment liquid and the ink composition is fixed to the recording medium by heating. By conducting the heating and fixing treatment, the image is fixed onto the recording medium, and the rubbing resistance of the image can be further improved. Therefore, the image forming method according to the invention preferably includes the heating and fixing process.

The heating is preferably carried out at a temperature that is equal to or higher than the minimum film-forming temperature (MFT) of the water-insoluble resin particles A in the image. Heating to the MFT or higher transforms the particles into a film, thereby strengthening the image.

In a case in which heating is carried out together with pressure application, the pressure applied during the pressure application is preferably from 0.1 MPa to 3.0 MPa, more preferably from 0.1 MPa to 1.0 MPa, and still more preferably from 0.1 MPa to 0.5 MPa, from the viewpoint of smoothing the surface of the image.

The method of heating is not particularly limited, and preferable examples thereof include a noncontact drying method, such as a method of heating with a heat generator such as a NICHROME wire heater, a method of supplying warm or hot air, or a method of heating with a halogen lamp, an infrared lamp, or the like. The method of applying heat and pressure is not particularly limited, and preferable examples thereof include a contact heating and fixing method, such as a method of pressing a hot plate against an image-formed surface of the recording medium, a method in which a heat-pressurization apparatus is used to pass the recording medium through a pressure contact portion, wherein the heat-pressurization apparatus may have a pair of heat-pressurization rollers or a pair of heat-pressurization belts, or may have a heat-pressurization belt disposed at the image-recorded surface side of the recording medium and a support roller disposed at the opposite side of the recording medium. The pressure contact portion is thus formed between the pair of rollers or between the pair of heat-pressurization belts or between the heat-pressurization belt and the support roller.

When heat and pressure are applied, the nip time is preferably from 1 msec to 10 sec. more preferably from 2 msec to 1 sec, and still more preferably from 4 msec to 100 msec. The nip width is preferably from 0.1 mm to 100 mm, more preferably from 0.5 mm to 50 mm, and still more preferably from 1 mm to 10 mm.

The heat-pressurization roller may be a metal roller made of metal, or a roller having a metal core of which outer surface is covered with a coating layer made of an elastic material and, optionally, a surface layer (also referred to as a release layer). The metal core in the latter case may be, for example, a cylindrical body made of iron, aluminum, or SUS (stainless steel). It is preferable that at least a part of the surface of the metal core is coated with a coating layer. The coating layer is preferably formed by a silicone resin or fluororesin, each of which has release properties. It is preferable that a heat generator is placed in the interior of the metal core of one of the heat-pressurization rollers. Heating treatment and pressure application treatment may be performed simultaneously by passing the recording medium between the rollers. In an embodiment, the recording medium is heated by being nipped between two heating rollers, if necessary. Preferable examples of the heat generator include a halogen lamp heater, a ceramic heater, and a NICHROME wire.

The belt substrate for forming the heat-pressurization belt for use in the heat-pressurization apparatus is preferably a seamless electroformed nickel, and the thickness of the substrate is preferably from 10 μm to 100 μm. Examples of the material of the belt substrate include aluminum, iron, and polyethylene, as well as nickel. When a silicone resin layer or a fluororesin layer is provided, the thickness of the layer formed by the resin is preferably from 1 μm to 50 μm, and more preferably from 10 μm to 30 μm.

In order to obtain a pressure (nip pressure) within the above range, elastic members that exhibit tension, such as a spring, may be selected and disposed at both ends of a roller (for example, a heat-pressurization roller), such that

a desired nip pressure can be obtained in consideration of the nip gap.

When the heat-pressurization rollers or heat-pressurization belts are used, the conveyance speed of the recording medium is preferably from 200 mm/sec to 700 mm/sec, more preferably from 300 mm/sec to 650 mm/sec, and still more preferably from 400 mm/sec to 600 mm/sec.

-Recording Medium-

In the image forming method according to the invention, the recording medium on which an image is to be formed is not particularly limited, and may be coated paper used for general offset printing and the like, or paper specialized for inkjet recording.

The coated paper is paper obtained by applying a coating material onto a surface of high-quality paper or acid-free paper, which is cellulose-based and generally not surface-treated, to form a coating layer. The coated paper may be a commercially available product. Specific examples thereof include high-quality papers (A) such as PRINCE WOOD FREE (tradename) manufactured by Oji Paper Co., Ltd., SHIRAOI (tradename) manufactured by Nippon Paper Industries Co., Ltd., and *New NPI jo-shitsu* (New NPI high-quality; tradename) manufactured by Nippon Paper Industries Co., Ltd.; *Bitokoshi* (very light weight coated papers) such as EVER LIGHT COATED (tradename) manufactured by Oji Paper Co., Ltd. and AURORA S (tradename) manufactured by Nippon Paper Industries Co., Ltd.; lightweight coat papers (A3) such as TOPKOTE (L) (tradename) manufactured by Oji Paper Co., Ltd. and AURORA L (tradename) manufactured by Nippon Paper Industries Co., Ltd.; coat papers (A2, B2) such as TOPKOTE PLUS (tradename) manufactured by Oji Paper Co., Ltd. and AURORA COAT (tradename) manufactured by Nippon Paper Industries Co., Ltd.; and art papers (A1) such as 2/SIDE GOLDEN CASK GLOSS (tradename) manufactured by Oji Paper Co., Ltd. and TOKUBISHI ART (tradename) manufactured by Mitsubishi Paper Mills Ltd.

Coated paper is a material that absorbs ink only slowly. However, an image having excellent resistance against rubbing and suppressed occurrence of image transfer (color transfer) between sheets of the recording medium can be recorded at high speed according to the invention, even when such a material is used. Therefore, use of coated paper is preferred from the viewpoint of enhancement of such effects according to the invention.

Hereinafter, the present invention will be specifically described with reference to Examples, but the present invention is not limited to these Examples, and encompasses any other embodiments that do not depart from the spirit of the invention. Unless stated otherwise, "part(s)" represents part(s) by mass.

[Synthesis Example 1] : Synthesis of Water-Insoluble Polymer 1

88 g of methyl ethyl ketone were added to a 1000 mL three-necked flask equipped with a stirrer and a condenser tube, and were heated to 72°C under a nitrogen atmosphere. To this, a solution obtained by dissolving 0.86 g of dimethyl-2,2'-azobisisobutyrate, 60 g of benzyl methacrylate, 10 g ofmethacrylic acid, and 30 g of methyl methacrylate in 50 g of methyl ethyl ketone was added dropwise over 3 hours. After the addition was completed, the mixture was reacted for one more hour, and then a solution obtained by dissolving 0.40 g of dimethyl-2,2'-azobisisobutyrate in 2 g of methyl ethyl ketone was added thereto. The temperature was raised to 80°C, and the mixture was heated for 4 hours. The resulting reaction liquid was reprecipitated twice in an excess amount of hexane, and the separated resin was dried to obtain 96 g of a water-insoluble polymer 1.

The composition of the obtained polymer was confirmed by $^1$H-NMR, and the weight average molecular weight (Mw) thereof as determined by GPC was 43,300. The acid value of the copolymer was determined by the method described in JIS Standards (JIS K0070 : 1992), and was found to be 64.6 mgKOH/g.

(Preparation of Resin-Coated Carbon Black Dispersion A)

The components in the composition described below were mixed, and the resulting mixture was subjected to dispersion for a period of from 3 hours to 6 hours using a bead mill with zirconia beads having a diameter of 0.1 mm. Subsequently, from the resulting dispersion, methyl ethyl ketone was removed under reduced pressure at 55°C, and, further, a portion of water was removed, to prepare a resin-coated carbon black dispersion A having a carbon black concentration of 15.0% by mass.

<Composition of Resin-Coated Carbon Black Dispersion A>

- Carbon black (NIPEX 180-IQ (tradename) manufactured by Evonik Degussa Japan Co., Ltd.) 10.0 parts

(continued)

| | |
|---|---|
| • Water-insoluble polymer 1 described above (water-insoluble resin) | 4.5 parts |
| • Methyl ethyl ketone (organic solvent) | 30.5 parts |
| • 1 mol/L NaOH aqueous solution (neutralizer) | 6.3 parts |
| • Ion exchanged water | 98.7 parts |

(Preparation of Carbon Black Dispersion B)

5 parts of a styrene-acrylic acid copolymer (JONCRYL 678 (tradename) manufactured by BASF Japan Ltd., having a molecular weight of 8,500 and an acid value of 215 mgKOH/g) as a water-soluble dispersant, 2.0 parts of dimethylaminoethanol, and 78.0 parts of ion exchanged water were mixed by stirring at 70°C to obtain a solution. Subsequently, to this solution, 15 parts of carbon black (NIPEX180-IQ (tradename) manufactured by Evonik Degussa Japan Co., Ltd.) were added and premixed. Thereafter, the resulting mixture was dispersed using a sand grinder filled with 0.5 mm zirconia beads at a volume ratio of 50%, to prepare a carbon black dispersion B having a carbon black content of 15% by mass.

(Preparation of Resin-Coated Cyan Pigment Dispersion A)

Preparation of a resin-coated cyan pigment dispersion A was conducted in the same manner as the preparation of resin-coated carbon black dispersion A, except that the composition used in the preparation of the resin-coated carbon black dispersion A was changed to the following composition. As a result, a resin-coated cyan pigment dispersion A having a cyan pigment concentration of 15% by mass was obtained.

<Composition of Resin-Coated Cyan Pigment Dispersion A>

| | |
|---|---|
| • PB 15:3 pigment powder (PHTHALOCYANINE BLUE A220 (tradename) manufactured by Dainichiseika Color & Chemicals Mfg. Co., Ltd.): | 10.0 parts |
| • Water-insoluble polymer 1 described above (water-insoluble resin) | 4.0 parts |
| • Methyl ethyl ketone (organic solvent) | 30.5 parts |
| • 1 mol/L NaOH aqueous solution (neutralizer) | 5.6 parts |
| • Ion exchanged water | 98.7 parts |

(Preparation of Cyan Pigment Dispersion B)

Preparation of a cyan pigment dispersion B was conducted in the same manner as the preparation of the carbon black dispersion B, except that the carbon black in the preparation of the carbon black dispersion B was changed to PB 15:3 pigment powder (PHTHALOCYANINE BLUE A220 (tradename) manufactured by Dainichiseika Color & Chemicals Mfg. Co., Ltd.). As a result, a cyan pigment dispersion B having a cyan pigment content of 15% by mass was obtained.

(Preparation of Resin-Coated Magenta Pigment Dispersion A)

Preparation of a resin-coated magenta pigment dispersion A was conducted in the same manner as the preparation of the resin-coated cyan pigment dispersion A, except that the composition used in the preparation of the resin-coated cyan pigment dispersion A was changed to the following composition. As a result, a resin-coated magenta pigment dispersion A having a magenta pigment concentration of 15% by mass was obtained.

<Composition of Resin-Coated Magenta Pigment Dispersion A>

| | |
|---|---|
| • PR 122 pigment powder (CROMOPHTAL JET MAGENTA DMQ (tradename) manufactured by BASF Japan Ltd.): | 10.0 parts |
| • Water-insoluble polymer 1 described above (water-insoluble resin) | 4.0 parts |

(continued)

| | |
|---|---|
| • Methyl ethyl ketone (organic solvent) | 30.5 parts |
| • 1 mol/L NaOH aqueous solution (neutralizer) | 5.6 parts |
| • Ion exchanged water | 98.7 parts |

(Preparation of Magenta Pigment Dispersion B)

Preparation of a magenta pigment dispersion B was conducted in the same manner as the preparation of the cyan pigment dispersion B, except that the PB 15:3 pigment powder used in the preparation of the cyan pigment dispersion B was changed to PR 122 pigment powder (trade name: CROMOPHTAL JET MAGENTA DMQ, manufactured by BASF Japan Ltd.) As a result, a magenta pigment dispersion B having a magenta pigment content of 15% by mass was obtained.

(Preparation of Polymer Dispersion C)

560.0 g of methyl ethyl ketone was placed in a 2L three-necked flask equipped with a stirrer, a thermometer, a reflux condenser tube, and a nitrogen gas inlet tube, and were heated to a temperature of 87°C. While maintaining the gas inside the reaction vessel in a refluxed state (the refluxing was continued until the reaction was completed), a mixed solution of 278.4 g of methyl methacrylate, 243.6 g of isobornyl methacrylate, 58.0 g of methacrylic acid, 108 g of methyl ethyl ketone, and 2.32 g of V-601 (tradename, manufactured by Wako Pure Chemical Industries, Ltd.) was added dropwise into this reaction vessel at a constant speed such that the dropwise addition is completed in two hours. After the addition was completed, the resulting mixture was stirred for one hour. Thereafter, a process (1) of adding a solution of 1.16 g of "V-601"in 6.4 g of methyl ethyl ketone into the reaction vessel, and stirring the resultant mixture for two hours, was carried out. Subsequently, this process (1) was repeated four times. Then, a solution of 1.16 g of "V-601" in 6.4 g of methyl ethyl ketone was further added thereto, and stirring was continued for 3 hours. After completion of the polymerization reaction, the temperature of the resulting solution was lowered to 65°C, and then 163.0 g of isopropanol was added thereto, and the resulting mixture was left to stand and cool. The obtained copolymer had a weight average molecular weight (Mw) of 63,000 and an acid value of 65.1 (mgKOH/g).

Next, 317.3 g of the polymerization solution thus obtained (having a solids concentration of 41.0% by mass) was weighed out, and 46.4 g of isopropanol, 1.65 g (corresponding to 0.3% (in terms of maleic acid amount) relative to the copolymer) of a 20% aqueous solution of maleic anhydride (water-soluble acidic compound), and 40.77 g of a 2 mol/L aqueous solution of NaOH were added thereto. Then, the temperature inside the reaction vessel was elevated to 70°C. Subsequently, 380 g of distilled water was added thereto dropwise at a rate of 10 mL/min, thereby forming a water dispersion (dispersion process). Thereafter, the temperature inside the reaction vessel was maintained at 70°C under reduced pressure for 1.5 hours to distill off isopropanol, methyl ethyl ketone, and distilled water in a total distilled amount of 287.0 g (solvent removing process). Then, 0.278 g (440 ppm (in terms of benzisothiazolin-3-one amount) relative to the solids of the polymer) of PROXEL GXL (S) (tradename, manufactured by Arch Chemicals Japan, Inc.) was further added. Thereafter, filtration was performed using a filter having a pore size of 1 μm, and the filtrate was collected to obtain an aqueous dispersion (polymer dispersion C) of self-dispersing polymer particles having a solids concentration of 26.5% by mass. When the polymer particles were diluted with ion exchanged water to a concentration of 25.0% by mass, and the volume average particle diameter of the polymer particles was measured, the volume average particle diameter of the polymer particles was found to be 3.0 nm.

<Measurement of Volume-Average Particle Diameter>

The polymer dispersion C thus obtained was appropriately diluted to have a concentration suitable for measurement (such that the loading index was within the range of from 0.1 to 10). The volume average particle diameter of each of the water dispersions was measured using an ultrafine particle size distribution analyzer NANOTRAC UPA-EX150 (tradename, manufactured by Nikkiso Co., Ltd.) by a dynamic light scattering method, under the same measurement conditions. Namely, all measurements were conducted under the following conditions:

particle transmittance: transmission;
particle refractive index: 1.51;
particle shape: non-spherical;
density: 1.2 g/cm$^3$;
solvent: water; and
cell temperature: from 18°C to 25°C.

(Preparation of Polymer Dispersion D)

Preparation of a polymer dispersion D was conducted in the same manner as the preparation of the polymer dispersion C, except that the monomers and the mixing ratio thereof were changed, and that the amount of the base for neutralization was changed to provide a neutralization degree of 80%. Specifically, monomers and mixing ratios were changed from 278.4 g of methyl methacrylate, 243.6 g of isobornyl methacrylate, and 58.0 g of methacrylic acid used in the preparation of the polymer dispersion C, to monomers and mixing ratios that provide the structural units at the mass ratios indicated in the following structural formula.

Polymer Dispersion D

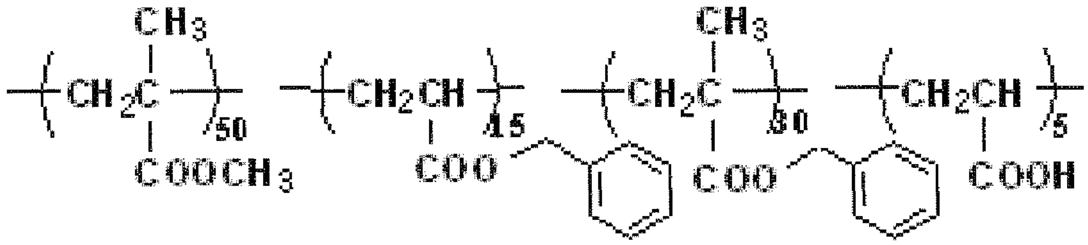

(Preparation of inks)

Using the thus-obtained dispersions, inks having the compositions shown in Table 1 below were prepared, followed by filtration using a 0.2 μm membrane filter, to prepare inks A to S.

In Table 1, the addition amount of each component is expressed in terms of a ratio thereof [% by mass] relative to the total amount of the ink, and the components indicated by the * signs were added such that the addition amounts thereof in terms of solids amounts were the amounts shown in Table 1 below.

TABLE 1

| | INK A | INK B | INK C | INK D | INK E | INK F | INK G |
|---|---|---|---|---|---|---|---|
| Carbon Black Dispersion A (Dispersed with Water-Insoluble Polymer) | 3.5* | 2.5* | 2.5* | | 2.5* | | 2.5* |
| CAB-O-JET300 (Self-dispersing carbon Black) | | | | 2.5* | | | |
| Carbon Black Dispersion B (Dispersed with Water-Soluble Polymer) | | | | | | 2.5* | |
| Cyan Pigment Dispersion A (Dispersed with Water-Insoluble Polymer) | 0.5* | 0.5* | 0.5* | 0.5* | | 0.5* | |
| Cyan Pigment Dispersion B (Dispersed with Water-Soluble Polymer) | | | | | | | 0.5* |
| Magenta Pigment Dispersion A (Dispersed with Water-Insoluble Polymer) | | | | | | | |
| Magenta Pigment Dispersion B (Dispersed with Water-Soluble Polymer) | | | | | | | |
| SANNIX GP250 (NEWPOL GP250, manufactured by Sanyo Chemical Industries, Ltd.) | 10 | 10 | 10 | 10 | 10 | 10 | 10 |
| Triethylene Glycol Monomethyl Ether | 3 | 3 | 3 | 3 | 3 | 3 | 3 |
| Dipropylene Glycol | 5 | 5 | 5 | 5 | 5 | 5 | 5 |
| OLFINE E1010 | 1 | 1 | 1 | 1 | 1 | 1 | 1 |
| JONCRYL 586 (Water Soluble) | | | | | | | |
| Polymer Dispersion C (Water-Insoluble Polymer) | 8* | 8* | | 8* | 8* | 8* | 8* |
| Polymer Dispersion D (Water-Insoluble Polymer) | | | 8* | | | | |
| Carnauba Wax | | | | | | | |
| Paraffin Wax | | | | | | | |
| PROXEL XL2 | 0.3 | 0.3 | 0.3 | 0.3 | 0.3 | 0.3 | 0.3 |
| Ion Exchanged Water | Balance | Balance | Balance | Balance | Balance | Balance | Balance |
| Note | Invention | Invention | Invention | Invention | Comparative Example | Comparative Example | Comparative Example |

TABLE 1 -continued

| | INK H | INK I | INK J | INK K | INK L | INK M | INK N |
|---|---|---|---|---|---|---|---|
| Carbon Black Dispersion A (Dispersed with Water-Insoluble Polymer) | 2.5* | 1.75* | 1.75* | 1.75* | 2.5* | 2.5* | 1.75* |
| CAB-O-JET300 (Self-dispersing carbon Black) | | | | | | | |
| Carbon Black Dispersion B (Dispersed with Water-Soluble Polymer) | | | | | | | |
| Cyan Pigment Dispersion A (Dispersed with Water-Insoluble Polymer) | 0.5* | 0.5* | 0.5* | 0.5* | 0.5* | 0.5* | 0.5* |
| Cyan Pigment Dispersion B (Dispersed with Water-Soluble Polymer) | | | | | | | |
| Magenta Pigment Dispersion A (Dispersed with Water-Insoluble Polymer) | | 0.6* | | 0.6* | | | 0.6* |
| Magenta Pigment Dispersion B (Dispersed with Water-Soluble Polymer) | | | 0.6* | | | | |
| SANNIX GP250 (NEWPOL GP250, manufactured by Sanyo Chemical Industries, Ltd.) | 10 | 10 | 10 | 10 | 10 | 10 | 10 |
| Triethylene Glycol Monomethyl Ether | 3 | 3 | 3 | 3 | 3 | 3 | 3 |
| Dipropylene Glycol | 5 | 5 | 5 | 5 | 5 | 5 | 5 |
| OLFINE E1010 | 1 | 1 | 1 | 1 | 1 | 1 | 1 |
| JONCRYL 586 (Water Soluble) | 8* | | | 8* | | | |
| Polymer Dispersion C (Water-Insoluble Polymer) | | 8* | 8* | | 8* | 8* | 8* |
| Polymer Dispersion D (Water-Insoluble Polymer) | | | | | | | |
| Carnauba Wax | | | | | 2 | | |
| Paraffin Wax | | | | | | 2 | 2 |
| PROXEL XL2 | 0.3 | 0.3 | 0.3 | 0.3 | 0.3 | 0.3 | 0.3 |
| Ion Exchanged Water | Balance | Balance | Balance | Balance | Balance | Balance | Balance |
| Note | Comparative Example | Invention | Invention | Comparative Example | Invention | Invention | Invention |

TABLE 1 -continued

| | INK P | INK Q | INK R | INK S |
|---|---|---|---|---|
| Carbon Black Dispersion A (Dispersed with Water-Insoluble Polymer) | 4.5* | 5.2* | 2.5* | 2.5* |
| CAB-O-JET300 (Self-dispersing carbon Black) | | | | |
| Carbon Black Dispersion B (Dispersed with Water-Soluble Polymer) | | | | |
| Cyan Pigment Dispersion A (Dispersed with Water-Insoluble Polymer) | 0.5* | 0.5* | 1* | 1.4* |
| Cyan Pigment Dispersion B (Dispersed with Water-Soluble Polymer) | | | | |
| Magenta Pigment Dispersion A (Dispersed with Water-Insoluble Polymer) | | | 0.6* | |
| Magenta Pigment Dispersion B (Dispersed with Water-Soluble Polymer) | | | | |
| SANNIX GP250 (NEWPOL GP250, manufactured by Sanyo Chemical Industries, Ltd.) | 10 | 10 | 10 | 10 |
| Triethylene Glycol Monomethyl Ether | 3 | 3 | 3 | 3 |
| Dipropylene Glycol | 5 | 5 | 5 | 5 |
| OLFINE E1010 | 1 | 1 | 1 | 1 |
| JONCRYL 586 (Water Soluble) | | | | |
| Polymer Dispersion C (Water-Insoluble Polymer) | 9* | 7* | 8* | 8* |
| Polymer Dispersion D (Water-Insoluble Polymer) | | | | |
| Carnauba Wax | 2 | 2 | 2 | |
| Paraffin Wax | | | | 3 |
| PROXEL XL2 | 0.3 | 0.3 | 0.3 | 0.3 |
| Ion Exchanged Water | Balance | Balance | Balance | Balance |
| Note | Invention | Comparative Example | Invention | Comparative Example |

Details of the components in Table 1 above are as follows.

- CAB-O-JET 300: tradename, self-dispersing carbon black manufactured by Cabot Corporation;
- OLFINE E1010: tradename, nonionic surfactant manufactured by Nissin Chemical Industry Co., Ltd.;

- JONCRYL 586: tradename, water-soluble polymer manufactured by Johnson Polymer, LLC;
- Carnauba wax: SELOSOL 524 (tradename) manufactured by CHUKYO YUSHI CO, LTD.
- Paraffin wax: SELOSOL 428 (tradename) manufactured by CHUKYO YUSHI CO, LTD.
- PROPEL XL2: tradename, 1,2-benzisothiazolin-3-one manufactured by AVECIA Inc.;

(Preparation of Treatment Liquid 1)

The components of the following formulation were mixed to prepare a treatment liquid 1. The pH (25°C) of the treatment liquid 1 was measured using a pH meter WM-50EG (tradename) manufactured by DKK-TOA CORPORATION, and was found to be 1.02.

<Formulation>

| | |
|---|---|
| • Orthophosphoric acid (85% by mass aqueous solution) | 5.0% by mass |
| • Malonic acid | 7.0% by mass |
| • Malic acid | 7.0% by mass |
| • Diethylene glycol | 4% by mass |
| • Triethylene glycol monomethyl ether | 4% by mass |
| • Ion-exchange water | Balance |

<A. Image Recording and Evaluation>

- 1. Image Recording -

A printer for evaluation equipped with a print head GELJET GX5000 (tradename, manufactured by Ricoh Co., Ltd., Full-line head) was prepared, and storage tanks connected to the print head were refilled with the inks A to S, respectively. "TOKUBISHI ART DOUBLE-SIDED N" (tradename, manufactured by Mitsubishi Paper Mills, Ltd.: water absorption coefficient Ka = 0.21 $mL/m^2 \cdot ms^{1/2}$) was prepared as a recording medium.

A sheet of "TOKUBISHI ART DOUBLE-SIDED N" was fixed on a stage that was movable in a predetermined linear direction, which corresponds to a sub scanning direction at the time of recording, at a velocity of 500 mm/s. The treatment liquid 1 obtained above was coated on the recording medium using a wire bar coater to give a thickness of about 10 μm (equivalent to an amount of the cationic polymer of 0.4 $g/m^2$ of), and dried at 50°C for 2 seconds immediately after coating. After that, a solid image was printed as follows. The print head GELJET GX5000 was fixed and arranged such that the direction of the line head where nozzles were arranged was inclined at an angle of 75.7 degree with respect to the direction (main scanning direction) perpendicular to the moving direction of the stage (sub scanning direction) on the same plane. While moving the recording medium at a constant speed along the sub scanning direction, the ink was ejected by a line system under the ejection conditions of an ink droplet amount of 2.8 pL, an ejection frequency of 24 kHz, resolution of 1200 dpi × 1200 dpi, and a stage moving velocity of 50 mm/s. Immediately after printing, the printed recording medium was dried at 60°C for 3 seconds, and further passed between a pair of fixing rollers heated at 60°C so that fixing processing was carried out at a nip pressure of 0.25 MPa and a nip width of 4 mm. In this manner, an image sample was obtained.

Subsequently, the stage moving velocity was changed from 50 mm/s to 100 mm/s or 250 mm/s, and the ink was ejected under the conditions such that the ejection frequency was changed to give the same ink droplet spotting amount as the above, whereby the respective image samples were obtained.

The fixing rollers include a heating roll and an opposed roller that is pressed against the heating roll. The heating roll is composed of a cylindrical metallic core made of SUS (stainless steel) including a halogen lamp in the interior, and a silicone resin that covers the surface of the cylindrical metallic core.

- 2. Evaluation -

(Foaming Property and Antifoaming Property)

The following evaluation was carried out on each of the inks obtained in Table 1 above. 10 g of ink was placed in a cylindrical glass container having a diameter of 2 cm and a height of 10 cm, and then the container was sealed and was shaken 50 times. The height H [cm] from the interface between the foam and the liquid to the top of the foam was

measured to evaluate the foaming property. The time [min] for the height (H) from the interface between the foam and the liquid to the top of the foam to settle to 0.5H was measured to evaluate the antifoaming property. The evaluation was carried out at a temperature of from 23°C to 24°C. The evaluation results are shown in Table 2 below.

(Continuous Ejection Property)

The Image was continuously printed on 2,000 sheets under an environment of 23°C and 20%RH, using the above-described printer for evaluation. The outputted images on the tenth sheet and the 2,000th sheet were visually observed, and compared with each other. Evaluation of continuous ejection property was performed according to the following criteria. The evaluation results are shown in Table 2 below.

<Evaluation Criteria>

3: Occurrence of print deviation or streaks (unprinted areas caused by failure of ejection) is observed on neither of the images on the tenth sheet and the 2,000th sheet.
2: Occurrence of print deviation is observed on the image on the 2,000th sheet.
1: Occurrence of print deviation and streaks is observed on the image on the 2,000th sheet.

(Recoverability After Being Left to Stand)

The image was continuously printed on 10 sheets under an environment of 23°C and 20%RH, using the above-described printer for evaluation. Then, the printing operation was paused for 30 minutes. Thereafter, printing of the image was restarted, and was continuously carried out on 10 sheets. The images on the 10 sheets printed after the restart were visually observed. Evaluation of ejection recoverability after being left to stand was performed according to the following criteria. In this evaluation, fixing processing was not carried out. The evaluation results are shown in Table 2 below.

<Evaluation Criteria>

3: Unprinted areas due to ejection failure of nozzles are found on the first sheet after the restart, but are alleviated on the tenth sheet compared to the first sheet. The ratio of the occurrence of streaks in the image (unprinted areas due to ejection failure) is 2% by number or less, relative to the total number of nozzles.
2: Unprinted areas due to ejection failure of nozzles are found on the first sheet after the restart, but are alleviated on the tenth sheet compared to the first sheet. The ratio of the occurrence of streaks in the image is from 3% by number to less than 10% by number relative to the total number of nozzles.
1: Unprinted areas due to ejection failure of nozzles are found on the first sheet after the restart, and are hardly alleviated on the tenth sheet compared to the first sheet. Streaks in the image are observed at a ratio of 10% by number or more relative to the total number of nozzles.

(Rubbing resistance Test 1)

Using the printer for evaluation, the image was printed in the same manner as described above, except that the recording medium was changed to a gloss coat paper OK TOPCOAT PLUS (tradename, manufactured by Oji Paper Co., Ltd.). Immediately after the printing, the printed sheet was rubbed with an unprinted sheet of the recording medium under a load of 300 g, and scratches on the image were visually observed. The results were evaluated according to the following criteria. This test simulates printed sheets of the recording medium rubbing against each other when the printed sheets are in the stacked state immediately after continuous printing, and evaluates the resistance against the rubbing. The evaluation results are shown in Table 2 below.

<Evaluation Criteria>

4: No scratch occurs in the image even after the same portion is rubbed three times.

3: Image scratches occur after the image is rubbed three times.
2: Image scratches occur after the image is rubbed twice.
1: Image scratches occur after the image is rubbed once.

(Rubbing resistance Test 2)

Using the printer for evaluation, the image was printed in the same manner as described above, except that the recording medium was changed to a matte coat paper (N) SILVER DIA (tradename, manufactured by Nippon Paper Industries Co., Ltd.). Immediately after the printing, the printed sheet was rubbed with an unprinted sheet of the recording medium ((N) SILVER DIA) under a load of 300 g, and scratches on the image were visually observed. The results were judged according to the following criteria. This test stimulates images on printed sheets of the recording medium rubbing against each other when the printed sheets are in the stacked state immediately after continuous printing, and evaluates the resistance against the rubbing. The evaluation results are shown in Table 2 below.

<Evaluation Criteria>

4: No scratch occurs in the image even after the same portion is rubbed three times.
3: Image scratches occur after the image is rubbed three times.
2: Image scratches occur after the image is rubbed twice.
1: Image scratches occur after the image is rubbed once.

(Rubbing resistance Test 3)

Evaluation of the rubbing resistance of a secondary color image was evaluated in the same manner as the evaluation carried out in the rubbing resistance test 2, except that the spotting of the ink shown in Table 1 was carried out on a solid image of an ink O, which has the composition below, using the above-described printer for evaluation, and the above-described fixing processing was conducted thereafter. This test stimulates secondary color images on printed sheets of the recording medium rubbing against each other when the printed sheets are in the stacked state immediately after continuous printing, and evaluates the resistance against the rubbing. The evaluation results are shown in Table 2 below.

<Composition of Ink O>

| | |
|---|---|
| • Magenta pigment dispersion A described above | 5% by mass (in terms of the solids amount of magenta pigment) |
| • SANNIX GP-250 (tradename: NEWPOL GP-250, manufactured by Sanyo Chemical Industries, Ltd.): | 10% by mass |
| • Triethylene glycol monomethyl ether | 3% by mass |
| • Dipropylene glycol | 5% by mass |
| • OLFINE E1010(tradename, nonionic surfactant manufactured by Nissin Chemical Industry Co., Ltd.) | 1.0% by mass |
| • PROXEL XL2 (tradename, 1,2-benzisothiazolin-3-one manufactured by AVECIA Inc.) | 0.3% by mass |
| • Ion exchanged water | Balance |

(Image Transfer 1)

Using the printer for evaluation, the image was printed in the same manner as described above, except that the recording medium was changed to a matte coat paper (N) SILVER DIA (tradename, manufactured by Nippon Paper Industries Co., Ltd.). Immediately after the printing, the printed sheet was rubbed with an unprinted sheet of the recording medium ((N) SILVER DIA) under a load of 350 g. The presence or absence of stains on the unprinted sheet of the recording medium used for rubbing was visually observed. The results were evaluated according to the following criteria.

This test stimulates color transfer that occurs due to printed sheets of the recording medium rubbing against each other when the printed sheets are in the stacked state immediately after continuous printing. The evaluation results are shown in Table 2 below.

<Evaluation Criteria>

5: Color stains are hardly observed even after the same portion is rubbed five times.
4: Color stains become noticeable after the image is rubbed four times.
3: Color stains become noticeable after the image is rubbed three times.
2: Color stain become noticeable after the image is rubbed twice.
1: Color stain become noticeable after the image is rubbed once.

(Image Transfer 2)

The processes of the rubbing resistance test 3 were carried out except for changing the load to a load of 350 g, and the presence or absence of stains on the unprinted sheet of the recording medium used for rubbing was visually observed. The results were evaluated according to the following criteria. This test stimulates transfer of a secondary color that occurs due to printed sheets of the recording medium rubbing against each other when the printed sheets are in the stacked state immediately after continuous printing. The evaluation results are shown in Table 2 below.

<Evaluation Criteria>

5: Color stains are hardly observed even after the same portion is rubbed five times.
4: Color stains become noticeable after the image is rubbed four times.
3: Color stains become noticeable after the image is rubbed three times.
2: Color stain become noticeable after the image is rubbed twice.
1: Color stain become noticeable after the image is rubbed once.

TABLE 2

| Ink | Foaming Property (cm) | Antifoaming Property (min) | Continuous Ejection Property | Recoverability After Being Left to Stand | Rubbing Resistance 1 | Rubbing Resistance 2 | Rubbing Resistance 3 | Image Transfer 1 | Image Transfer 2 | Note |
|---|---|---|---|---|---|---|---|---|---|---|
| A | 5 | 3 | 3 | 3 | 4 | 4 | 3 | 4 | 3 | Invention |
| B | 4 | 3 | 3 | 3 | 4 | 4 | 3 | 4 | 4 | Invention |
| C | 5 | 3 | 3 | 3 | 4 | 4 | 3 | 4 | 4 | Invention |
| D | 5 | 2 | 3 | 3 | 4 | 4 | 3 | 4 | 4 | Invention |
| E | 12 | 7 | 1 | 1 | 1 | 1 | 1 | 1 | 1 | Comparative Example |
| F | 8 | 6 | I | 1 | 3 | 2 | 1 | 2 | 1 | Comparative Example |
| G | 11 | 8 | 1 | 2 | 2 | 3 | 2 | 2 | 2 | Comparative Example |
| H | 9 | 8 | 1 | 1 | 3 | 3 | 2 | 2 | 1 | Comparative Example |
| I | 5 | 3 | 3 | 3 | 4 | 4 | 3 | 5 | 4 | Invention |
| J | 7 | 4 | 3 | 3 | 4 | 3 | 3 | 3 | 3 | Invention |
| K | 11 | 7 | 1 | 1 | 4 | 3 | 3 | 2 | 1 | Comparative Example |
| L | 4 | 3 | 3 | 3 | 4 | 4 | 3 | 5 | 4 | Invention |
| M | 5 | 2 | 3 | 3 | 4 | 4 | 3 | 5 | 4 | Invention |
| N | 4 | 2 | 3 | 3 | 4 | 4 | 4 | 5 | 5 | Invention |
| P | 5 | 3 | 3 | 3 | 3 | 3 | 3 | 3 | 3 | Invention |
| Q | 6 | 4 | 1 | I | 1 | 1 | 1 | 1 | 1 | Comparative Example |
| R | 6 | 4 | 3 | 3 | 3 | 3 | 3 | 3 | 3 | Invention |
| S | 6 | 5 | 2 | 2 | 3 | 3 | 3 | 2 | 2 | Comparative Example |

As is evident from Table 2 above, in Examples according to the present invention, a less-yellowish black image that had high black density were obtained, the formed black images exhibited excellent rubbing resistance, and the occurrence of color transfer of the image area was suppressed. On the contrary, the ink properties of the inks of Comparative Examples were not good, and the inks of Comparative Examples had a problem in ejection properties, and further, the formed images were inferior in terms of rubbing resistance and color transfer.

<B. Image Recording and Evaluation>

(Preparation of Treatment Liquids 2, 3, 4 and 5)

(1) Preparation of dispersion liquid of cationic resin emulsion

First, 100ml of distilled water and 0.1g of potassium sulfate were put into a flask equipped with a stirrer, a thermometer, a reflux condenser and a dropping funnel, and heated to 75°C while stirring and replacing the air by nitrogen gas. Then, 250ml of distilled water, 2.0g of a nonionic surfactant OLFINE E1010 (tradename, manufactured by Nisshin Chemical Industry Co., Ltd.), 100g of methacryloxyethyltrimethylammonium chloride, 30g of 2-hydroxyethyl acrylate, 100g of acrylonitrile, and 70g of butylacrylate were added thereto, and mixed under stirring to form a mixture. The mixture was gradually added dropwise into the flask using a dropping funnel over 3 hours. The resultant clouded liquid was neutralized with potassium hydroxide, and then filtered using a filter, and then the solids concentration of the resin emulsion was adjusted to 30 % by mass with distilled water.

(2) Preparation of Treatment Liquid

Preparation of treatment liquids 2, 3, 4 and 5 were conducted in the same manner as the preparation of the treatment liquid 1, except that the composition was changed as shown in the following Table 3.

1. Image Recording

A solid image was printed, using the printer for evaluation, to form a sample image in the same manner as described above, except that the recording medium was replaced with a gloss coat paper OK TOPCOAT PLUS (tradename, manufactured by Oji Paper Co., Ltd.) and the treatment liquid 1 was replaced with the treatment liquids 2, 3, 4, and 5, respectively. Here, the ink B prepared above was used for printing the sample image.

2. Evaluation

(Graininess)

The graininess of the sample image obtained was evaluated in accordance with the following evaluation criteria. The evaluation results are shown in Table 3 below.

<Evaluation criteria>

3 : The image is uniform without graininess
2 : The image is uniform although graininess is slightly observed
1 : The graininess of the image is clearly observed

TABLE 3

| Composition | Treatment Liquid 1 | Treatment Liquid 2 | Treatment Liquid 3 | Treatment Liquid 4 | Treatment Liquid 5 |
|---|---|---|---|---|---|
| Orthophosphoric acid (85% aqueous solution) | 5% | - | 3% | - | - |
| Malonic acid | 7% | 8% | 5% | - | - |
| Malic acid | 7% | 8% | - | - | - |

(continued)

| Composition | Treatment Liquid 1 | Treatment Liquid 2 | Treatment Liquid 3 | Treatment Liquid 4 | Treatment Liquid 5 |
|---|---|---|---|---|---|
| Nitric acid (60% aqueous solution) | - | - | - | - | 23% |
| Magnesium nitrate hexahydrate | - | - | - | 25% | - |
| Cationic resin emulsion (*in terms of solids content) | - | - | 8% | 8% | - |
| Diethylene glycol | 4% | 4% | 4% | 4% | 4% |
| Triethylene glycol monomethyl ether | 4% | 4% | 4% | 4% | 4% |
| Ion-exchange water | Balance | Balance | Balance | Balance | Balance |
| Evaluation of graininess | 3 | 3 | 3 | 2 | 1 |

In the sample image which was obtained using the treatment liquid 2, slight unevenness of glossiness was visually observed. By contrast, the sample images obtained using the treatment liquids 1 and 3 were excellent images free of unevenness of glossiness.

All publications, patent applications, and technical standards mentioned in this specification are herein incorporated by reference to the same extent as if each individual publication, patent application, or technical standard was specifically and individually indicated to be incorporated by reference.

## Claims

1. An ink composition comprising:

   first pigment particles selected from self-dispersing carbon black, carbon black of which at least a part is covered with a water-insoluble resin and a mixture thereof, the amount of the first pigment particles being from 1% by mass to 5% by mass relative to the total mass of the ink composition;
   second pigment particles formed of a cyan pigment of which at least a part is covered with a water-insoluble resin, the amount of the second pigment particles being from 1% by mass to 50% by mass relative to the mass of the first pigment particles;
   water-insoluble resin particles;
   water; and
   a wax.

2. An ink composition according to Claim 1, further comprising third pigment particles formed of a magenta pigment of which at least a part is covered with a water-insoluble resin, the amount of the third pigment particles being from 1% by mass to 70% by mass relative to the mass of the first pigment particles.

3. An ink composition according to Claim 1 or Claim 2, wherein the cyan pigment comprises a phthalocyanine pigment.

4. An ink composition according to any preceding claim, wherein the water-insoluble resin particles comprise particles of a resin selected from a styrene-acrylic resin, a urethane resin and a mixture thereof.

5. An ink composition according to any preceding claim, wherein the water-insoluble resin particles comprise self-dispersing resin particles.

6. An ink composition according to any preceding claim, wherein the water-insoluble resin particles are prepared as a dispersion in which the continuous phase is water by synthesis of the resin in an organic solvent, neutralization of some or all of the anionic groups in the resin, and dispersion of the resin in water.

7. An ink composition according to any preceding claim, wherein the amount of the water-insoluble resin particles is

from 0.5% by mass to 10% by mass relative to the total mass of the ink composition.

**8.** An ink composition according to any preceding claim, further comprising third pigment particles formed of a magenta pigment of which at least a part is covered with a water-insoluble resin, wherein at least one of the carbon black, the cyan pigment and the magenta pigment is covered with water-insoluble resin by a phase-inversion emulsification method.

**9.** An ink composition according to any preceding claim, wherein the wax comprises a paraffin wax, a derivative of a paraffin wax, carnauba wax or any combination thereof.

**10.** An ink set comprising:

an ink composition according to any preceding claim; and
a treatment liquid that contains an aggregation component capable of causing formation of an aggregate when brought into contact with the ink composition.

**11.** An ink set according to Claim 10, wherein the aggregation component comprises an acid.

**12.** An ink set according to Claim 11, wherein the aggregation component comprises at least one of orthophosphoric acid, phosphorous acid, pyrophosphoric acid and tartaric acid.

**13.** An ink set according to Claim 12, wherein the aggregation component comprises orthophosphoric acid.

**14.** An image-forming method comprising the steps of:

applying an ink composition according to any of Claims 1-9 onto a recording medium by an inkjet method; and
applying onto the recording medium a treatment liquid which causes the formation of an aggregate when brought into contact with the ink composition.

**15.** An image-forming method according to Claim 14, wherein the ink composition is applied by a piezo inkjet method.

**16.** An image-forming method according to Claim 14 or Claim 15, further comprising the step of heat-fixing the image formed by the ink application step and the treatment liquid application step.

**17.** An image-forming method according to any one of Claims 14-16, wherein the ink application step is carried out after the treatment liquid application step.

**Patentansprüche**

**1.** Tintenzusammensetzung, umfassend:

erste Pigmentpartikel, die aus selbst-dispergierendem Kohlenschwarz, mindestens teilweise mit einem wasserunlöslichen Harz überzogenem Kohlenschwarz, und einer Mischung daraus, ausgewählt sind, wobei der Gehalt der ersten Pigmentpartikel 1 Gew-% bis 5 Gew-% bezogen auf das Gesamtgewicht der Tintenzusammensetzung beträgt;
zweite Pigmentpartikel, die aus einem mindestens teilweise mit einem wasserunlöslichen Harz überzogenen Cyan-Pigment gebildet sind, wobei der Gehalt der zweiten Pigmentpartikel 1 Gew-% bis 50 Gew-% bezogen auf das Gewicht der ersten Pigmentpartikel beträgt;
wasserunlösliche Harzpartikel;
Wasser; und
ein Wachs.

**2.** Tintenzusammensetzung gemäß Anspruch 1, welche weiterhin dritte Pigmentpartikel, die aus einem mindestens teilweise mit einem wasserunlöslichen Harz überzogenen Magenta-Pigment gebildet sind, umfasst, wobei der Gehalt der dritten Pigmentpartikel 1 Gew-% bis 70 Gew-% bezogen auf das Gewicht der ersten Pigmentpartikel beträgt.

**3.** Tintenzusammensetzung gemäß Anspruch 1 oder Anspruch 2, wobei das Cyan-Pigment ein Phthalocyanin-Pigment

umfasst.

4. Tintenzusammensetzung gemäß einem vorhergehenden Anspruch, wobei die wasserunlöslichen Harzpartikel Partikel eines Harzes, ausgewählt aus einem Styrol-Acryl-Harz, einem Urethan-Harz und einer Mischung daraus umfassen.

5. Tintenzusammensetzung gemäß einem vorhergehenden Anspruch, wobei die wasserunlöslichen Harzpartikel selbst-dispergierende Harzpartikel umfassen.

6. Tintenzusammensetzung gemäß einem vorhergehenden Anspruch, wobei die wasserunlöslichen Harzpartikel als Dispersion mit Wasser als kontinuierlicher Phase mittels Synthese des Harzes in einem organischen Lösungsmittel, Neutralisation einiger oder aller anionischen Gruppen innerhalb des Harzes, und Dispergieren des Harzes in Wasser, bereitgestellt werden.

7. Tintenzusammensetzung gemäß einem vorhergehenden Anspruch, wobei der Gehalt der wasserunlöslichen Harzpartikel 0,5 Gew-% bis 10 Gew-% bezogen auf das Gesamtgewicht der Tintenzusammensetzung beträgt.

8. Tintenzusammensetzung gemäß einem vorhergehenden Anspruch, welche weiterhin dritte Pigmentpartikel, die aus einem mindestens teilweise mit einem wasserunlöslichen Harz überzogenen Magenta-Pigment gebildet sind, umfasst, wobei mindestens eines aus dem Kohlenschwarz, dem Cyan-Pigment und dem Magenta-Pigment mittels phaseninvertierter Emulgierung mit wasserunlöslichem Harz überzogen ist.

9. Tintenzusammensetzung gemäß einem vorhergehenden Anspruch, wobei das Wachs ein Paraffinwachs, ein Derivat eines Paraffinwachses, Carnaubawachs oder eine beliebige Kombination davon umfasst

10. Tintensatz umfassend:

    eine Tintenzusammensetzung gemäß einem vorhergehenden Anspruch; und
    eine Behandlungsflüssigkeit, die eine Aggregationskomponente, welche beim Kontakt mit der Tintenzusammensetzung Aggregatbildung auslösen kann, enthält.

11. Tintensatz gemäß Anspruch 10, wobei die Aggregationskomponente eine Säure umfasst.

12. Tintensatz gemäß Anspruch 11, wobei die Aggregationskomponente mindestens eines, aus Orthophosphorsäure, phosphoriger Säure, Pyrophosphorsäure und Weinsäure ausgewählt, umfasst.

13. Tintensatz gemäß Anspruch 12, wobei die Aggregationskomponente Orthophosphorsäure umfasst.

14. Bild-bildendes Verfahren, das die Schritte:

    Auftragen einer Tintenzusammensetzung gemäß einem der Ansprüche 1-9 auf ein Speichermedium mittels eines Tintenstrahl-Verfahrens; und
    Auftragen einer Behandlungsflüssigkeit, welche beim Kontakt mit der Tintenzusammensetzung Aggregatbildung verursacht, auf das Speichermedium,

    umfasst.

15. Bild-bildendes Verfahren gemäß Anspruch 14, wobei die Tintenzusammensetzung mittels eines Piezo-Tintenstrahlverfahrens aufgetragen wird.

16. Bild-bildendes Verfahren gemäß Anspruch 14 oder Anspruch 15, das weiterhin den Schritt des Hitzefixierens des Bildes, welches durch den Schritt des Auftragens der Tinte und den Schritt des Auftragens der Behandlungsflüssigkeit gebildet wird, umfasst.

17. Bild-bildendes Verfahren gemäß einem der Ansprüche 14-16, wobei der Schritt des Auftragens der Tinte nach dem Schritt des Auftragens der Behandlungsflüssigkeit ausgeführt wird.

## Revendications

**1.** Composition d'encre comprenant :

des premières particules de pigment sélectionnées parmi du noir de carbone à auto-dispersion, noir de carbone dont au moins une partie est revêtue d'une résine insoluble dans l'eau, et un mélange de ceux-ci, la quantité des premières particules de pigment étant de 1% en masse à 5 % en masse par rapport à la masse totale de la composition d'encre;
des deuxièmes particules de pigment formées d'un pigment cyan dont au moins une partie est revêtue d'une résine insoluble dans l'eau, la quantité des deuxièmes particules de pigment étant de 1 % en masse à 50 % en masse par rapport à la masse des premières particules de pigment;
des particules de résine insoluble dans l'eau ;
de l'eau ; et
une cire.

**2.** Composition d'encre selon la revendication 1, comprenant en outre des troisièmes particules de pigment formées d'un pigment magenta dont au moins une partie est revêtue d'une résine insoluble dans l'eau, la quantité des troisièmes particules de pigment étant de 1 % en masse à 70 % en masse par rapport à la masse des premières particules de pigment.

**3.** Composition d'encre selon la revendication 1 ou la revendication 2, dans laquelle le pigment cyan comprend un pigment de phtalocyanine.

**4.** Composition d'encre selon l'une quelconque des revendications précédentes, dans laquelle les particules de résine insoluble dans l'eau comprennent des particules d'une résine sélectionnée à partir d'une résine styrène-acrylique, une résine d'uréthane et un mélange de celles-ci.

**5.** Composition d'encre selon l'une quelconque des revendications précédentes, dans laquelle les particules de résine insoluble dans l'eau comprennent des particules de résine à auto-dispersion.

**6.** Composition d'encre selon l'une quelconque des revendications précédentes, dans laquelle les particules de résine insoluble dans l'eau sont préparées comme une dispersion dans laquelle la phase continue est de l'eau par synthèse de la résine dans un solvant organique, neutralisation de certains ou de la totalité des groupes anioniques dans la résine, et dispersion de la résine dans de l'eau.

**7.** Composition d'encre selon l'une quelconque des revendications précédentes, dans laquelle la quantité des particules de résine insoluble dans l'eau est de 0,5 % en masse à 10 % en masse par rapport à la masse totale de la composition d'encre.

**8.** Composition d'encre selon l'une quelconque des revendications précédentes, comprenant en outre des troisièmes particules de pigment formées d'un pigment magenta dont au moins une partie est revêtue d'une résine insoluble dans l'eau, dans laquelle au moins un du noir de carbone, du pigment cyan et du pigment magenta est revêtu de résine insoluble dans l'eau par un procédé d'émulsification à inversion de phase.

**9.** Composition d'encre selon l'une quelconque des revendications précédentes, dans laquelle la cire comprend une cire de paraffine, un dérivé d'une cire de paraffine, de la cire de carnauba ou une quelconque combinaison de celles-ci.

**10.** Jeu d'encres comprenant :

une composition d'encre selon l'une quelconque des revendications précédentes ; et
un liquide de traitement qui contient un composant d'agrégation susceptible de provoquer la formation d'un agrégat lorsque mis en contact avec la composition d'encre.

**11.** Jeu d'encres selon la revendication 10, dans lequel le composant d'agrégation comprend un acide.

**12.** Jeu d'encres selon la revendication 11, dans lequel le composant d'agrégation comprend au moins un parmi l'acide orthophosphorique, l'acide phosphoreux, l'acide pyrophosphorique et l'acide tartrique.

13. Jeu d'encres selon la revendication 12, dans lequel le composant d'agrégation comprend de l'acide orthophosphorique.

14. Procédé de formation d'image comprenant les étapes :

d'application d'une composition d'encre selon l'une quelconque des revendications 1 à 9 sur un support d'enregistrement par un procédé à jet d'encre ; et
d'application sur le support d'enregistrement d'un liquide de traitement qui provoque la formation d'un agrégat lorsque mis en contact avec la composition d'encre.

15. Procédé de formation d'image selon la revendication 14, dans lequel la composition d'encre est appliquée par un procédé à jet d'encre piézoélectrique.

16. Procédé formant d'image selon la revendication 14 ou la revendication 15, comprenant en outre l'étape de fixation à la chaleur de l'image formée par l'étape d'application d'encre et l'étape d'application de liquide de traitement.

17. Procédé de formation d'image selon l'une quelconque des revendications 14 à 16, dans lequel l'étape d'application d'encre est effectuée après l'étape d'application de liquide de traitement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004285344 A
- JP 2009144007 A
- JP 8003498 A
- US 446141 A
- US 08446142 B
- US 08528895 B
- US 08750017 B
- WO 9637547 A
- WO 08828785 A
- WO 08837493 A
- WO 09061871 A
- JP 9286939 A
- JP 9151342 A
- JP 10140065 A
- JP 11209672 A
- JP 11172180 A
- JP 10025440 A
- JP 11043636 A
- JP 2001181549 A
- JP 2002088294 A
- JP 2001247787 A
- JP 2006241457 A
- JP 2006141457 A
- JP 2006091780 A
- JP 2007100071 A
- JP 59157636 A
- JP 2003322926 A
- JP 2004325707 A
- JP 2004309806 A


### Non-patent literature cited in the description


- Handbook of Radical Polymerization. Wiley-Interscience, 2002
- **MATYJASZEWSKI.** *Journal of the American Chemical Society,* 1995, vol. 117, 5614
- Chapter 10 of Handbook of Radical Polymerization. Wiley-Interscience, 2002
- *Accounts of Chemical Research,* 2004, vol. 37 (5), 312-325
- **CHIEFARI.** *Macromolecules,* 1998, vol. 31 (16), 5559
- **WEBSTER.** *Journal of the American Chemical Society,* 1983, vol. 105 (17), 5706-5708
- **WEBSTER.** Encyclopedia of Polymer Science and Engineering. 1987, vol. 7, 580-588
- **TEIJI TSURUTA.** Kobunshi Gosei-Houhou (Polymer Synthesis Method). NIKKAN KOGYO SHINBUN LTD, 1971
- **TAKAYUKI OTSU ; MASAYOSHI KINOSHITA.** Kobunshi-Gosei no Jikkenho (Experimental Technique of Polymer Synthesis). Kagaku-dojin Publishing Company Inc, 1972, 124-154